# EUROPEAN PATENT APPLICATION

(11) **EP 3 034 031 A1**
(43) Date of publication of application: **22.06.2016**
(21) Application number: 15201079.9
(22) Date of filing: 18.12.2015
(51) Int. Cl.: A61C 7/28

(54) **SELF-LIGATING ORTHODONTIC BRACKET WITH ROTATABLE CLOSURE MEMBER**

(30) Priority: 19.12.2014 US 201462094548 P; 16.12.2015 US 201514971030
(71) Applicant: Ormco Corporation, Orange, CA 92867 (US)
(72) Inventor: ANDREIKO, Craig A, deceased (US); ANAYA, Manfredo, Woodland Hills, CA California 91367 (US); NAZECK, Benjamin Mark, San Dimas, CA California 91773 (US); RUDMAN, Robert T, Denver, CO Colorado 80246 (US)
(74) Representative: Findlay, Alice Rosemary

(57) **Abstract**

An orthodontic bracket (10) for coupling an archwire with a tooth includes a bracket body (12) and a rotatable member. The rotatable member (14) is rotatable between an opened position and a closed position. A retention member (28) secures the rotatable member (14) to the body (12) and a locking mechanism (19) that provides at least one positive stop in the rotation of the rotatable member (14) and that produces a discernible indication when the rotatable member (14) is in at least the closed position. In one closed position, the rotatable member (14) actively ligates the archwire and in the other closed position, the rotatable member (14) passively ligates the archwire. The locking mechanism (19) is separate from the retention member (28) and includes at least one pin (26) that slidably contacts the rotatable member (14). The pin (26) has a longitudinal axis and the retention member (28) has a longitudinal axis. The axis of the pin (26) is oriented perpendicular to the axis of the retention member (28).

## Description

The invention relates generally to orthodontic brackets and, more particularly, to self-ligating orthodontic brackets having rotatable closure members.

Orthodontic brackets represent a principal component of all corrective orthodontic treatments devoted to improving a patient's occlusion. In conventional orthodontic treatments, an orthodontist or an assistant affixes brackets to the patient's teeth and engages an archwire into a slot of each bracket. The archwire applies corrective forces that coerce the teeth to move into orthodontically correct positions.

The archwire applies forces to the teeth by contact with the bracket according to one of two methodologies. The archwire may be actively ligated. "Active ligation" refers to orthodontic treatment in which ligatures or O-rings are used to impose a force on the archwire to force the archwire into the archwire slot. In active ligation, the archwire is not generally free to move relative to the bracket but is secured in the archwire slot by the ligature. Unlike active ligation, "passive ligation" is a technique in which the archwire may be more free to slide relative to the bracket, that is, relative movement between the archwire and the bracket is not intentionally inhibited as it is in active ligation. Depending on the patient, passive ligation may be particularly desirable during the early stages of treatment as it allows for gross movement of the tooth relative to the archwire. Active ligation may be more beneficial during the later stages of treatment during which the clinician typically desires to have fine rotational control of the tooth.

Due to difficulties encountered in applying an individual ligature to each bracket, self-ligating orthodontic brackets have been developed that eliminate the need for ligatures by relying on a movable portion or member, such as a latch or slide, for retaining the archwire within the bracket slot. The movable portion or member essentially creates a closed lumen to contain the archwire. Depending on the orthodontic bracket design, the latch or slide may provide passive and/or active ligation.

While such self-ligating brackets are generally successful in achieving their intended purpose, there remain some drawbacks. By way of example, in some instances controlling the rotation of the teeth, such as near the finishing stages of orthodontic treatment, can be problematic, particularly where a passive ligating bracket design is utilized. While there may be several factors that cause a reduction in rotational control, it is believed that one of the major causes is the loose fit of the archwire within the archwire slot of the bracket when the movable member is closed. A close fit between the lumen formed by the latch or slide in the bracket body and the archwire is believed to be important for achieving excellent rotational control during orthodontic treatment.

The close fit between the archwire and the archwire slot when the movable member is closed may be affected by several factors including, for example, the tolerances of the manufacturing process used to form the bracket body and the movable member. When the orthodontic bracket is assembled, the various tolerances may "stack up" so as to provide a relatively loose fit between the archwire and the closed lumen provided by the bracket body and movable member. As noted above, such a loose fit is believed to result in a diminished capacity to control the rotation of the teeth.

A common practice or solution to resolve this problem includes removing the archwire from the archwire slot and inserting a larger cross- sectioned archwire into the slot. The larger archwire fills more of the available space defined by the closed lumen and thus reduces the amount of play between the archwire and the bracket. Alternatively, in addition to this practice, ligatures may be secured to a self-ligating bracket to forcibly restrain the archwire relative to the archwire slot. However, these practices in which archwires are exchanged or ligatures are added each require an office visit and significant chair time, both of which increase overall treatment duration and treatment costs.

Self-ligating brackets exist that produce both active and passive ligation. One such closure member for retaining the archwire within the bracket slot is a rotatable clip. The rotatable clip is movably mounted to the bracket body so as to be rotatable about a central clip axis. Rotation of the clip about the central axis moves the closure member between an opened position and one or more closed positions. By way of example, the rotatable clip may have an opened position in which the clip does not block or otherwise impede the insertion of the archwire into the archwire slot of the bracket. From this position, the clip may be rotated about the central axis to a closed position in which a portion of the clip closes off the archwire slot, thereby retaining the archwire therein. Such an orthodontic bracket is disclosed in U.S. Patent No. 8,162,660.

One challenge with self-ligating orthodontic brackets, and certainly with rotating clip orthodontic brackets, is designing an effective retention mechanism for movably coupling the clip to the bracket body. For example, in one approach, the rotating clip has a radially-extending rib that is received within an annular groove in the bracket body. Once the rib is positioned in the annular groove, such as during the assembly process, the clip may not be separated from the bracket body (such as by pulling it away from the bracket body in, for example, a buccal or labial direction), but is rotatable relative to the bracket body between an opened position and a closed position.

In addition, orthodontists may find it desirable to have a positive indication of when the rotating clip is in the opened position and/or a closed position. This not only notifies the orthodontist when the clip is in the opened or closed position, but also aids in preventing or reducing the possibility of accidental or unintentional movement. While the rib/groove arrangement of prior rotating clip orthodontic brackets allows the clip to rotate among its various positions, there is nothing inherent in that arrangement that provides a positive indication of clip position. If such a feature is desired, it is typically incorporated separately. By way of example, in one approach, the rotating clip includes a bump or projection which is received in a dimple or recess of the bracket body when the rotating clip is in a closed position.

Thus, while self-ligating brackets have been generally successful, manufacturers of such brackets continually strive to improve their use and functionality. In this regard, there exists a need for a self-ligating orthodontic bracket having a rotating clip type of closure member that has an improved retention mechanism that not only retains the clip to the bracket body, but also provides a positive indication of clip position.

An orthodontic bracket for coupling an archwire with a tooth includes a bracket body and a rotatable member. The rotatable member is rotatable relative to the archwire slot between an opened position and at least one closed position. In one embodiment, the rotatable member is rotatable between the opened position and two different closed positions, for example, a first closed position and a second closed position. The bracket body includes an archwire slot for receiving an archwire therein. The orthodontic bracket includes a locking mechanism that provides at least one positive stop in the rotation of the rotatable member and that is configured to produce an indication that the rotatable member is in the at least one closed position as the rotatable member is rotated to the opened position and/or the at least one closed position. A second closed position is different from the first closed position. In one closed position, the rotatable member actively ligates the archwire and in the other closed position, the rotatable member passively ligates the archwire.

In one embodiment, the locking mechanism includes at least one pin that slidably contacts the rotatable member during rotation of the rotatable member.

In one embodiment, the at least one pin is a slotted pin.

In one embodiment, the locking mechanism further includes at least one non-planar surface on the rotatable member and the pin slidably cooperates with the non-planar surface during rotation of the rotatable member.

In one embodiment, the non-planar surface includes at least one pocket and the pin rests in the at least one pocket at the at least one positive stop.

In one embodiment, the non-planar surface includes a slot with at least two enlarged portions separated by a narrow region and the pin is a slotted pin and rests in one of the enlarged portions at the at least one positive stop.

In one embodiment, the pin is elastically deformed when the rotatable member is between the opened position and the at least one closed position.

In one embodiment, the rotatable member is rotatable about an axis and the pin has a longitudinal axis that is substantially parallel to the axis of the rotatable member.

In one embodiment, the pin extends labially of the archwire slot when the bracket body is secured to the labial surface of a tooth.

In one embodiment, the orthodontic bracket further includes a retention member that secures the rotatable member to the bracket body.

In one embodiment, the locking mechanism is separate from the retention member.

In one embodiment, the pin has a longitudinal axis and the retention member has a longitudinal axis, and the longitudinal axis of the pin is oriented generally perpendicular to the longitudinal axis of the retention member.

In one embodiment, the locking mechanism produces an audible click as the rotatable member is rotated to the at least one closed position.

In one embodiment, the positive stop is associated with the at least one closed position.

In one embodiment, the locking mechanism includes at least two pins and at least two pockets in the rotatable member, wherein when one pin cooperates with one pocket at one positive stop, a second pin is elastically deformed and is not associated with a second pocket.

The invention will now be further described by way of example with reference to the accompanying drawings, in which:
Fig. 1 is a perspective view of an orthodontic bracket according to one embodiment of the invention, with a rotatable member shown in an opened position;
Fig. 2 is an exploded perspective view of the orthodontic bracket shown in Fig. 1;
Fig. 3A is a perspective view of the rotatable member shown in Fig. 2;
Fig. 3B is a side elevation view of the rotatable member shown in Fig. 3A;
Fig. 3C is a top plan view of the rotatable member shown in Fig. 3A;
Fig. 4 is a top plan view of the orthodontic bracket shown in Fig. 1;
Fig. 5 is a side elevation view of the orthodontic bracket shown in Fig. 1;
Fig. 6 is a cross-sectional view of the orthodontic bracket shown in Fig. 4 taken along section line 6-6;
Fig. 7A is a cross-sectional view taken along section line 7A-7A of Fig. 4;
Fig. 7B is a cross-sectional view taken along section line 7B-7B of Fig. 4;
Fig. 8 is a perspective view of the orthodontic bracket of Fig. 1 with the rotatable member shown in a closed position;
Fig. 9 is a top plan view of the orthodontic bracket shown in Fig. 8;
Fig. 10 is a side elevation view of the orthodontic bracket of Fig. 8;
Fig. 11 is a cross-sectional view of the orthodontic bracket taken along section line 11-11 of Fig. 9;
Fig. 12 is a perspective view of the orthodontic bracket of Fig. 1, depicting the rotatable member in a closed position different from the closed position shown in Fig. 8;
Fig. 13 is a top plan view of the orthodontic bracket of Fig. 12;
Fig. 14 is a side elevation view of the orthodontic bracket shown in Fig. 12;
Fig. 15 is a perspective view of an orthodontic bracket according to one embodiment of the invention, with a rotatable member shown in an opened position;
Fig. 16 is an exploded perspective view of the orthodontic bracket shown in Fig. 15;
Fig. 17A is a bottom perspective view of the rotatable member shown in Fig. 16;
Fig. 17B is a side elevation view of the rotatable member shown in Fig. 17A;
Fig. 17C is a top plan view of the rotatable member shown in Fig. 17A;
Fig. 17D is a cross-sectional view of the rotatable member taken along section line 17D-17D in Fig. 17C;
Fig. 18A is a cross-sectional view of the orthodontic bracket shown in Fig. 15 taken along section line 18A-18A;
Fig. 18B is a cross-sectional view similar to that shown in Fig. 18A with slight rotation of the rotatable member;
Fig. 19 is a top plan view of the orthodontic bracket shown in Fig. 15;
Fig. 19A is a cross-sectional view taken along section line 19A-19A of the orthodontic bracket shown in Fig. 19;
Fig. 19B is a cross-sectional view with the rotatable member shown rotated from the position shown in Fig. 19A;
Fig. 20 is a side elevation view of the orthodontic bracket shown in Fig. 15;
Fig. 21 is a perspective view of the orthodontic bracket shown in Fig. 15 with the rotatable member shown in a closed position;
Fig. 22 is a top plan view of the orthodontic bracket shown in Fig. 21;
Fig. 22A is a cross-sectional view taken along section line 22A-22A of the orthodontic bracket shown in Fig. 22;
Fig. 23 is a side elevation view of the orthodontic bracket shown in Fig. 21;
Fig. 24 is a perspective view of the orthodontic bracket shown in Fig. 15 with the rotatable member shown in a closed position different from the closed position shown in Fig. 21;
Fig. 25 is a top plan view of the orthodontic bracket shown in Fig. 24;
Fig. 25A is a cross-sectional view of the rotatable member shown taken along section line 25A-25A from the position shown in Fig. 25;
Fig. 25B is a cross-sectional view of the rotatable member shown rotated from the position shown in Fig. 25;
Fig. 25C is a cross-sectional view of the rotatable member shown rotated from the position shown in Fig. 25;
Fig. 26 is a side elevation view of the orthodontic bracket shown in Fig. 24;
Fig. 27 is a perspective view of an orthodontic bracket according to one embodiment of the invention, with a rotatable member shown in an opened position;
Fig. 28 is an exploded perspective view of the orthodontic bracket shown in Fig. 27;
Fig. 29 is a bottom perspective view of the rotatable member shown in Fig. 27;
Fig. 30 is a cross-sectional view of the rotatable member taken along section line 30-30 in Fig. 29;
Fig. 31 is a cross-sectional view taken along section line 31-31 of the rotatable member shown in Fig. 29;
Fig. 32A is a cross-sectional view of the rotatable member shown in a closed position according to one embodiment of the invention;
Fig. 32B is a cross-sectional view of the rotatable member shown in a closed position according to one embodiment of the invention;
Fig. 33 is a cross-sectional view of a portion of a rotatable member shown in an opened position according to one embodiment of the invention;
Fig. 34 is a perspective view of a portion of a rotatable member shown in Fig. 33 according to one embodiment of the invention;
Fig. 35 is an exploded perspective view of an orthodontic bracket according to one embodiment of the invention;
Fig. 36 is a cross-sectional view of the orthodontic bracket shown in Fig. 35 taken along section line 36-36;

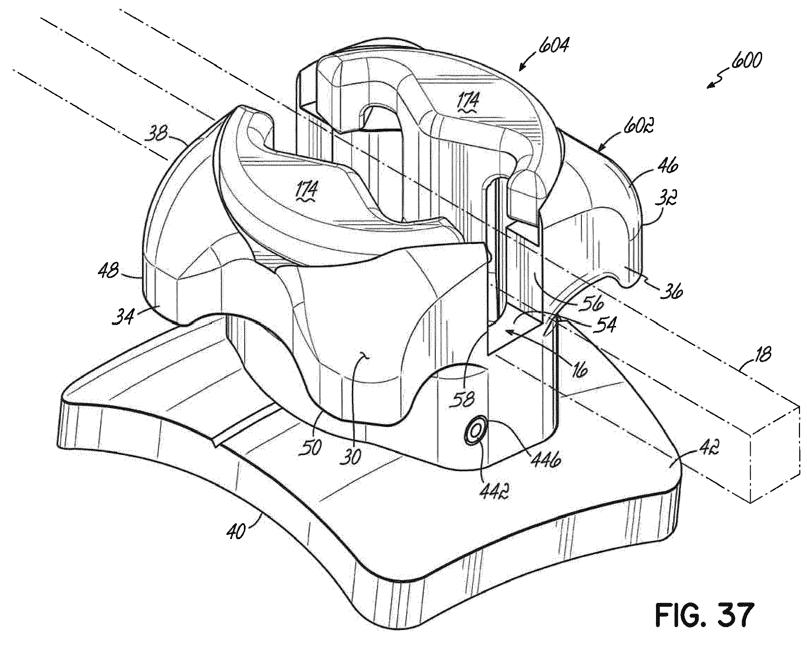

Fig. 37 is a perspective view of an orthodontic bracket according to one embodiment of the invention, with a rotatable member shown in an opened position;
Fig. 38A is an exploded perspective view of one embodiment of the orthodontic bracket shown in Fig. 37;
Fig. 38B is an exploded perspective view of one embodiment of the orthodontic bracket shown in Fig. 37;
Fig. 39A is a top perspective view of the rotatable member shown in Fig. 37;
Fig. 39B is an elevation view of the rotatable member shown in Fig. 37;
Fig. 40A is a cross-sectional view of the orthodontic bracket shown in Fig. 37 with the rotatable member shown rotated from the opened position;
Fig. 40B is a cross-sectional view of the orthodontic bracket shown in Fig. 37
Fig. 41 is a cross-sectional view of an orthodontic bracket according to one embodiment of the invention, with a rotatable member shown in an opened position;
Fig. 42 is a perspective view of a retention member shown in Fig. 41;
Fig. 43 is a exploded perspective view of an orthodontic bracket according to one embodiment of the invention;
Fig. 44 is a cross-sectional perspective view of a rotatable member according to one embodiment of the invention;
Fig. 45A is a cross-sectional view of an orthodontic bracket according to one embodiment of the invention, with a rotatable member shown in an opened position;
Fig. 45B is a cross-sectional view of an orthodontic bracket according to one embodiment of the invention, with a rotatable member shown in a closed position;
Figs. 46A-46C are planned views of an orthodontic bracket according to one embodiment of the invention with the rotatable member shown in an opened and two different closed positions; and
Fig. 47 is a plan view of a rotatable member according to one embodiment of the invention.

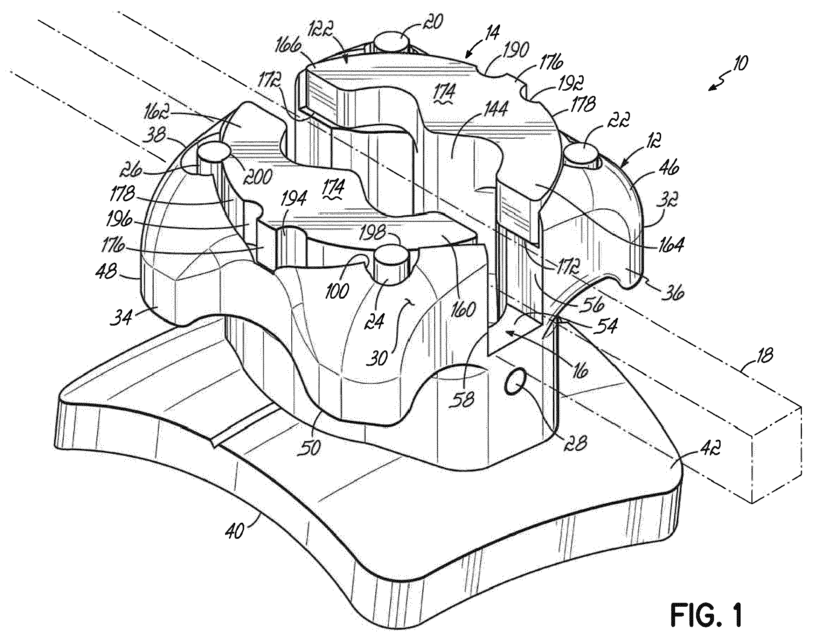

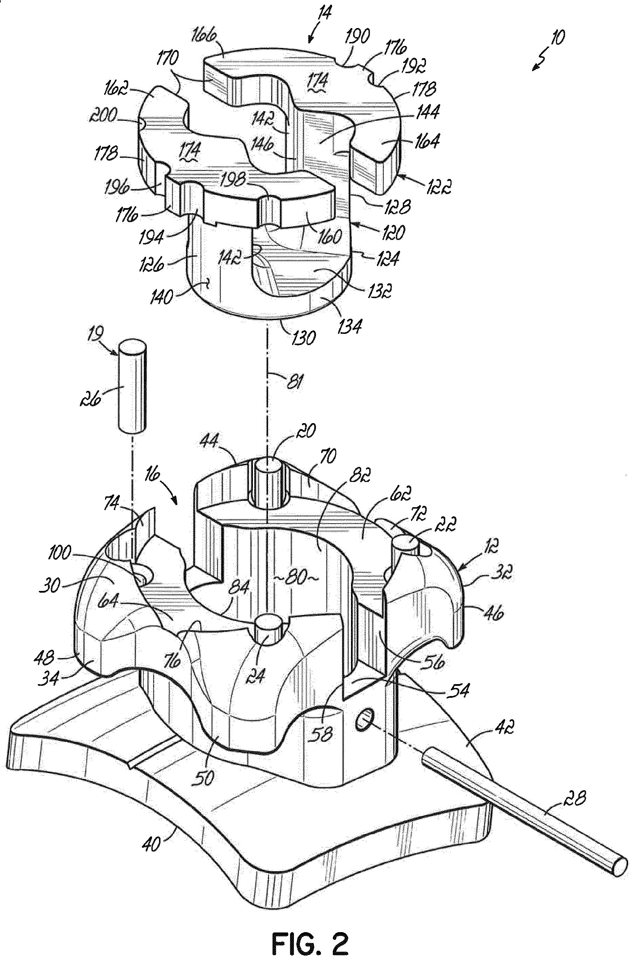

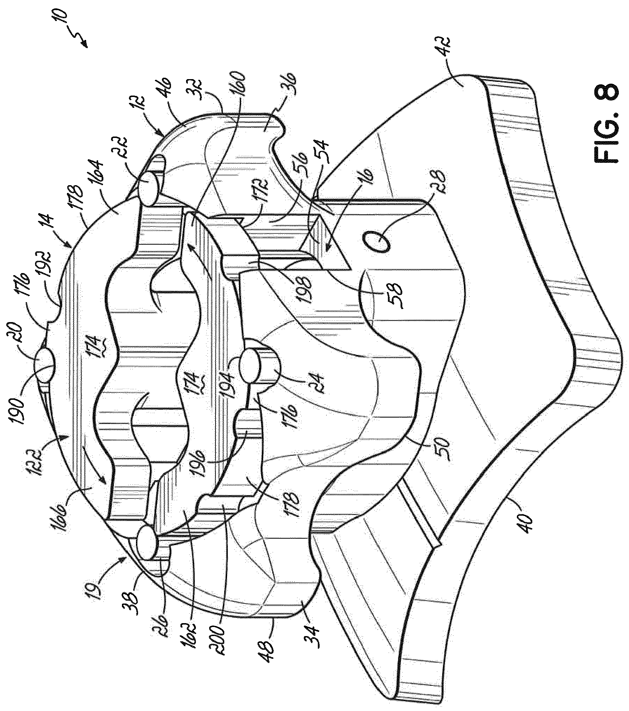

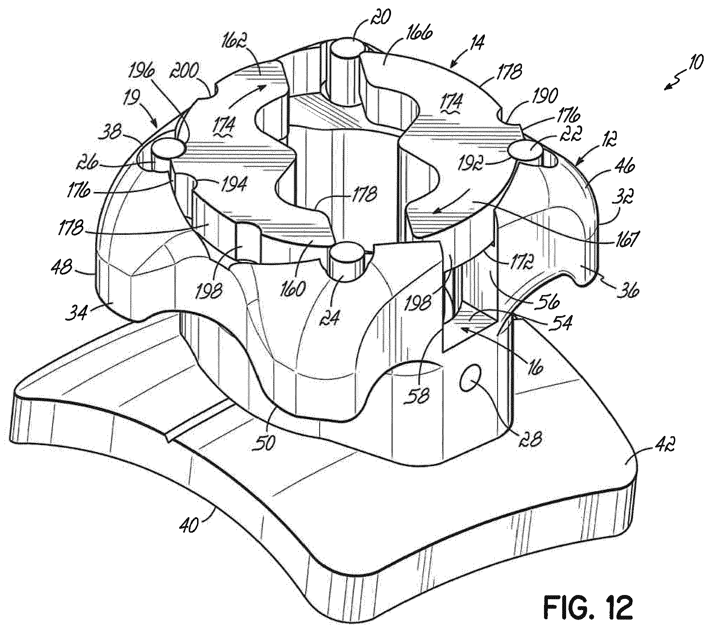

Referring now to the drawings, and to Figs. 1 and 2 in particular, an orthodontic bracket 10 includes a bracket body 12 and a movable closure member coupled to the bracket body 12. In one embodiment, the movable closure member includes a rotatable member 14 that is rotatably coupled with the bracket body 12. The bracket body 12 includes an archwire slot 16 formed therein that is configured to receive an archwire 18 (shown in phantom in Fig. 1) for applying corrective forces to the teeth. The rotatable member 14 is rotatable relative to the bracket body 12 from an opened position (Figs. 1, 4, and 5) in which the archwire 18 is insertable into the archwire slot 16, to a first closed position (Figs. 8, 9, and 10) in which the archwire 18 is retained within a closed lumen defined by the archwire slot 16 and the rotatable member14, and to a second closed position (Figs. 12, 13, and 14) in which the archwire 18 is retained within another closed lumen defined by the archwire slot 16 and a different portion of the rotatable member 14.

As is described below, the dimensions of each of the closed lumens defined by the rotatable member 14 between each of the first closed position and the second closed position may be different. In this regard, in one closed position, the rotatable member 14 forms a large lumen relative to the archwire 18. This lumen is larger in one or more dimensions relative to the archwire 18 such that there is a clearance between the lumen and the archwire 18. In this position, the orthodontic bracket 10 passively ligates the archwire 18.

And, in the other closed position, the rotatable member 14 forms a smaller lumen relative to the archwire 18. This smaller lumen more closely approximates the dimensions of the archwire 18 than the large lumen such that there may be little or no clearance between the lumen and the archwire 18 in one or more directions. In this position, the orthodontic bracket 10 actively ligates the archwire 18.

Advantageously, by virtue of the two closed positions, the orthodontic bracket 10 may provide both passive and active ligation on a given archwire. In other words, active and passive ligation may be achieved on a predetermined archwire by rotating the rotatable member 14 from one closed position to the other closed position. The rotatable member 14 may be rotated between the two closed positions numerous times during treatment. Thus, this configuration obviates a need to utilize consecutively larger archwires, which must be inserted and removed to effectuate complete orthodontic treatment, for improving rotational control.

By way of example only, orthodontic treatment may be initiated by passive ligation of an archwire (in one closed position) and then treatment may progress to active ligation (in another closed position) when improved rotational control is desired. In view of the embodiments in the invention, a clinician may select a single archwire for both passive and active ligation. Such an archwire may be used during the entire orthodontic treatment. Accordingly, embodiments of the present invention may bring about completion of orthodontic treatment more quickly by eliminating a need for any archwire changes during treatment.

Unlike a self-ligating orthodontic bracket having a U-shaped clip or other flexible retaining member, the rotatable member according to embodiments of the invention does not flex appreciably at loads observed during normal orthodontic treatment.

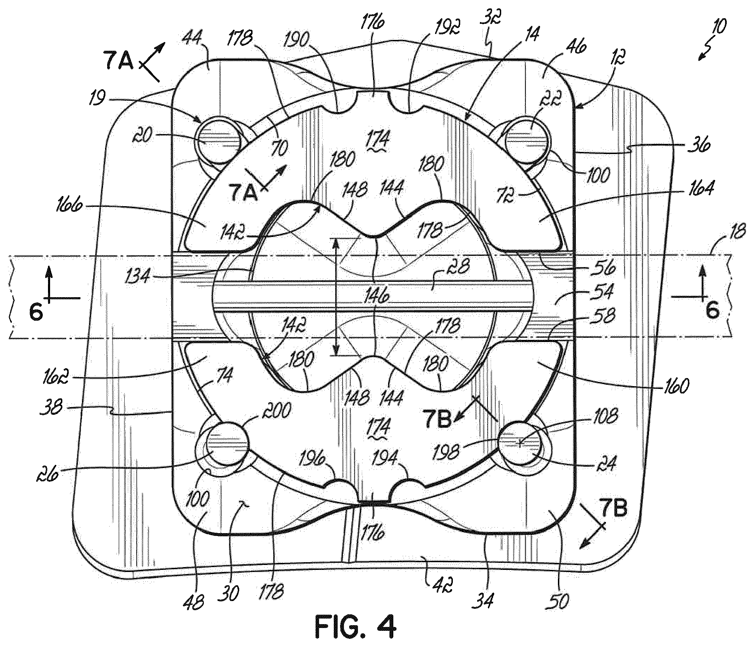

In addition, and with reference now to Figs. 2 and 4, the orthodontic bracket 10 includes a locking mechanism 19 having one or more resilient members that releasably maintain the rotatable member 14 in one or more of the opened position, the first closed position, and the second closed position, each of which is described below. The locking mechanism 19 may also provide an audible and/or tactile sensation as a discernible indication that the rotatable member 14 has been positioned in one of the opened or closed positions. In the exemplary embodiment shown, the locking mechanism 19 may include one or more pins 20, 22, 24, 26 that slidably engage the rotatable member 14 in one or more of these positions.

The orthodontic bracket 10 further includes a retention member 28 for coupling the rotatable member 14 to the bracket body 12. While the embodiments of the present invention are not limited thereto, by way of example only, the retention member 28 is in the form of a pin or rod that couples the rotatable member 14 to the bracket body 12. In one exemplary embodiment, the rod 28 may be a solid titanium or NiTi pin that is coupled to the bracket body 12 and that may slidably engage the rotatable member 14 during rotation thereof.

Generally, the retention member 28 is oriented to restrain the rotatable member 14 when the archwire18 pulls on it. For example, the retention member 28 may be oriented perpendicular to a force transferred from the archwire 18 to the rotatable member 14. For labial applications of the orthodontic bracket 10, the retention member 28 may be oriented to counteract forces acting in the labial direction that tend to pull the archwire 18 labially out of the archwire slot 16. For example, where the archwire 18 pulls labially on the rotatable member 14 during orthodontic treatment, the retention member 28 may be oriented in a mesial-distal direction, as shown, or in an occlusal-gingival direction. More specifically, the retention member 28 may be in a plane generally parallel to a plane of a base surface of the archwire slot 16 and/or in a plane generally parallel with a tangent of the adjacent tooth surface. The retention member 28 transfers loads from the rotatable member 14 to the bracket body 12 and consequently to the tooth. Further in this regard, the member 28 is oriented perpendicular to the one or more pins 20, 22, 24, 26. As a result of the orientation of the retention member 28, the one or more pins 20, 22, 24, 26 may bear little, if any, of the load from the archwire 18 by virtue of their perpendicular orientation which is generally aligned with a direction of load on the bracket body 12.

To these and other ends, with reference to Figs. 1 and 2, the orthodontic bracket 10, unless otherwise indicated, is described herein using a reference frame attached to a labial surface of an anterior tooth on the lower jaw. Consequently, as used herein, terms such as labial, lingual, mesial, distal, occlusal, and gingival used to describe the orthodontic bracket 10 are relative to the chosen reference frame. The embodiments of the invention, however, are not limited to the chosen reference frame and descriptive terms, as the orthodontic bracket 10 may be used on other teeth and in other orientations within the oral cavity. For example, the orthodontic bracket 10 may also be coupled to the lingual surface of the tooth. Those of ordinary skill in the art will recognize that the descriptive terms used herein may not directly apply when there is a change in reference frame. Nevertheless, embodiments of the invention are intended to be independent of location and orientation within the oral cavity and the relative terms used to describe embodiments of the orthodontic bracket 10 are to merely provide a clear description of the embodiments in the drawings. As such, the relative terms labial, lingual, mesial, distal, occlusal, and gingival are in no way limiting the invention to a particular location or orientation.

When mounted to the labial surface of a tooth carried on the patient's lower jaw and with reference specifically to Fig. 1, the bracket body 12 has a labial side 30, an occlusal side 32, a gingival side 34, a mesial side 36, a distal side 38, and a lingual side 40. The labial side 30 of the bracket body 12 is configured to be secured to the tooth in any conventional manner, such as for example, by an appropriate orthodontic cement or adhesive or by a band around an adjacent tooth.

In one embodiment shown in Figs. 1, 2, and 4, the lingual side 40 may further be provided with a pad 42 defining a bonding base that is secured to the surface of the tooth. The pad 42 may be coupled to the bracket body 12 as a separate piece or element, or alternatively, the pad 42 may be integrally formed with the bracket body 12. Further, the pad 42 may be specifically shaped to fit on the surface of a particular tooth and may therefore have a multitude of configurations different from that shown in Figs. 1, 2, and 4. It will be appreciated that embodiments of the present invention are not limited to any particular configuration of the pad 42.

With reference to Fig. 2, the occlusal side 32 of the bracket body 12 may include a pair of tie wings 44, 46 spaced apart in the mesial-distal direction and projecting away from the bracket body 12 in a generally occlusal direction. Similarly, the gingival side 34 of the bracket body 12 may include a pair of tie wings 48, 50 spaced apart in the mesial-distal direction and projecting away from the bracket body 12 in a generally gingival direction. The tie wings 44, 46, 48, 50 may receive ligatures, power chains, or other connective devices as are known in the art and often used in orthodontic treatment.

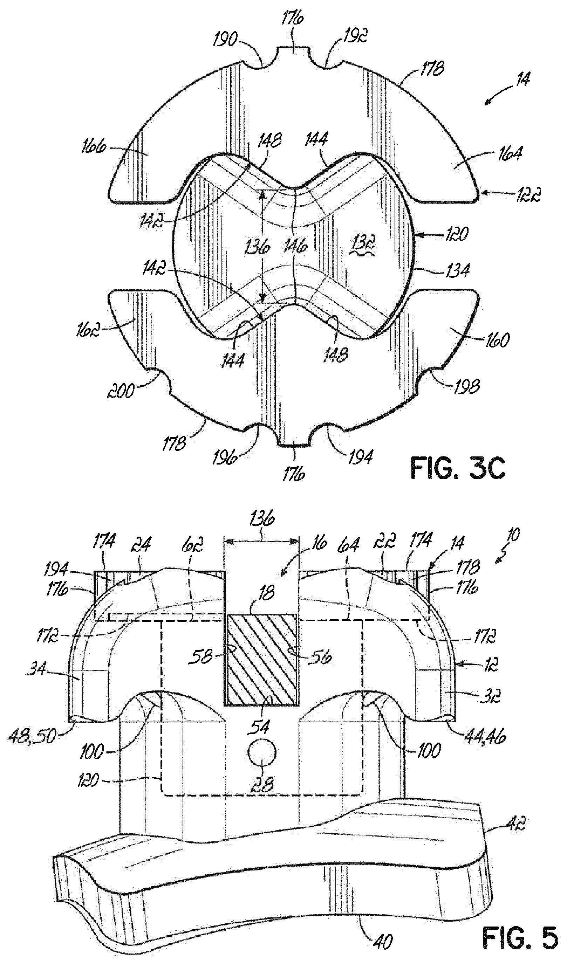

With reference to Figs. 1 and 5, the bracket body 12 includes a base surface 54 and a pair of opposed slot surfaces 56, 58 projecting labially from the base surface 54 that collectively define the archwire slot 16, which may extend in a mesial-distal direction from mesial side 36 to distal side 38. The base surface 54 and slot surfaces 56, 58 are substantially encapsulated or embedded within the material of the bracket body 12.

As shown in Fig. 2, the bracket body 12 further includes a generally planar support surface 62 extending in a generally gingival-occlusal direction from slot surface 56 and a generally planar support surface 64 extending in a generally gingival-occlusal direction from slot surface 58. As will be discussed in more detail below, the planar support surfaces 62, 64 are configured to slidably support the rotatable member 14 on the bracket body 12 and are sized to allow the rotatable member 14 to rotate between the opened position and the closed positions.

The generally planar support surfaces 62, 64 are recessed below the labial side 30 of the bracket body 12 so as to define gingivally-facing bounding walls 70, 72 on tie wings 44, 46, respectively; and occlusally-facing bounding walls 74, 76 on tie wings 48, 50, respectively. The area between the bounding walls 70, 72, 74, 76 then defines a recessed space configured to receive the rotatable member 14 such that the labial surface of the rotatable member 14 may not extend beyond the labial side 30 of the bracket body 12. More particularly, in one embodiment, the labial surface of the rotatable member 14 may be generally co-planar (e.g., flush) with the labial side 30 of the bracket body 12 for patient comfort. However, the labial surface of the rotatable member 14 may be below the labial side 30 of the bracket body 12 in an alternative embodiment.

As is illustrated in Fig. 2, to receive the rotatable member 14, the bracket body 12 includes a generally cylindrical bore 80 open to the labial side 30 of the bracket body 12 that extends into the bracket body 12 in a generally lingual direction. The cylindrical bore 80 is positioned relative to the bracket body 12 so as to define a central axis 81 extending in the labial-lingual direction. The cylindrical bore 80 may intersect the archwire slot 16 approximately at its geometric center in a substantially perpendicular manner. The cross dimension of the cylindrical bore 80 is generally greater than the gingival-occlusal height of the archwire slot 16 such that the bore 80 forms a generally arcuate first bore portion 82 on the upper or occlusal side of the archwire slot 16 and having a depth defined by the slot surface 56, and a generally arcuate second bore portion 84 on the lower or gingival side of the archwire slot 16 and having a depth defined by the slot surface 58. The first and second bore portions 82, 84 are separated from each other by the archwire slot 16.

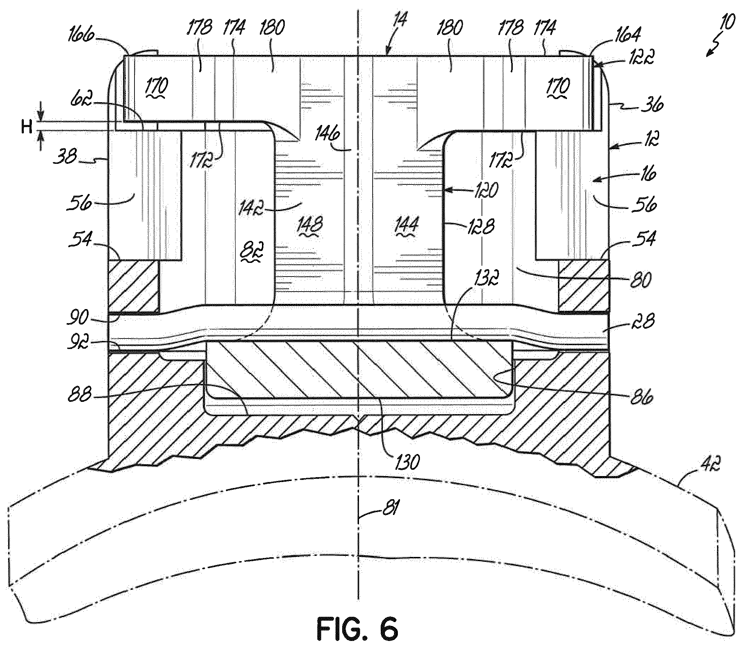

The cylindrical bore 80 penetrates into the bracket body 12 for a depth greater than the depth of the archwire slot 16 so as to define a generally circumferentially continuous third bore portion 86, shown in Fig. 6. In an exemplary embodiment, the cylindrical bore 80 is a blind bore, being closed off by a base or bottom surface 88, which in the exemplary embodiment is formed by pad 42. The depth of the third bore portion 86 may be determined by the distance between the bottom surface 88 and the base surface 54 of the archwire slot 16. While the cylindrical bore 80 has been described herein as a blind bore, it should be recognized that in alternative embodiments the bore 80 may be a through-bore penetrating the bracket body 12.

As shown in Fig. 6, the bracket body 12 includes one or more channels or passageways 90 that receive a portion of the retention member 28 for securing the rotatable member 14 to the bracket body 12. The passageway 90 is open to at least one of the mesial and distal sides 36, 38 and extends substantially parallel to the archwire slot 16 (e.g., in the mesial-distal direction). For example, in one embodiment, the passageway 90 may be open to only one of the mesial or distal sides 36, 38 of the bracket body 12 and be closed off opposite the open side. Alternatively, the passageway 90 may be open to both the mesial and distal sides 36, 38 of the bracket body 12 so as to present a through-channel. In an exemplary embodiment, the passageway 90 penetrates the bracket body 12 so as to be generally positioned lingually of the archwire slot 16 such that the passageway 90 does not intersect the archwire slot 16. Although not shown, the passageway 90 may extend in an occlusal-gingival direction and be open to at least one of the occlusal and gingival sides 32, 34.

With continued reference to Fig. 6, in one embodiment of the invention, the passageway 90 is configured to intersect with the cylindrical bore 80 such that the passageway 90 and the bore 80 are open to each other, such as at openings 92. More particularly, in an exemplary embodiment, since the passageway 90 is generally positioned between the archwire slot 16, the passageway 90 may intersect with the third bore portion 86 of the cylindrical bore 80.

With reference to Figs. 2, 4, 7A, and 7B, the bracket body 12 retains each of the one or more pins 20, 22, 24, 26. In the exemplary embodiment shown, the bracket body 12 includes one or more bores 100. Each bore 100 extends into the bracket body 12 from the labial side 30 of the bracket body 12. In the exemplary embodiment shown, each bore 100 extends from a corresponding planar support surface 62, 64 into the respective tie wing (e.g., lingually into the bracket body 12) and is configured to retain a respective one of pins 20, 22, 24, 26. While each bore 100 is shown as a through-bore extending generally perpendicularly from the corresponding planar support surface 62, 64 through to the underside surface of the respective tie wing 44-50, embodiments of the present invention are not limited to a through-bore as the bore 100 may be configured as a blind bore.

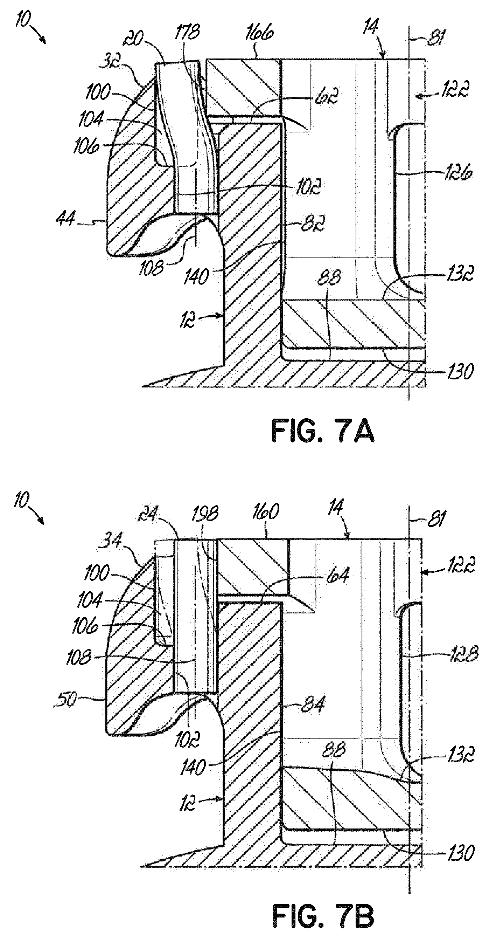

With reference to Figs. 7A and 7B, each bore 100 may include a lower portion 102, which is sized to secure the respective pin 20, 22, 24, 26 to the bracket body 12 via laser welding or staking, or by other means known in the art, and an upper portion 104, which may be over-sized or offset relative to the lower portion 102. The relationship between the upper portion 104 and the lower portion 102 results in a relief area positioned generally radially to the outside of the one or more pins 20, 22, 24, 26 from the central axis 81. In addition, as shown at 106, the upper portion 104 of the bore 100 may extend below (e.g., lingually of) the corresponding planar support surface 62, 64. By way of example only and not limitation, the upper portion 104 may be recessed below the corresponding planar support surface 62, 64 by at least about 0.008 inch. Further in this regard, the upper portion 104 may form a larger proportion of the bore 100 in the labial-lingual direction than the lower portion 102 as measured from the labial side 30 of the bracket body 12. As is described below, the pin 20, 22, 24, 26 may radially deflect or bend along its axis into the upper portion 104, particularly into the relief area, of the bore 100 during rotation of the rotatable member 14.

In addition, as is shown in Figs. 4 and 7B, in one embodiment, an axis 108 of the bore 100, as defined by the lower portion 102 of the bore 100, may nearly coincide with the plane of the corresponding bounding wall 70, 72, 74, 76. The axis of the pins 20, 22, 24, 26 may be aligned with the axis 108 of the lower portion 102 of the bore 100 such that the pins 20, 22, 24, 26 point generally in the labial direction and may be substantially perpendicular to a plane defined by a longitudinal axis of the retention member 28 and/or to a plane defined by the passageway 90. Embodiments of the present invention are, however, not limited to the pins 20, 22, 24, 26 being generally perpendicular to the retention member 28. That is, the location of the pins 20, 22, 24, 26 may be moved relative to the rotatable member 14 independent of bounding walls 70, 72, 74, 76 while still locking the rotatable member 14 and providing the tactile/audible response described above.

Further in this regard, it will be appreciated that the axis 108 may be positioned slightly radially inside or slightly radially outside of the corresponding bounding wall 70, 72, 74, 76 from the axis 81. The position of the axis 108 of the lower portion 102 relative to the corresponding bounding wall 70, 72, 74, 76 may depend upon the dimension of the pins 20, 22, 24, 26; the relative depths of the upper portion 104 and lower portion 102 of the bore 100; and the dimension of the rotatable member 14, as is described below, as each of these may change the force required to rotate the rotatable member 14, as well as, the magnitude of the tactile and/or audible click associated with rotation of the rotatable member 14. By way of example only, and not limitation, the upper portion 104 of the bore 100 may be from about 10% to about 40% larger in dimension than the lower portion 102 of the bore 100. By way of further example, the upper portion 104 may be from about 20% to 30% larger in dimension than the lower portion 102.

With regard to the pins 20, 22, 24, 26, by way of example, the pins 20, 22, 24, 26 may each have a diameter of about 0.0100 inch, the lower portion 102 of the bore 100 may have a diameter of about 0.0105 inch, and the upper portion 104 of the bore 100 may have a diameter of about 0.0125 inch. And, by way of further example, the pins 20, 22, 24, 26 may be about 0.036 inch long and be made of stainless spring steel, such as, a 302 stainless or NiTi or another superelastic metal.

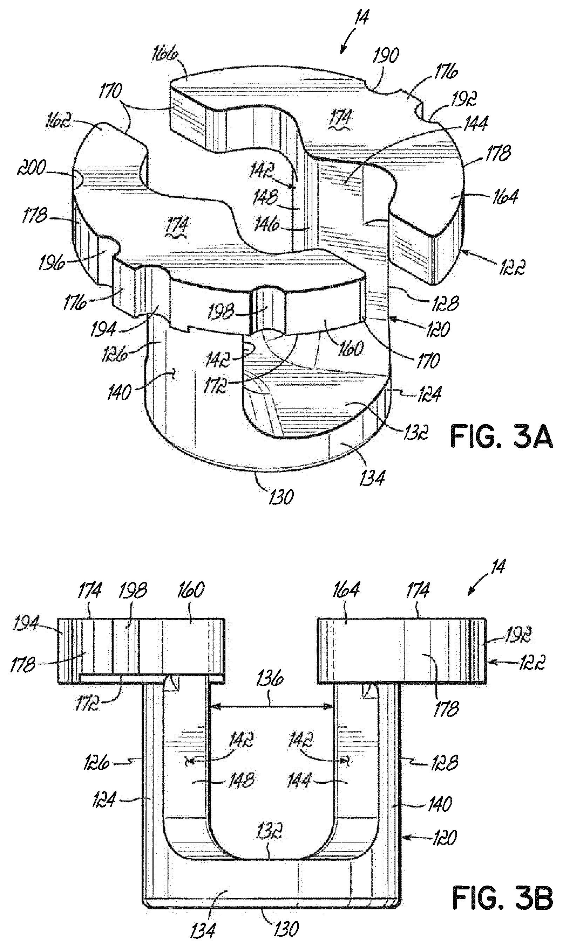

As is illustrated in Figs. 2 and 3A-3C, the rotatable member 14 comprises a generally cylindrical retaining portion 120 that fits in the cylindrical bore 80 of the bracket body 12, and a ligating portion 122 that ligates the archwire 18 (e.g., actively and/or passively, described below) when the rotatable member 14 is in one of the closed position(s) (e.g., Figs. 8 and 12). In one embodiment, the cylindrical retaining portion 120 includes a generally cylindrical base 124 and a pair of spaced-apart columns or studs 126, 128. The cylindrical retaining portion 120 is generally disc-shaped and includes a lower surface 130, an upper surface 132, and a side wall 134 extending therebetween. The cylindrical base 124 fits in the third bore portion 86 of the bore 80 (shown best in Fig. 6).

In one embodiment, the upper surface 132 may be generally planar and substantially flush with the bottom surface of the retention member 28 when the retention member 28 is inserted through the passageways 90 and the rotatable member 14 is positioned in the bore 80. The rod 28 therefore retains the rotatable member 14 within the bracket body 12. The lower surface 130 may be generally non-planar (e.g., angled configuration) and shaped to accommodate, for example, a certain prescription of the orthodontic bracket 10 (not shown). The shape of the cylindrical base 124 is such that the rotatable member 14 may rotate within the cylindrical bore 80 between the opened and closed position without interference between the cylindrical base 124 and a portion of the third bore portion 86. Additionally, the cylindrical base 124 is sized (e.g., cross dimension, diameter) just slightly under the size of the cylindrical bore 80.

The studs 126, 128 generally extend upwardly (e.g., labially) from the upper surface 132 of the cylindrical base 124 in a generally perpendicular manner and are arranged such that there is an opening or gap 136 between the two studs 126, 128 (as shown in Figs. 3B, 3C, and 5). The size of the gap 136 may vary, but is such that when the rotatable member 14 is in the opened position (Figs. 1, 4, and 5), there is an unobstructed path for the archwire 18 to be inserted into the archwire slot 16 and between the two studs 126 and 128. Each stud 126, 128 includes an outer surface 140 having a generally arcuate configuration such that the outer surface 140 is smooth and continuous with the side wall 134 of the cylindrical base 124 (e.g., it is an extension of the cylindrical configuration of the base 124). The arcuate outer surface 140 of the studs 126, 128 generally confronts the first and second bore portions 82, 84.

Each stud 126, 128 further includes an inner surface 142, a portion of which is configured to confront the archwire 18. In an exemplary embodiment, the inner surface 142 is specifically designed or contoured so as to provide multiple rotational positions of the rotatable member 14 relative to the bracket body 12 (and the archwire slot 16 more specifically) by which the archwire 18 may pass between the two studs126, 128 without significant interference of being blocked.

In this regard and with reference to Figs. 2, 3A, 3B, and 3C, in one embodiment, the inner surface 142 of each of the studs 126, 128 may include a first surface portion 144, an intermediate second surface portion 146, and a third surface portion 148. In one embodiment, the second surface portion 146 may be generally arcuate and each of the first and third surface portions 144, 148 may be generally planar. The surface portions 144, 146, 148 on stud 126 are arranged generally to face in a direction opposite to the surface portions 144, 146, 148 of the other stud 128.

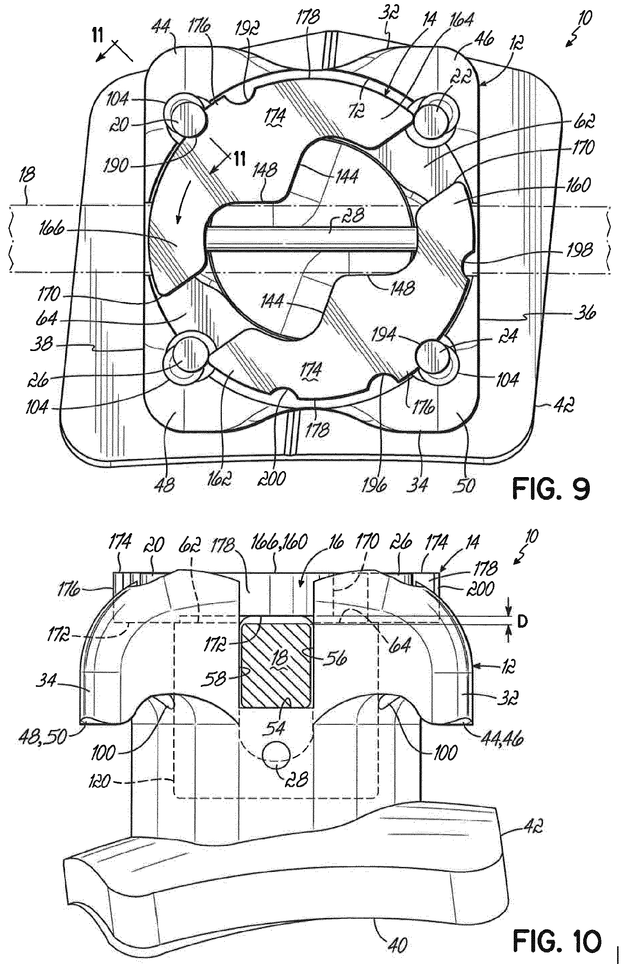

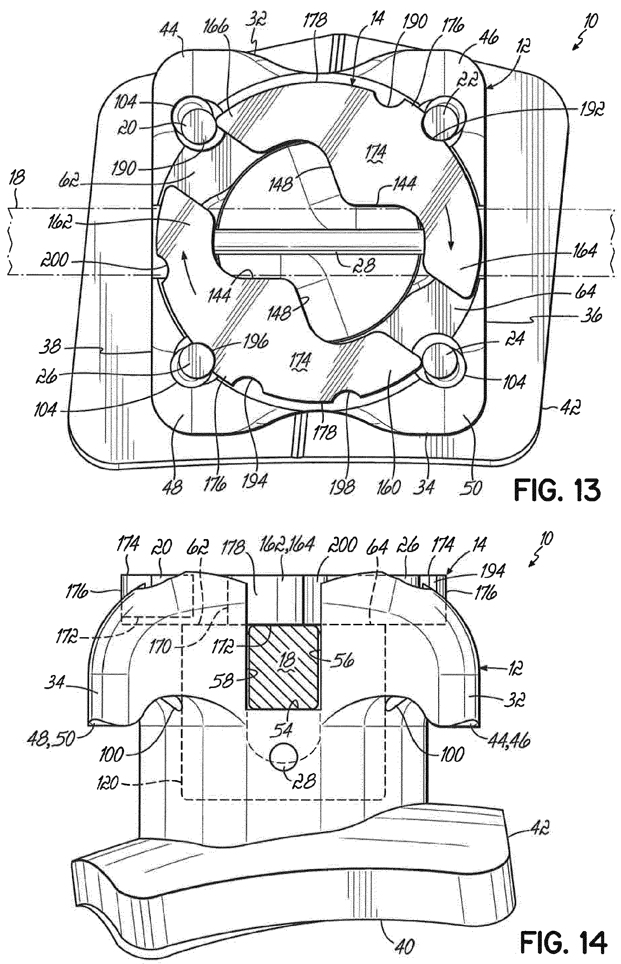

With reference to Fig. 3C, the surface portions 144, 146, 148 of the opposing inner surfaces 142 may be configured such that, in the opened position of the rotatable member 14, each surface portion 144, 146, 148 generally confronts the archwire 18 in the archwire slot 16. In the closed positions, shown for example in Figs. 9 and 13, one or the other of the surface portions 144 and 148 on each stud 126, 128 may be generally co-planar with the slot surfaces 56, 58. For example, the first surface portions 144 of the inner surfaces 142 may be configured such that in one of the closed positions (e.g., the active ligating position), the first surface portions 144 generally confront the archwire 18 in archwire slot 16 (Fig. 13). The third surface portion 148 of the inner surface 142 may be configured such that in one of the closed positions (e.g., the passive ligating position), the third surface portion 148 of the inner surface 142 of each of the studs 126, 128 may generally confront the archwire 18 in the archwire slot 16 (Fig. 9).

With reference to Figs. 1, 2, and 3A-3C, the ligating portion 122 of the rotatable member 14 includes two pairs of retention arms 160, 162 and 164, 166 extending from the studs 126, 128, respectively, in a transverse manner such that the retention arms 160, 162, 164, 166 are generally parallel to the upper surface 132 of the cylindrical base 124. The retention arms 160, 162, 164, 166 are arranged on their respective studs 126, 128 with each terminating in a free end 170. As shown, retention arms 160 and 162 extend from the stud 126 so as to form a semi-circular shaped extension. Similarly, the retention arms 164 and 166 extend from the stud 128 so as to form a semi-circular shaped extension separated from the opposing semi-circular shaped extension by the gap 136. Collectively, the retention arms 160, 162, 164, 166 may define a generally circular periphery that is spaced apart from bounding walls 70, 72, 74, 76.

With reference to Figs. 2, 3B, 3C, and 5, each of the retention arms 160, 162, 164, 166 includes a lower surface 172, an upper surface 174, and a side wall 178 extending therebetween. In one embodiment shown in Fig. 3C, a stop in the form of a projection or tab 176 is positioned between retention arms 160 and 162 and between retention arms 164 and 166 along an outwardly facing portion of the corresponding side wall 178. The tabs 176 may extend radially away from the axis 81 and oppose one another across the ligating portion 122. The tabs 176 extend or project beyond the generally circular periphery defined by the side walls 178 of the retention arms 160, 162, 164, 166 and are configured to prevent rotation of the rotatable member 14, described below, continuously in one direction and continuously in the opposite direction.

With continued reference to the rotatable member 14 and to Fig. 4, in one embodiment, an inwardly-facing portion of the side wall 178 of each of the retention arms 160, 162, 164, 166 may include a notch or arcuate region 180. The arcuate region 180 may define a tool receptacle that receives a tool (not shown) to facilitate rotation of the rotatable member 14 in a relatively simplified manner. For example, a tool (e.g., a small flat-head screw driver) may be inserted into contact with the region 180 to forcibly rotate the rotatable member 14 in a clockwise direction and in a counterclockwise direction.

As is shown in Fig. 6, in one embodiment, the lower surfaces 172 of retention arms 164 and 166, while being planar, do not all reside in the same plane. The lower surface 172 of retention arm 164 is closer to the base surface 54 than the lower surface 172 of the retention arm 166. This difference in height between the two planes is labeled "H" in Fig. 6. It will be appreciated that while not shown in Fig. 6, the lower surface 172 of the retention arm 160 may reside in the same plane as the lower surface 172 of the retention arm 166, and the lower surface 172 of the retention arm 162 may reside in the same plane as the lower surface 172 of the retention arm 164. The lower surfaces 172 of the retention arms 162, 164 slidably contact the corresponding planar support surfaces 62, 64 during relative movement. The lower surfaces 172 of the retention arms 160, 166 therefore may not slidably contact either of the planar support surfaces 62, 64 during rotation of the rotatable member 14 between each of the closed positions and the opened position. Rather, the surfaces 172 of retention arms 160, 166 confront but are spaced labially from the planar support surfaces 62, 64 in one or both of the closed positions and in the opened position. The difference in labial-lingual position of the lower surfaces 172 of the retention arms 160, 166 versus the labial position of the lower surfaces 172 of the retention arms 162, 164 may produce active ligation and passive ligation of the same archwire in the archwire slot 16.

This configuration may result in the through-thicknesses of one pair of retention arms, as measured from the upper surface 174 to the lower surface 172, being thinner than the thickness of the other pair of retention arms. For example, the thickness of the pair of retention arms 162, 164 may be greater than the thickness of the pair of retention arms 160, 166 as measured from the lower surface 172 to the upper surface 174. This difference may be by way of a cutout or notch in each of the retention arms 160, 166. By way of example, the difference in thickness between the retention arms 160, 166 and the retention arms 162, 164 may be from about 0.0017 inch to about 0.0021 inch, though other thickness differences may be utilized depending on the dimensions of the archwire 18.

In view of the difference in thicknesses, the dimension of the closed lumen formed by the retention arms 160, 166 and the base surface 54 and opposed slot surfaces 56, 58 is different from the dimension of the closed lumen formed by the retention arms 162, 164 and the base surface 54 and opposed slot surfaces 56, 58. For example, a labial-lingual dimension of the archwire slot 16, as is defined between the base surface 54 and the lower surface 172 of the retention arms 160, 166, differs from the labial-lingual dimension of the archwire slot 16, as is defined between the base surface 54 and the lower surface 172 of the retention arms 162, 164.

By way of example only, with reference to Figs. 9 and 10, in which the ligating portion 122 is in a closed position, the retaining arms 160, 166 extend over the archwire slot 16 to retain the archwire 18 therein. The closed lumen is formed by the lower surfaces 172 of the retention arms 160, 166; the base surface 54; and the opposed slot surfaces 56, 58. The lower surfaces 172 of the retention arms 160, 166 do not reside in the same plane as the support surfaces 62, 64. Instead, the lower surfaces 172 are positioned outwardly (e.g., offset labially) of the support surfaces 62, 64. The labial offset is labeled "D" in Fig. 10. By way of example only, not limitation, the height dimension of the closed lumen in the closed position shown in Fig. 10 may measure about 0.028 inch. When the archwire 18 is a 0.019 inch x 0.025 inch archwire, the orthodontic bracket 10 may passively ligate the archwire 18 by virtue of at least about 0.003 inch difference in the labial-lingual dimension. The height dimension of the closed lumen formed by the retention arms 160, 166 is larger than the height dimension of the closed lumen formed by the retention arms 162, 164.

In this regard and with reference to Figs. 13 and 14, in which the ligating portion 122 is in another closed position, the retaining arms 162, 164 extend over the archwire slot 16 to retain the archwire 18 therein. The closed lumen is formed by the lower surfaces 172 of the retention arms 162, 164. The lower surfaces 172 of the retention arms 162, 164 reside in substantially the same plane as the support surfaces 62, 64. In this regard, the height dimension of the closed lumen formed by the retention arms 162, 164 is smaller than the height dimension of the closed lumen formed by the retention arms 160, 166. By way of example only, not limitation, the height dimension of the closed lumen in this closed position may measure about 0.026 inch. With a 0.019 inch x 0.025 inch archwire, as described above, the orthodontic bracket 10 may actively ligate the archwire 18.

It will be appreciated that by adjusting the dimensions (e.g., the labial-lingual thickness) of each one of the pairs of retention arms 160, 166 and 162, 164 different height dimensions for the closed lumens formed in each of the corresponding closed positions may be obtained. Advantageously, the orthodontic bracket 10 may obviate the need to change archwires during treatment. A single archwire may be utilized during the initial stage of treatment in which passive ligation is desired. This may be obtained by rotating the rotatable member 14 to one closed position in which a closed lumen is larger in labial-lingual dimension than the archwire. Once treatment progresses to a point that active ligation would be beneficial, the clinician may rotate the rotatable member 14 to a second closed position in which the labial-lingual dimension of the closed lumen approximates the height dimension of the archwire 18 so as to actively ligating the archwire. The clinician need not change the archwire to produce active ligation.

With reference to Figs. 8-10 and 12-14, in conjunction with each of the closed positions, at which locations the locking mechanism 19 provides positive stops, the retention arms 160, 162, 164, 166 either actively ligate or passively ligate the archwire 18.

To that end, as described above, in one embodiment of the invention, the locking mechanism 19 may include one or more of the pins 20, 22, 24, 26 to releasably retain the rotatable member 14 in each of the closed positions and possibly in the opened position. The locking mechanism 19 may also include one or more features on the rotatable member 14 that interact with one or more of the pins 20, 22, 24, 26 in one or more of the closed positions and/or the opened position.

In the exemplary embodiment shown in Figs. 1 and 3, the outwardly-facing portion of the side wall 178 of the ligating portion 122 includes one or more non-planar portions. In the exemplary embodiment shown, the non-planar portions include four pockets that may resemble indentations 190, 192, 194, 196 in the side wall 178. The indentations 190, 192, 194, 196 may have a pocket-like configuration or other depression-like configuration that receives a portion of at least one of the pins 20, 22, 24, 26 during rotation of the rotatable member 14. The locking mechanism 19 may include additional indentions, such as, indentations 198 and 200, formed in the side wall 178, each of which is described below.

In one embodiment, the indentations 190, 192, 194, 196, 198, 200 are semi-circular discontinuities that may be about the same size or slightly larger in curvature than the curvature of the pins. These discontinuities are formed in the generally circular outer side wall 178 of the retention arms 160, 162, 164, 166. The indentations 190, 192 194, 196, 198, 200 may receive a portion of one of the pins 20, 22, 24, 26 during rotation of the rotatable member 14 thereby forming a positive stop in the rotation of the rotatable member 14. The positive stops coincide with each of the closed positions, and optionally the opened position as is described below.

According to another aspect of the invention, the orthodontic bracket 10 is assembled by inserting the rotatable member 14 into the cylindrical bore 80. The rod 28 is then inserted through the passageway 90. The rotatable member 14 may then be machined. In one embodiment of the invention, the lower surfaces 172 of retention arms 160, 162, 164, 166 may be machined after assembly of the orthodontic bracket 10. By way of example only, once the rotatable member 14 is inserted into the cylindrical bore 80 of the bracket body 12, the rotatable member 14 may be positioned in one of the closed positions. For example, the retention arms 160, 166 may be positioned over the archwire slot 16 (Figs. 8, 9, and 10). The rotatable member 14 may then be machined by passing a broach into or through the archwire slot 16 so as to remove material from the rotatable member 14, for example, particularly from the retention arms 160, 166 to form the lower surfaces 172 thereof.

The retention arms 162, 164 may be machined in a similar manner by first orienting the rotatable member 14 in the other closed position in which the retention arms 162, 164 are positioned over the archwire slot 16 (Figs. 12, 13, and 14). A broach of a different dimension may be inserted into or through the archwire slot 16 to remove material from each of the retention arms 162, 164 thereby forming the lower surfaces 172 of a different labial-lingual dimension from the base surface 54 than the lower surfaces 172 of the retention arms 160, 166. It will be appreciated that this machining process may produce very tight tolerance dimensions of the closed lumens for each of the closed positions of the rotatable member 14. For example, variation in labial-lingual dimension may vary by plus or minus 0.0005 inch, at most.

Orthodontic treatment with embodiments of the invention is described below. During orthodontic treatment, in accordance with an aspect of the invention, the locking mechanism 19 has multi-functional capabilities in regard to the rotatable member 14. More particularly, the multi-functional locking mechanism 19 is configured to not only rotationally secure the rotatable member 14 relative to the bracket body 12 such that the rotatable member 14 may not be inadvertently rotated, but also provide a discernible indication of the rotational position of the rotatable member 14 relative to the bracket body 12. The clinician may then associate the indication with one of the closed positions and optionally the opened position of the rotatable member 14.

In regard to the former point, the locking mechanism 19 provides one or more positive stops in the rotation of the rotatable member 14 relative to the bracket body 12. As used herein, a positive stop is where there is an interaction between the rotatable member 14 and the locking mechanism 19 such that a threshold level of force or a threshold level of torque must be applied to the rotatable member 14 for the rotatable member 14 to begin to rotate relative to the bracket body 12 in at least one direction (e.g., clockwise or counterclockwise). Of course, when the rotatable member 14 is positioned within the cylindrical bore 80 of the bracket body 12, there may a certain amount of friction between the two such that rotating the rotatable member 14 will require a certain amount of force or torque even in the absence of a positive stop feature. The threshold level of force or torque for defining a positive stop is intended to be greater than that required to overcome this type of friction between the rotatable member 14 and the bracket body 12.

In the exemplary embodiment shown, in the opened position shown in Figs. 1, 4, and 7B, pins 24 and 26 enter the indentations 198 and 200, respectively, so as to form a positive stop in the opened position. When the rotatable member 14 is in the opened position, retention arms 160, 164 generally extend in the mesial direction, and retention arms 162, 166 generally extend in the distal direction. The archwire slot 16 is therefore accessible along its entire mesial-distal length.

As the rotatable member 14 approaches the opened positions, the pins 24 and 26 enter the indentations 198 and 200, to spontaneously release their elastic energy. As shown in phantom line in Fig. 7B, the pin 24 is bent outwardly by the side wall 178 of the retention arm 160. When the indentation 198 aligns with the pin 24, the pin 24 straightens. The pins 24, 26 may therefore snap into position in the corresponding indentations 198 and 200. This release of elastic energy and corresponding straightening motion of the pins 24 and 26 as they return to an undeflected state or less bent orientation may produce an audible click or snap that may be heard by the clinician, as well as, a vibration that may be felt by the clinician.

While two pins 24, 26 are shown in Fig. 4 residing in respective indentations 198, 200, it will be appreciated that only a single pin may be sufficient to provide a positive stop and the associated audible and/or a tactile response. Advantageously, having two pins 24, 26 residing in corresponding indentations 198, 200 provides an operational redundancy to the locking mechanism 19. In the exemplary embodiment in which two pins are utilized, their entry into the corresponding indentations may be substantially simultaneous.

With reference specifically to Figs. 4 and 7A, the pin 20 may remain bent or elastically deflected by the side wall 178 of the retention arm 166. Pin 22 may also be bent outwardly by the side wall 178 of retention arm 164. That is, neither pin 20 nor pin 22 participates in forming a positive stop in the opened position. It will be appreciated that the rotatable member 14 may be rotated clockwise to the first closed position or counter clockwise by application of torque of a magnitude equal to or greater than the minimum threshold force to force the pins 24 and 26 from the corresponding indentations 198, 200. In other words, the rotational motion of the rotatable member 14 is reversible between any two of the positions disclosed herein.

When the rotatable member 14 is in the opened position, as shown in Fig. 4, with application of a minimum threshold force required to rotate the rotatable member 14 counterclockwise from the opened position, each of the pins 24 and 26 bends (shown in phantom line in Fig. 7B) as the corresponding indentation 198 and 200 rotates past the pins 24 and 26. The increased radial position of the side wall 178 pushes the pins 24 and 26 away from axis 81. At that position, all of the pins 20, 22, 24, 26 are bent and further application of torque on the rotatable member 14 may slide the side wall 178 of the retention arms 160, 162, 164, 166 while in contact with the pins 20, 22, 24, 26.

With continued forced counterclockwise rotation of the rotatable member 14, the retention arms 160 and 166 eventually extend over the archwire slot 16 as shown in

Figs. 8-10. The rotatable member 14 is thus positioned at a closed position at which location the pins 20 and 24 enter the indentations 190 and 194, respectively, so as to form a positive stop in this closed position. As described above, the retention arms 160, 166 may passively ligate an archwire when the rotatable member 14 is in this closed position.

With reference to Figs. 8 and 9, as the pins 20 and 24 enter the corresponding indentations 190 and 194, the pins 20 and 24 release their elastic energy and may snap into position in the corresponding indentations 190 and 194. This release of elastic energy and corresponding straightening motion of the pins 20 and 24 may produce an audible click that may be heard by the clinician, as well as, a vibration that may be felt by the clinician.

More specifically, with reference to Figs. 8, 9, and 10, the rotatable member 14 is shown in a closed position with retention arms 160 and 166 extending over the archwire slot 16 to retain the archwire 18. In this position, at least one of the pins 20, 22, 24, 26 resides in at least one of the indentations 190, 192, 194, 196. In the exemplary embodiment shown, pin 24 resides in indentation 194 and pin 20 resides in indentation 190. While two pins 20, 24 are shown residing in respective indentations 190, 194, it will be appreciated that a single pin residing in a single indentation may be sufficient to form a positive stop so as to retain the rotatable member 14 in the closed position shown. Advantageously, having two pins 20, 24 residing in corresponding indentations 190, 194 provide redundancy in the locking mechanism 19 and may enhance the magnitude of the tactile and/or audible response from the locking mechanism. Each of the remaining pins 22, 26 may contact the rotatable member 14 or may be positioned between the free ends 170 of the retention arms 160 and 164 and 162 and 166 and be in an undeformed, relaxed state, as shown.

As shown in Fig. 9, tabs 176 may resist further counterclockwise rotation by interfering with the pins 20, 24. In particular, the tabs 176 may project beyond the side wall 178 to a distance that creates a perceptible increase in resistance beyond the resistance associated with a positive stop of the locking mechanism 19. The clinician may then understand, due to the high level of resistance, that further counterclockwise rotation is prohibited. Because the force required to rotate the rotatable member 14 in the clockwise direction from the position shown in Fig. 9 is less, the clinician may properly conclude that clockwise rotation is the proper direction in which to rotate the rotatable member 14. In other words, the tabs 176 provide a noticeable level of resistance to rotations of greater than about 90° in either direction. In one embodiment, the rotatable member 14 may only be rotated a maximum of about 90° in either the clockwise or counterclockwise directions.

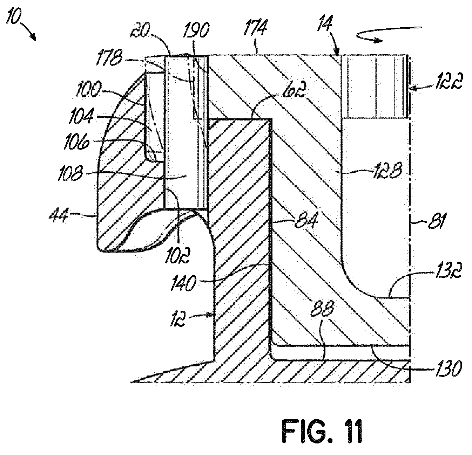

The rotatable member 14 may be rotated in a clockwise manner from that shown in Figs. 8 and 9 to a second closed position. To do so, as is shown in Fig. 11, the applied force causes the outer side wall 178 to push the pin 20 outward from the axis 81 so as to push the pin 20 out of the corresponding indentation 190. The elastic deflection of the pin 20 is shown in phantom line in Fig. 11. Although not shown, the same relative movement occurs between the pin 24 and the indentation 194.

Once each of the pins 20, 24 is deflected so as to slidably contact the outer side wall 178, during further rotation, all of the pins 20, 22, 24, 26 may be bent so as to slidably contact the outwardly-facing surface of the side wall 178 of each of the retention arms 160, 162, 164, 166. It will be appreciated that this sliding contact between the pins 20, 22, 24, 26 and side walls 178 may provide frictional resistance to rotation of the rotatable member 14. Absent continued application of force that exceeds the friction, the rotatable member 14 may remain stationary. Continued application of a rotational force greater than the frictional resistance between the pins 20, 22, 24, 26 and the ligating portion 122 will rotate the rotatable member 14 to an opened position, as is shown in Fig. 4. If a positive stop exists at this position, the locking mechanism 19 may provide an audible click and corresponding tactile response to indicate that the rotatable member 14 has reached the opened position.

With reference to Figs.12-14, further rotation of the rotatable member 14 in the clockwise direction moves the retention arms 162, 164 across the archwire slot 16 to a closed position. As described above, in this closed position, the retention arms 162, 164 may actively ligate the archwire 18 (Fig. 14). As shown in Figs. 12 and 13, when the rotatable member 14 is in a closed position, the locking mechanism 19 may provide a positive stop by interaction between the pins 22, 26 and indentations 192, 196, respectively. While two pins 22, 26 are shown residing in respective indentations 192, 196, it will be appreciated that a single pin residing in a single indentation may be sufficient to form a positive stop to retain the rotatable member 14 in the closed position shown. Advantageously, having two pins 22, 26 residing in corresponding indentations 192, 196 provide redundancy in the locking mechanism 19.

Each of the remaining pins 20, 24 may contact the rotatable member 14 or may be positioned between the free ends 170 of the retention arms 160 and 164 and 162 and 166 and be in an undeformed, relaxed state, as shown.

As shown in Fig. 13, tabs 176 may resist further clockwise rotation by interfering with the pins 22, 26. In particular, the tabs 176 may project beyond the side wall 178 to a distance that creates a perceptible increase in resistance beyond the resistance associated with a positive stop of the locking mechanism 19. The clinician may then understand that further clockwise rotation is prohibited. Because the force required to rotate the rotatable member 14 in the counterclockwise direction from the position shown in Fig. 13 is less than in the clockwise direction, the clinician may properly conclude that counterclockwise rotation is the proper direction in which to rotate the rotatable member 14 from this closed position.

In view of the above, the clinician may rotate the rotatable member 14 from one closed position shown in Fig. 8 (e.g., for passive ligation) to another closed position shown in Fig. 12 (e.g., for active ligation) by a clockwise or counterclockwise rotation in which the orthodontic bracket 10 produces two audible clicks and/or two tactile responses from one closed position to the other closed position. That is, one click/response when the rotatable member 14 is rotated to the opened position (shown in Fig. 4) and another click/response when the rotatable member 14 is rotated to the other closed position. With a click-click type of response from the locking mechanism 19, the clinician may be assured that the rotatable member 14 has been successfully rotated (clockwise or counterclockwise) from one closed position to the other closed position.

During treatment, the large majority of the load from the archwire 18 on the rotatable member 14 is transferred to the bracket body 12 via the rod 28. The rod 28 may elastically flex or bend (as is shown in Fig. 6) to allow the rotatable member 14 to move axially along axis 81 relative to the bracket body 12. By way of example, the rotatable member 14 may move axially by up to 0.006 inch. However, a very small portion or none of the forces from the archwire 18 are transferred to the locking mechanism 19 because of the orientation of the locking mechanism 19 relative to the applied load. For example, the axis of the pins 20, 22, 24, 26 is generally parallel to the direction of the load on the rotatable member 14. The indentations 190, 192, 194, 196, 198, 200 are also oriented in a manner that inhibits force transfer between the rotatable member 14 and the bracket body 12. In embodiments of the invention, loads from the archwire 18 on the rotatable member 14 may not affect the locking mechanism 19, even though the rotatable member 14 shifts along the axis 81. It is therefore unlikely that the rotatable member 14 inadvertently rotates during treatment.

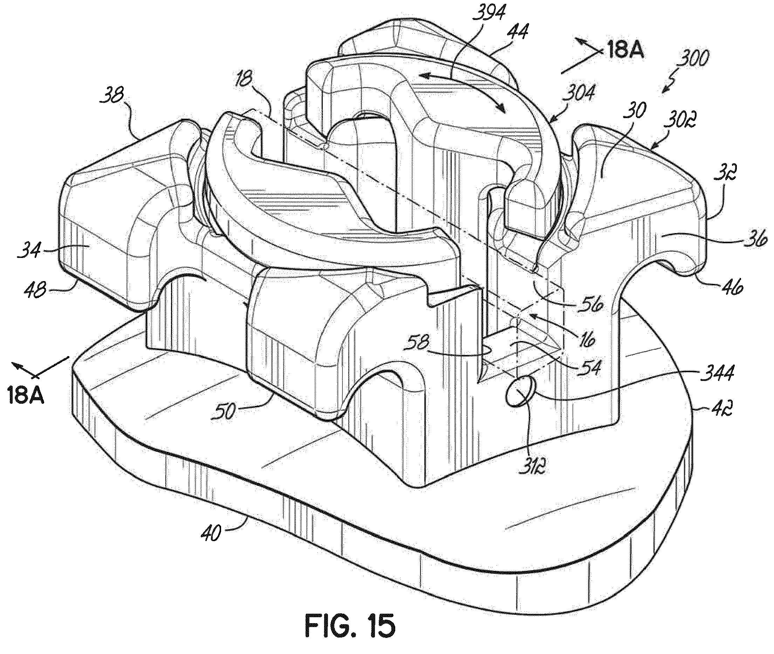

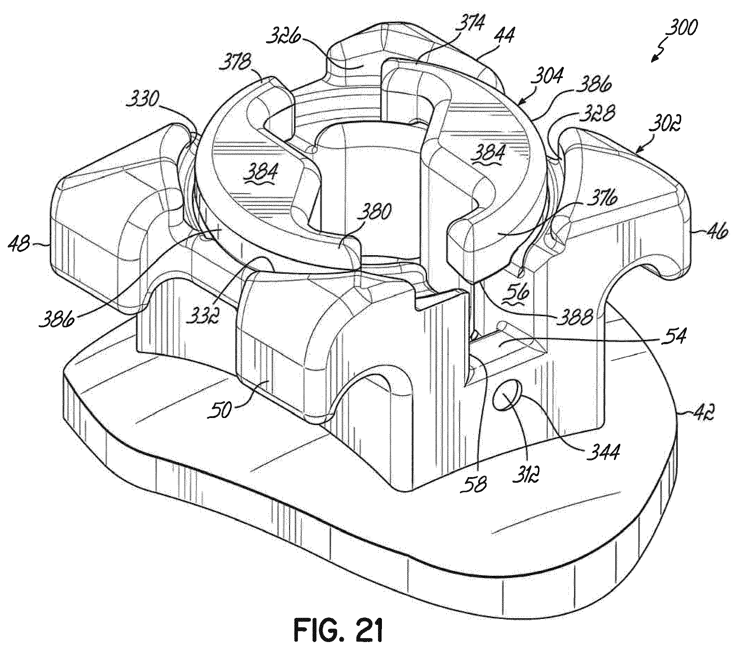

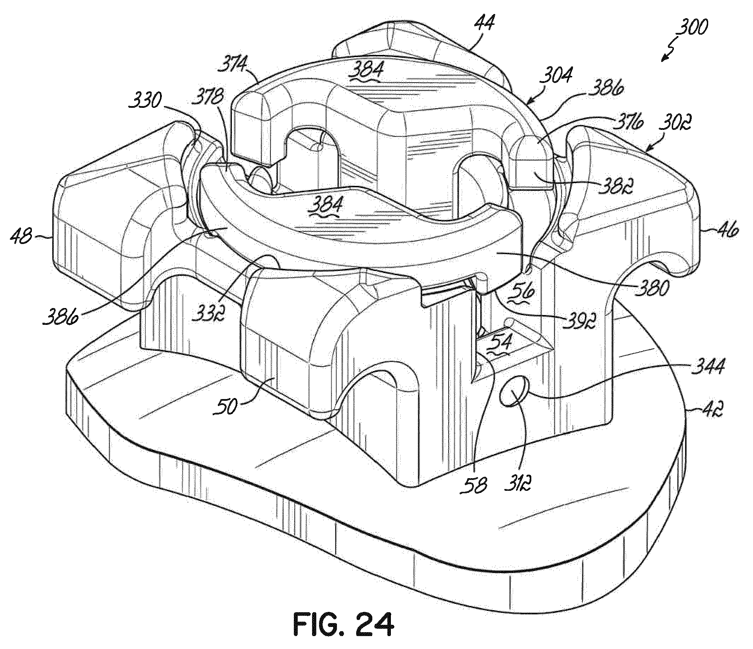

In an alternative embodiment, and with reference to Figs. 15-26, in which like reference numerals refer to like elements throughout the figures, an orthodontic bracket 300 includes a bracket body 302 similar to the bracket body 12 and a rotatable member 304 similar to rotatable member 14, described above. The rotatable member 304 is rotatable relative to the bracket body 302 from an opened position (Figs. 15, 19, and 20) in which the archwire 18 is insertable into the archwire slot 16, to a first closed position (Figs. 21, 22, and 23) in which the archwire 18 is retained within a closed lumen defined by the archwire slot 16 and the rotatable member 304, and to a second closed position (Figs. 24, 25, and 26) in which the archwire 18 is retained within another closed lumen defined by the archwire slot 16 and a different portion of the rotatable member 304.

As is described below, the dimensions of each of the closed lumens defined by the rotatable member 304 between each of the first closed position and the second closed position may be different. In this regard, in one closed position, the rotatable member 304 forms a large lumen relative to the archwire 18. This lumen is larger in one or more dimensions relative to the archwire 18 such that there is a clearance between the lumen and the archwire 18. In this position, the orthodontic bracket 300 passively ligates the archwire 18.

And, in the other closed position, the rotatable member 304 forms a smaller lumen relative to the archwire 18. This smaller lumen more closely approximates the dimensions of the archwire 18 than the large lumen such that there may be little or no clearance between the lumen and the archwire 18 in one or more directions. In this position, the orthodontic bracket 300 actively ligates the archwire 18. Advantageously, by virtue of the two closed positions, the orthodontic bracket 300 may provide both passive and active ligation on a given archwire as is described above with reference to the orthodontic bracket 10 shown in Figs. 1-14.

In addition, the orthodontic bracket 300 includes a locking mechanism 306 that is similar to the locking mechanism 19 but differs in structural configuration. While differing in structural configuration, the locking mechanism 306 has similar functions. That is, for example, to not only movably secure the rotatable member 304 in each of the closed positions and, optionally, in an opened position, but to provide an audible and/or tactile sensation as an indication that the rotatable member 304 is in one of the opened or closed positions. In the exemplary embodiment shown, the locking mechanism 306 may be in the form of one or more pins 308, 310 that slidably engage the rotatable member 304 in one or more of these positions.

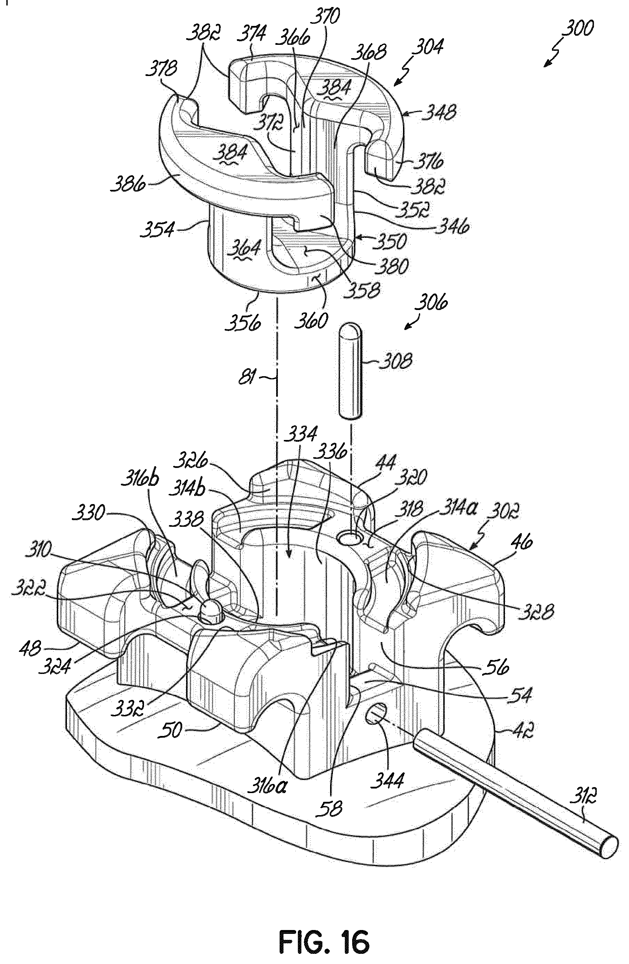

To these and other ends, and with reference to Figs. 15 and 16, in one embodiment, the orthodontic bracket 300 further includes a retention member 312 similar to the retention member 28 for coupling the rotatable member 304 to the bracket body 302. In one exemplary embodiment, the retention member 312 may be a solid titanium or NiTi pin that is coupled to the bracket body 302 and that slidably engages the rotatable member 304.

As with the retention member 28, the retention member 312 is oriented perpendicular to force transferred from the archwire 18 to the rotatable member 304. In this regard, the longitudinal axis of the retention member 312 is oriented perpendicular to the locking mechanism 306, which in the exemplary embodiment includes one or both pins 308, 310. For example, the retention member 312 may be oriented in a mesial-distal direction, as shown, or in an occlusal-gingival direction. More specifically, the retention member 312 may be positioned in a plane generally parallel to a plane of the base surface 54 of the archwire slot 16 and/or in a plane generally parallel with a tangent of the adjacent tooth surface. In this regard, the retention member 312 transfers loads from the rotatable member 304 to the bracket body 302 and consequently to the tooth during orthodontic treatment. As a result of the orientation of the retention member 312, one or both of the pins 308, 310 may bear little, if any, of the load from the archwire 18 by virtue of their relative orientation to the retention member 312.

With reference to Fig. 16, the bracket body 302 further includes a planar support surface 318 extending in a generally gingival-occlusal direction from the slot surface 56. A pair of slide engagement tracks 314a and 314b extends in a generally gingival-occlusal direction from slot surface 56 proximate the mesial and distal sides, respectively, of the bracket body 302. The slide engagement tracks 314a and 314b are recessed (e.g., positioned lingually) into the bracket body 302 from the planar support surface 318. A bore 320 in the planar support surface 318 receives the pin 308. The pin 308 extends above the planar support surface 318 from the bore 320 to interact with the rotatable member 304, as is described below, to form a portion of the locking mechanism 306.

On the opposing side of the archwire slot 16, a generally planar support surface 322 extends in a generally gingival-occlusal direction from the slot surface 58. A pair of slide engagement tracks 316a and 316b extends in a generally gingival-occlusal direction from the slot surface 58 proximate the mesial and distal sides, respectively, of the bracket body 302. The slide engagement tracks 316a and 316b are recessed (e.g., positioned lingually) into the planar support surface 322. A bore 324 in the planar support surface 322 receives the pin 310. The pin 310 extends above the support surface 322 from the bore 324 to interact with the rotatable member 304, as is described below, to form a portion of the locking mechanism 306. The pins 308, 310 may be secured within the respective bore 320, 324 by staking, by welding, or with an adhesive or by other means known in the art.

Each of the engagement tracks 314a, 314b, 316a, 316b and planar support surfaces 318, 322 is recessed below the labial side 30 of the bracket body 302 so as to define gingivally-facing bounding walls 326, 328 on tie wings 44, 46, and occlusally-facing bounding walls 330, 332 on tie wings 48, 50. The area between the bounding walls 326, 328, 330, 332 defines a recessed space configured to receive the rotatable member 304 such that the labial surface of the rotatable member 304 may not extend beyond the labial side 30 of the bracket body 302. More particularly, in one embodiment, the labial surface of the rotatable member 304 may be generally coplanar (e.g., flush) with the labial side 30 of the bracket body 302 for patient comfort. However, the labial surface of the rotatable member 304 may be below the labial side 30 of the bracket body 302 in an alternative embodiment.

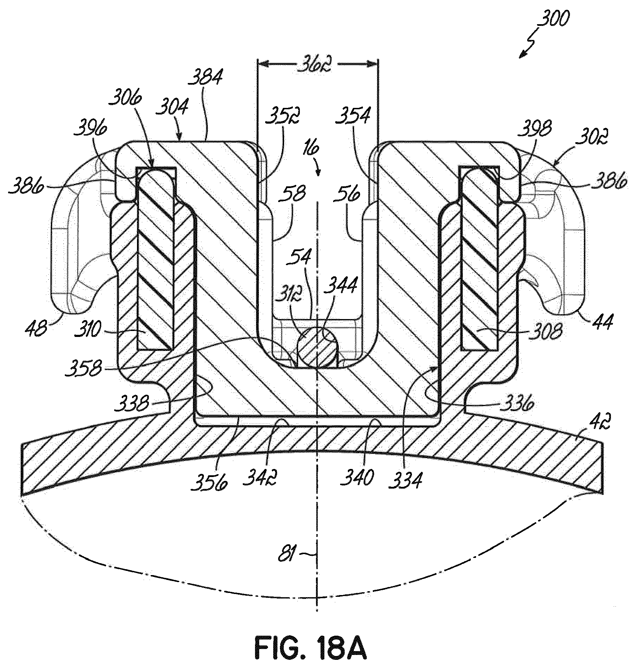

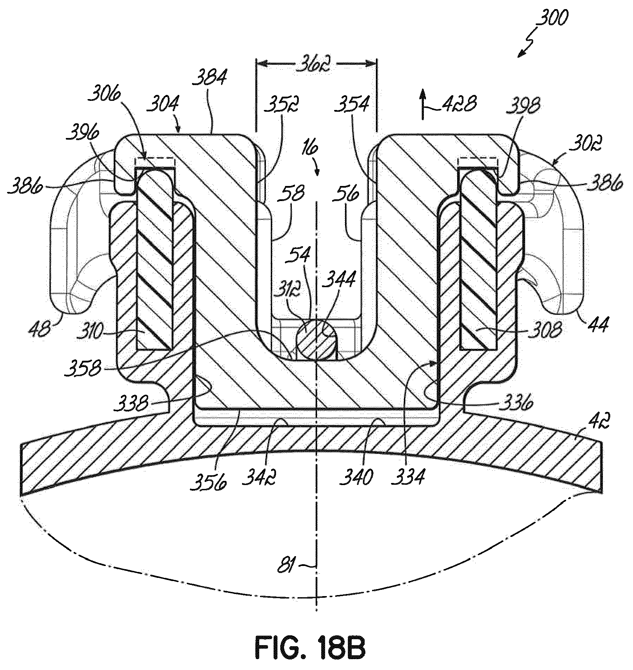

With reference to Figs. 16, 18A, and 18B to receive the rotatable member 304, the bracket body 302 includes a generally cylindrical bore 334. The cylindrical bore 334 defines the central axis 81 and may intersect the archwire slot 16 approximately at its geometric center. The cylindrical bore 334 may intercept the archwire slot 16 in a substantially perpendicular manner. The cross dimension of the cylindrical bore 334 is generally greater than the gingival-occlusal height of the archwire slot 16 such that the bore 334 forms a generally arcuate first bore portion 336 on the occlusal side of the archwire slot 16 and having a depth defined by the slot surface 56, and a generally arcuate second bore portion 338 on the gingival side of the archwire slot 16 and having a depth defined by the slot surface 58. The first and second bore portions 336, 338 are separated from each other by the archwire slot 16.

The cylindrical bore 334 penetrates into the bracket body 302 to a depth greater than the depth of the archwire slot 16, shown best in Figs. 18A and 18B, thereby forming a third bore portion 340. The cylindrical bore 334 may be a blind bore, being closed off by a base or bottom surface 342, which in the exemplary embodiment is formed by pad 42. The depth of the third bore portion 340 may be determined by the distance between the bottom surface 342 and the base surface 54 of the archwire slot 16. While the cylindrical bore 334 has been described herein as a blind bore, it should be recognized that in alternative embodiments, the bore 334 may be a through-bore penetrating the bracket body 302.

As shown in Figs. 16, 18A, and 18B, the bracket body 302 includes one or more channels or passageways 344 that receive a portion of the retention member 312 for securing the rotatable member 304 to the bracket body 302. The passageway 344 is open to at least one of the mesial and distal sides 36, 38 and extends substantially parallel to the archwire slot 16 (e.g., in the mesial-distal direction). For example, in one embodiment, the passageway 344 may be open to only one of the mesial or distal sides 36, 38 of the bracket body 302 and be closed off opposite the open side. Alternatively, the passageway 344 may be open to both the mesial and distal sides 36, 38 of the bracket body 302 so as to present a through-channel. In an exemplary embodiment, the passageway 344 penetrates the bracket body 302 so as to be generally positioned lingually of the archwire slot 16 such that the passageway 344 does not intersect the archwire slot 16. Although not shown, the passageway 344 may extend in an occlusal-gingival direction and be open to at least one of the occlusal and gingival sides 32, 34.

In one embodiment of the invention and as is shown in Figs. 18A and 18B, the passageway 344 is configured to intersect with the cylindrical bore 334 such that the passageway 344 and the bore 334 are open to each other. More particularly, in an exemplary embodiment, since the passageway 344 is generally positioned between the archwire slot 16 and the pad 42, the passageway 344 may intersect with the third bore portion 340 of the cylindrical bore 334.

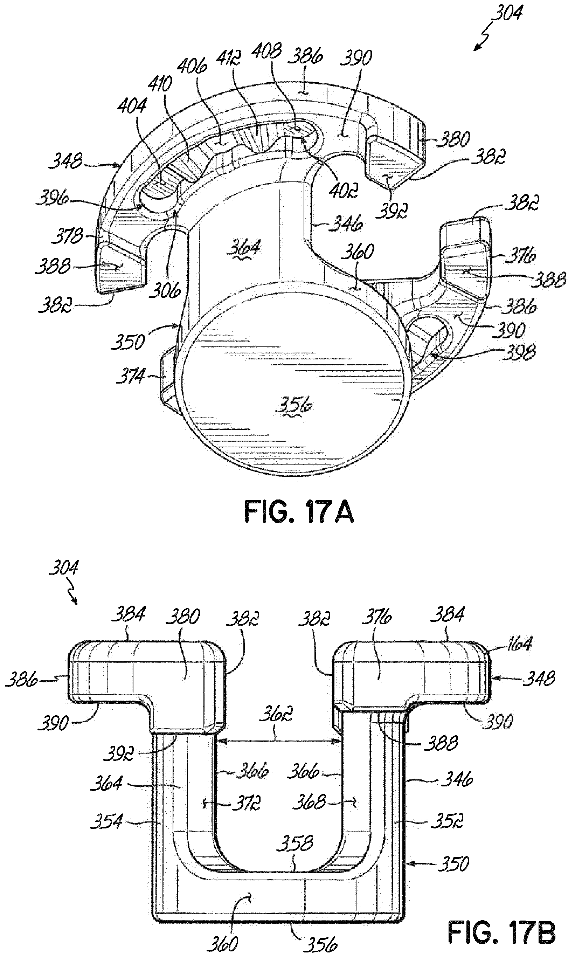

As illustrated in Figs.16 and 17A-17C, the rotatable member 304 comprises a generally cylindrical retaining portion 346 that fits in the cylindrical bore 334 of the bracket body 302, and a ligating portion 348 that ligates the archwire 18 (e.g., actively and/or passively) when the rotatable member 304 is in one of the closed position(s) (e.g., shown in Figs. 21 and 24). In one embodiment, the cylindrical retaining portion 346 includes a generally cylindrical base 350 and a pair of spaced-apart columns or studs 352, 354. The cylindrical base 350 is generally disc-shaped and includes a lower surface 356, an upper surface 358, and a side wall 360 extending therebetween. The cylindrical base 350 fits in the third bore portion 340 (shown in Figs. 18A and 18B) of the bore 334.

With reference to Figs. 17B, 18A, and 18B, in one embodiment, the upper surface 358 may be generally planar and substantially flush with the bottom surface of the retention member 312 when it is inserted through the passageways 344 and the rotatable member 304 is positioned in the bore 334. The retention member 312 therefore retains the rotatable member 304 within the bracket body 302. Although the lower surface 356 is shown as being planar, it may be generally non-planar. The shape of the cylindrical base 350 is such that the rotatable member 304 may rotate within the cylindrical bore 334 between the opened and closed positions without interference between the cylindrical base 350 and a portion of the third bore portion 340. Additionally, the cylindrical base 350 is sized (e.g., cross dimension, diameter) just slightly under the size of the cylindrical bore 334.

With reference to Figs. 16, 17B, 18A, and 18B, the studs 352, 354 generally extend upwardly (e.g., labially) from the upper surface 358 of the cylindrical base 350 in a generally perpendicular manner and are arranged such that there is an opening or gap 362 between the two studs 352, 354. The size of the gap 362 may vary, but is such that when the rotatable member 304 is in the opened position, there is an unobstructed path for the archwire 18 to be inserted into the archwire slot 16 and between the two studs 352 and 354.

With reference to Figs. 17A and 17B, each stud 352, 354 includes an outer surface 364 having a generally arcuate configuration such that the outer surface 364 is smooth and continuous with the side wall 360 of the cylindrical base 350 (e.g., it is an extension of the cylindrical configuration of the base 350). The arcuate outer surface 364 of the studs 352, 354 generally confronts the first and second bore portions 336, 338, as is shown in Fig. 18A.

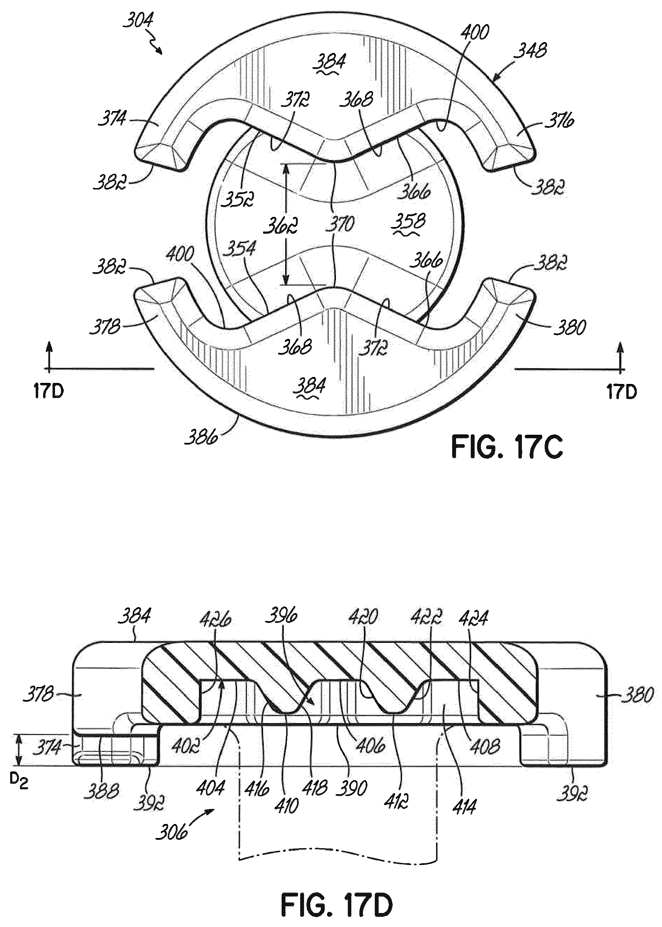

With reference to Fig. 17C, each stud 352, 354 further includes an inner surface 366, a portion of which is configured to confront the archwire 18. In an exemplary embodiment, the inner surface 366 is specifically designed or contoured so as provide multiple rotational positions of the rotatable member 304 relative to the bracket body 302 (and the archwire slot 16 more specifically) for which the archwire 18 may pass between the two studs 352, 354 without significant interference of being blocked.

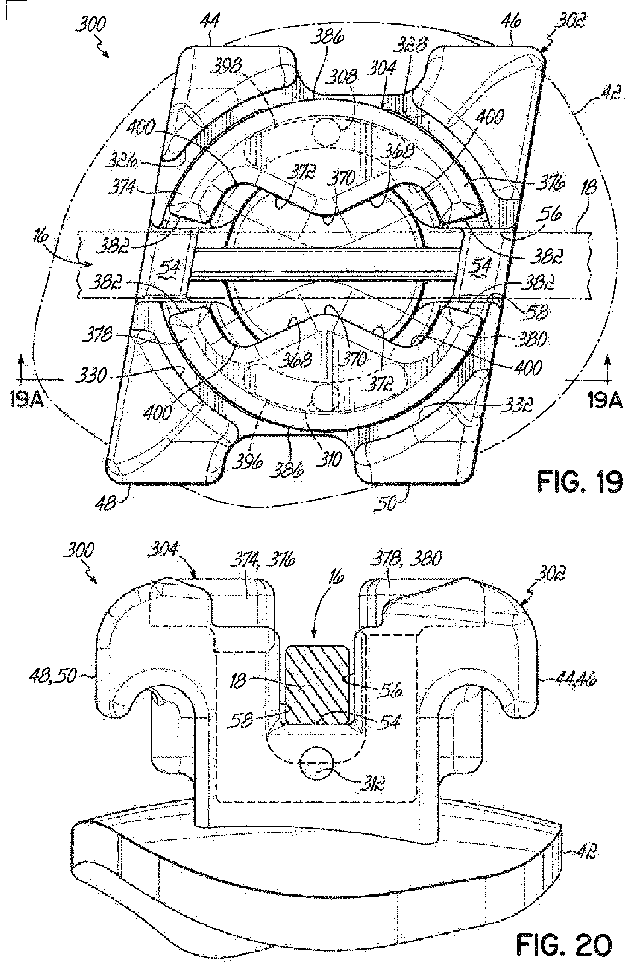

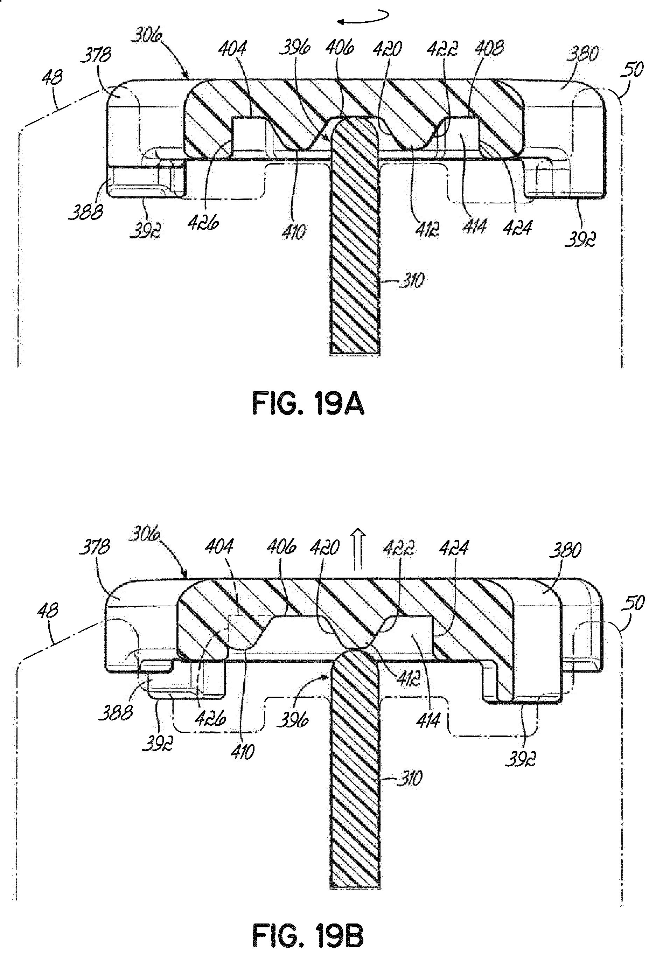

In this regard and with reference to Figs. 17C and 19, in one embodiment, the inner surface 366 of each of the studs 352, 354 may include a first surface portion 368, an intermediate second surface portion 370, and a third surface portion 372. In one embodiment, the second surface portions 370 may be generally arcuate and each of the first and third surface portions 368, 372 may be generally planar. The surface portions 368, 370, 372 on stud 352 are arranged generally to face in a direction opposite to the surface portions 368, 370, 372 of the other stud 354. With reference specifically to Fig. 19, the surface portions 368, 370, 372 of the opposing inner surfaces 366 may be configured such that, in the opened position (as shown), each surface portions 368, 370, 372 generally confronts the archwire 18 in the archwire slot 16.

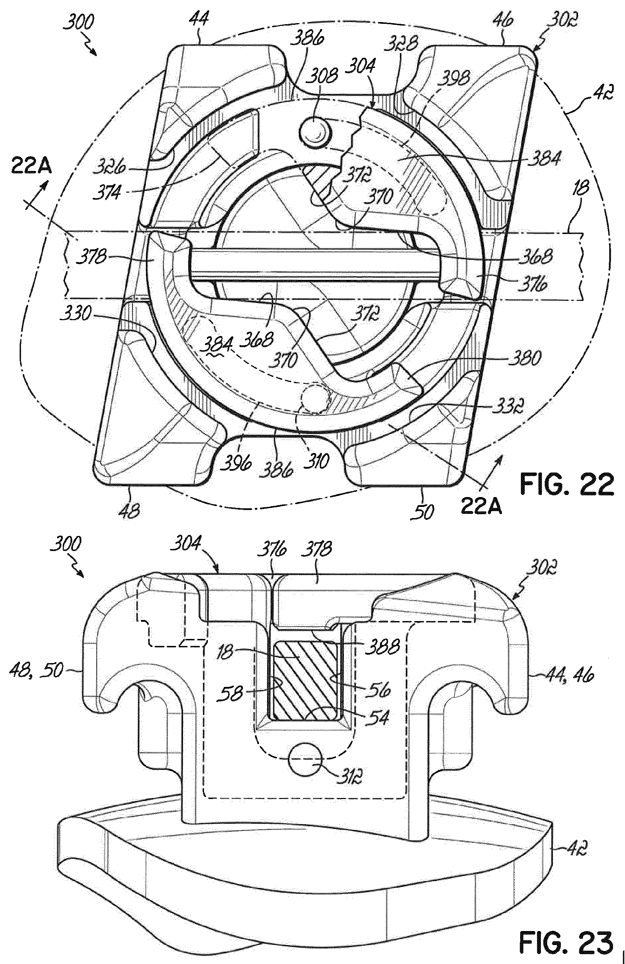

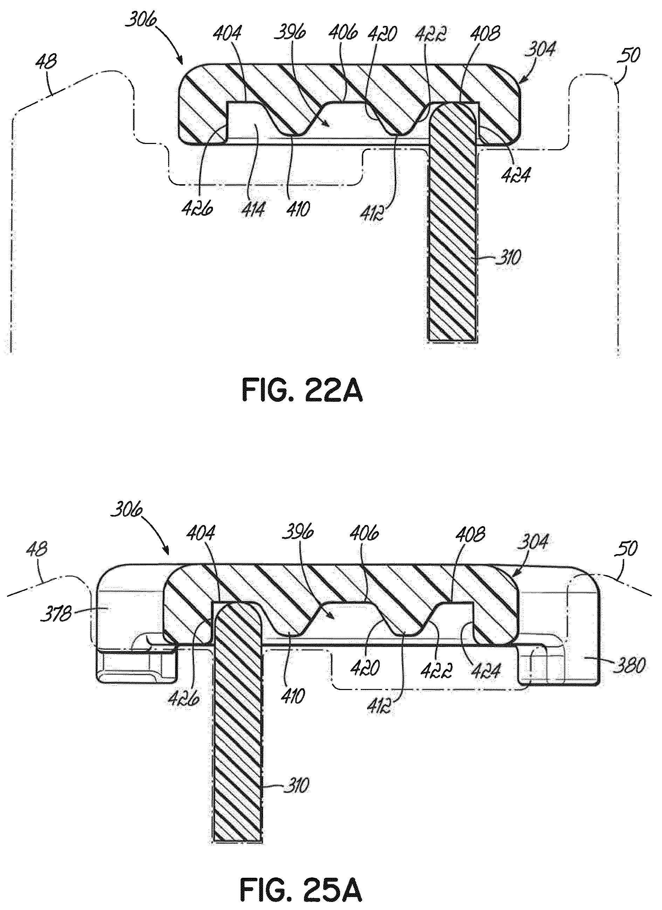

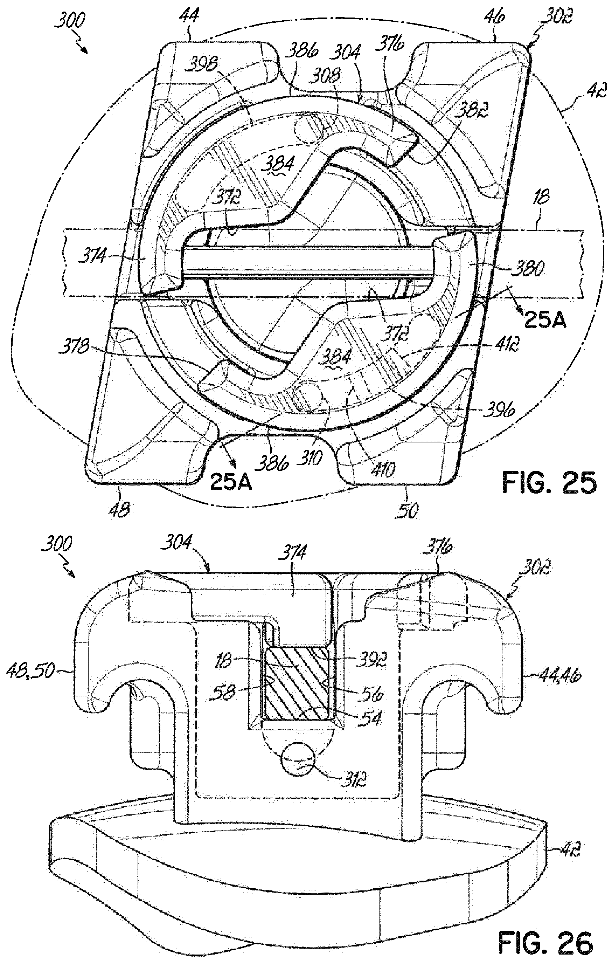

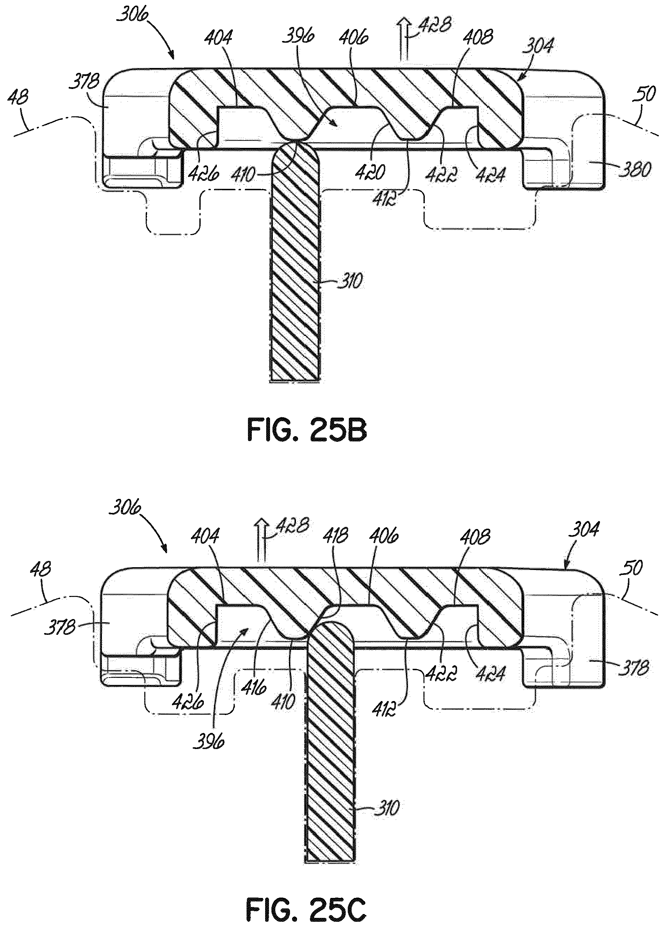

In the closed positions, shown for example in Figs. 22 and 25, the surface portions 368 and 372 may be generally planar and further configured so as to be generally co-planar with the slot surfaces 56, 58 when in a closed position. The first surface portions 368 of the inner surface 366 may be configured such that in one of the closed positions (e.g., the active ligating position), the first surface portions 368 generally confront the archwire 18 in the archwire slot 16 (Fig. 22). The third surface portion 372 of the inner surface 366 may be configured such that in one of the closed positions (e.g., the passive ligating position), the third surface portion 372 of the inner surface 366 of each of the studs 352, 354 may generally confront the archwire 18 in the archwire slot 16 (Fig. 25).

With reference to Figs. 16 and 17A-17C, the ligating portion 348 of the rotatable member 304 includes a first pair of retention arms 374, 376 and a second pair of retention arms 378, 380 extending from the studs 352, 354, respectively, in a transverse manner. The retention arms 374, 376, 378, 380 are generally parallel to the upper surface 358 of the cylindrical base 350 and are arranged on their respective studs 352, 354 with each terminating in a free end 382. As shown best in Fig. 17C, the retention arms 374 and 376 extend from the stud 352 so as to form a semi-circular shaped portion of the ligating portion 348. Similarly, the retention arms 378 and 380 extend from the stud 354 so as to form a single semi-circular shaped portion of the ligating portion 348 separated from the opposing semi-circular shaped extension by the gap 362. Collectively, the retention arms 374, 376, 378, 380 may define a generally circular periphery. As shown in Fig. 17A and 17B, each of the retention arms 374, 376, 378, 380 includes an upper surface 384; multiple lower surfaces 388, 390, 392; and a side wall 386 extending between upper surface 384 and lower surfaces 388, 390, 392.

In one embodiment, the lower surfaces 388 and 392 of retention arms 376 and 380, respectively, while being planar, do not all reside in the same plane (shown best in Fig. 17B). The lower surfaces 392 of retention arms 374 and 380 are closer to the base surface 54 of the archwire slot 16 than the lower surfaces 388 of the retention arms 376 and 378 by virtue of the increased labial-lingual thickness of the retention arms 376 and 380. This variation in thickness between pairs of retention arms provides different closed lumen dimensions for active ligation and passive ligation, as is described below.

Further in this regard and with reference to Fig. 17D, the thicknesses of a least a portion of the retention arms 376, 378 differ from the thicknesses of the retention arms 374, 380. The difference in dimension may be measured between the upper surface 384 and the lower surfaces 388 and 392 and labeled "D2." By way of example, D2 may measure from about 0.0017 inch to about 0.0021 inch, though other dimensional differences may be utilized depending on the dimensions of the archwire 18.

In view of the difference in thicknesses, the dimension of the closed lumen formed by the retention arms 376, 378 and the base surface 54 and opposed slot surfaces 56, 58 is different from the dimension of the closed lumen formed by the retention arms 374, 380 and the base surface 54 and opposed slot surfaces 56, 58. In particular, a labial-lingual dimension of the archwire slot 16, as is defined between the base surface 54 and the lower surface 388 of the retention arms 376, 378, differs from the labial-lingual dimension of the archwire slot 16, as is defined between the base surface 54 and the lower surface 392 of the retention arms 374, 380. By way of example only, with reference to Fig. 23, the labial-lingual dimension of the closed lumen in the closed position may measure about 0.028 inch. When the archwire 18 is a 0.019 inch x 0.025 inch archwire, the orthodontic bracket 10 may passively ligate the archwire 18. The labial-lingual dimension of the closed lumen formed by the retention arms 376, 378 is larger than the labial-lingual dimension of the closed lumen formed by the retention arms 374, 380, as is shown in Fig. 26.

In Fig. 26, the retention arms 374, 380 extend over the archwire slot 16 to retain the archwire 18 therein. The closed lumen is formed by the lower surfaces 392 of the retention arms 374, 380. By way of example only, not limitation, the labial-lingual dimension of the closed lumen in this closed position may measure about 0.026 inch. With a 0.019 inch x 0.025 inch archwire, the orthodontic bracket 10 may actively ligate the archwire 18.

With reference to Figs. 16 and 17A, the lower surface 390 of each of the retention arms 374, 376, 378, 380 may be offset from each of the lower surfaces 388 and 392 described above. The surfaces 390 of the retention arms 374, 376, 378, 380 may slidably contact the corresponding planar support surfaces 318 and 322.

The slide engagement tracks 314a and 314b may be offset from the planar support surface 318 to different depths. The difference in depth may be equivalent to the difference in thicknesses between the corresponding retention arms 376 and 374. Specifically, the slide engagement track 314b may be offset (i.e., positioned lingually) to a greater depth from the support surface 318 to accommodate the relatively thicker retention arm 374. A similar configuration may also exist with the slide engagement tracks 316a and 316b.

Specifically, the sliding engagement track 316a may be recessed further from the support surface 322 than the slide engagement track 316b. This offset may correspond to the difference in thickness between the retention arms 378 and 380. Further, as a result, the surfaces 390 of retention arms 374, 376, 378, 380 may confront but are spaced labially from the slide engagement tracks 314a, 314b, 316a, 316b in one or both of the closed positions and in the opened position.

With continued reference to Figs. 17A, 17D, and 18A, in one embodiment, a slot 396 is formed in the lower surface 390 of the pair of retention arms 378, 380 and a slot 398 is formed in the lower surface 390 of the pair of retention arms 374, 376. Slots 396, 398 are disposed in the lower surfaces 390 of the rotatable member 304 to receive the corresponding pin 308, 310 during assembly. In the exemplary embodiment, the locking mechanism 306 may be formed by at least the interaction of the slots 396, 398, with the pins 308, 310. The slots 396, 398 form one or more positive stops to relative movement between the pins 308, 310 and the rotatable member 304. These positive stops may coincide with one or more of the opened position and the closed positions as described below.

To that end, each slot 396, 398 may include an uneven, non-planar surface 402 defined by a side wall 414. Each side wall 414 includes ends 424, 426 that abut the pins 308, 310, as is described below, to stop rotational movement of the rotatable member 304. The slots 396, 398 slidably engage the pins 308, 310 during rotation of the rotatable member 304 between the opened position and closed positions to form positive stops.

In one exemplary embodiment shown in Fig. 17D, the non-planar surface 402 has three portions 404, 406, and 408 separated by two ridge-like portions 410 and 412. Each of the portions 404, 406, and 408 may thus have a pocket-like configuration that is surrounded on two or more sides by the side wall 414 and by one or both of the ridges 410 and 412. In one embodiment, the portions 404, 406, and 408 include generally planar surfaces that generally reside in the same plane. The ridges 410, 412 project from (i.e., extend lingually relative to) that plane to define discontinuities in the non-planar surface 402 between each portion 404, 406, 408. Each of the ridges 410, 412 may include a ramp portion that transitions the non-planar surface 402 from the adjacent portion 404, 406, 408 to the peak of the ridge-like portion 410, 412.

Specifically, in the exemplary embodiment, the central planar portion 404 and the planar portion 406 are separated by the ridge 410 and the central planar portion 406 and the planar portion 408 are separated by the ridge 412. The ridges 410 and 412 include corresponding mesial and distal ramps 416, 418 and 420, 422. In one embodiment, the relative position between the pins 308, 310 and each of the corresponding three planar portions 404, 406 and 408 defines one of the closed positions or the opened position, as is described below. In particular, the pins 308 therefore slidably engage at least the walls ends 424 and 426 and the ridges 410, 412 of the non-planar surface 402 during rotational movement of the rotatable member 304 to define positive stops for the closed and/or opened positions.

With further reference to Fig. 17C, the inwardly-facing portion of the side wall 386 of each of the retention arms 374, 376, 378, 380 may include a notch or arcuate region 400. The arcuate regions 400 may define a tool receptacle that receives a tool (not shown) to facilitate rotation of the rotatable member 304 in a relatively simplified manner. For example, a tool (e.g., a small flat-head screw driver) may be inserted into contact with the regions 400 to forcibly rotate the rotatable member 304 in a clockwise direction and in a counterclockwise direction.

The outwardly-facing portion of the side wall 386 of each of the retention arms 374, 376, 378, 380 may define a generally circular periphery that approximates but is sized to be spaced apart from an inwardly-facing periphery defined by the bounding walls 326, 328, 330, 332, as is shown in Fig. 15 when the rotatable member 304 is inserted into the cylindrical bore 334 of the bracket body 302.

According to another aspect of the present invention, the orthodontic bracket 300 is assembled by inserting the rotatable member 304 into the cylindrical bore 334. The retention member 312 is then inserted through the passageway 344. Once assembled, the rotatable member 304 may be machined.

In one embodiment of the invention, lower surfaces 388 and 392 of retention arms 374, 376, 378, 380 are machined after assembly of the orthodontic bracket 300. By way of example only, once the rotatable member 304 is inserted into the cylindrical bore 334 of the bracket body 302, the rotatable member 304 may be positioned in one of the closed positions. For example, the retention arms 376, 378 may be positioned over the archwire slot 16 (shown, for example, in Fig. 23). The rotatable member 304 may then be machined by passing a broach into or through the archwire slot 16 so as to remove material from at least the rotatable member 304, particularly from the retention arms 376, 378 to form the lower surfaces 388 thereof.

The retention arms 374, 380 may be machined in a similar manner by first orienting the rotatable member 304 in the other closed position in which the retention arms 378, 380 are positioned over the archwire slot 16 (shown, for example, in Fig. 26). A broach of a different dimension may be inserted into or through the archwire slot 16 so as to remove material from at least each of the retention arms 378, 380 thereby forming the lower surfaces 392 of a different labial-lingual dimension from the base surface 54 than the lower surfaces 388 of the retention arms 376, 378. It will be appreciated that this machining process may produce very tight tolerance dimensions of the closed lumens for each of the closed positions of the rotatable member 304. For example, variation in labial-lingual dimension may vary by plus or minus 0.0005 inch at most. While machining is described after assembly of the rotatable member 304 with the bracket body 302, it will be appreciated that one or both of the rotatable member 304 and the bracket body 302 may be machined prior to assembly.

Orthodontic treatment with the exemplary embodiment of the invention is now described. With reference to Fig. 15, during orthodontic treatment, the rotatable member 304 is rotatable in each of the clockwise and counterclockwise directions as is indicated by arrow 394. By rotation in either of these directions from the opened position, as shown, pairs of retention arms are moved across the archwire slot 16 so as to oppose the base surface 54 and form a closed lumen in which the archwire 18 is held within the archwire slot 16.

In accordance with an aspect of the invention, the locking mechanism 306 has multi-functional capabilities. More particularly, the locking mechanism 306 is configured to not only rotationally secure the rotatable member 304 relative to the bracket body 302 such that the rotatable member 304 may not be inadvertently rotated during treatment, but also provide a discernible indication of the rotational position of the rotatable member 304 relative to the bracket body 302.

In regard to the former point, the locking mechanism 306 provides one or more positive stops in the rotation of the rotatable member 304 relative to the bracket body 302. Of course when the rotatable member 304 is positioned within the cylindrical bore 334 of the bracket body 302, there may a certain amount of friction between the two and/or between the retention member 312 and the rotatable member 304 such that rotating the rotatable member 304 will require a certain amount of force or torque even in the absence of a positive stop. The threshold level of force or torque for defining a positive stop is intended to be greater than that required to overcome this type of friction between the rotatable member 304 and the bracket body 302.

As described above, the locking mechanism 306 includes pins 308 and 310 to releasably retain the rotatable member 304 in each of the closed positions and possibly in the opened position. The locking mechanism 306 also includes slots 396 or 398 in the surface 390 of one of the pairs of retention arms 374, 380 or 376, 378. The slots 396, 398 may receive a portion of one of the pins 308, 310 during rotation of the rotatable member 304. The pins 308, 310 interact with the uneven surface 402 to form at least one positive stop in the rotation of the rotatable member 304. The positive stops coincide with each of the closed positions, and optionally a positive stop may also coincide with the opened position. The orientation of the pins 308, 310 may also prevent or reduce inadvertent rotational movement of the rotatable member 304 during treatment.

In that regard, forces from the archwire 18 on the rotatable member 304 may not be transferred to the locking mechanism 306. The rotatable member 304 is therefore more likely to remain in one of the closed positions during treatment. The majority of the load from the archwire 18 on the rotatable member 304 may be transferred to the bracket body 302 via the retention member 312. The retention member 312 may elastically flex (as is shown in Fig. 18A in comparison with Fig. 18B) to allow the rotatable member 304 to move axially along axis 81 relative to the bracket body 302. By way of example, the rotatable member 304 may move axially by up to about 0.006 inch. However, a very small portion or none of the forces from the archwire 18 are transferred to the locking mechanism 306 because the axis of each of the pins 308, 310 is generally parallel to any labial movement of the rotatable member 304 along axis 81. Loads from the archwire 18 on the rotatable member 304 may, therefore, not affect the locking mechanism 306, and the rotatable member 304 is unlikely to inadvertently rotate when the orthodontic bracket 300 is in use.

Further, during treatment, in the exemplary embodiment shown in Figs. 15, 19, 19A, and 20, the pins 308 and 310 reside between in the ridges 410 and 412 when the rotatable member 314 is in the opened position. As is shown best in Fig. 19A, the ridges 410 and 412 are positioned to interfere with the pins 308, 310 to form a positive stop with the rotatable member 304 in the opened position. That is, in this position, the locking mechanism 306 resists rotational movement of the rotatable member 304 in the clockwise and the counterclockwise directions. The pin 310 in conjunction with the ridge 410 resists rotation of the rotatable member 304 in the counterclockwise direction, and the pin 310 in conjunction with the ridge 412 resists rotation of the rotatable member 304 in the clockwise direction. In this sense, the locking mechanism 306 provides a positive stop in the opened position. It will be appreciated that the same configuration exists with respect to the pin 308 and the slot 398.

With continued reference to Figs. 19 and 20, when the rotatable member 304 is in the opened position, retention arms 376, 380 generally extend in the mesial direction, and retention arms 374, 378 generally extend in the distal direction. The archwire slot 16 is therefore accessible along its entire mesial-distal length, as shown.

Once an archwire 18 is inserted into the archwire slot 16, the clinician may rotate the rotatable member 304 to one of the closed positions. To do so, the clinician may insert a tool into the arcuate regions 400 and apply a force that exceeds the minimum rotational force in the clockwise direction (e.g., toward the closed position shown in Fig. 21). The clinician may rotate the rotatable member 304 in a clockwise manner from the opened position toward the closed position shown in Figs. 21-23.

To do so, the slots 396, 398 are moved relative to the corresponding pins 308, 310 which must traverse across the ridges 412. The clinician must apply a force sufficient to flex the retention member 312 as the ridges 412 contact the pins 308, 310. In particular, and with reference to Fig. 18B and 19B, during clockwise rotation, the ridge 412 initially contacts the pin 310, most likely on the ramp 420. The rotatable member 304 begins to move axially along axis 81 in the direction of arrow 428 as the ramp 420 forces the rotatable member 304 in the direction of arrow 428. At the same time, the retention member 312 elastically flexes to accommodate this displacement. When the pin 310 resides on the ridge 412, the retention member 312 is elastically tensioned to pull the rotatable member 304 lingually toward the bottom surface 342 shown in Fig.18B.

Further rotation in the clockwise direction moves the pins 308 and 310 off of the ridge 412. The ramps 422 allows the retention member 312 to release its elastic energy at a controlled rate depending on the slope of the ramps 422. The release of energy may cause the rotatable member 304 to snap into position in which the pins 308 and 310 enter the portion 408. This release of elastic energy may also produce an audible click or snap, as well as, a vibration. In the exemplary embodiment in which two pins are utilized, their entry into the corresponding planar portions 408 may be substantially simultaneous so as to produce a greater tactile and/or audible response. It will be appreciated that the ramps 420 may have a different slope than the ramps 422. The slope of the ramps 420, 422 may determine the ease with which the rotatable member 304 may be rotated and may also determine the magnitude of the tactile and/or audible response.

While two pins 308, 310 are shown, for example, in Fig. 16, it will be appreciated that only a single pin may be sufficient to provide a positive stop and the associated audible and/or a tactile response. Advantageously, having two pins 308, 310 residing in the slots 396, 398 may improve the redundancy in the locking mechanism 306. In this regard, should one of the pins 308, 310 fail during treatment, the locking mechanism 306 will still function.

Continued application of a rotational force greater than the frictional resistance between the pins 308, 310 and the non-planar surfaces 402 will rotate the rotatable member 304 to a closed position, as is shown in Figs. 21, 22, 22A, and 23. In particular, once the pins 308 and 310 are positioned at the peak of the ridges 412, further application of torque in the clockwise direction on the rotatable member 304 rotates the planar portion 408 onto the corresponding pins 308 and 310. With respect to the pin 310, this orientation is shown in Fig. 22A. It will be appreciated that the torque required to rotate the rotatable member 304 from the peak of each of the ridges 412 may be less than the torque required to move the ridges 412 onto the pins 308 and 310 because elastic energy in the retention member 312 may be released during additional rotation of the ridges 412 off of the pins 308, 310. In addition, the release of elastic energy may aid further rotation of the rotatable member 304, because the pins 308 and 310 ride on the ramp 422 toward the planar portions 408. Thus, rotational motion may be spontaneous once the pins 308, 310 contact the ramps 422 nearest the planar portions 408. The locking mechanism 306 may provide an audible click and corresponding tactile response indicating that the rotatable member 304 has reached the closed position when the pins 308, 310 enter the planar portions 408 of the respective slots 396, 398.

While two pins 308 and 310 are shown residing in respective planar portions 408, it will be appreciated that a single pin residing between ridges 410 412 may be sufficient to form a positive stop so as to retain the rotatable member 304 in the closed position shown. Advantageously, having two pins 308, 310 residing in corresponding planar portions 408 provides a redundancy in the locking mechanism 306 and may enhance the magnitude of the audible and/or tactile responses. Further application of torque in the clockwise direction forces the pins 308, 310 against the ends 426 so that additional clockwise rotation is not possible.

With reference to Figs. 22 and 23, once the pins 308 and 310 are in the planar portions 408, the retention arms 376 and 378 are positioned over the archwire slot 16. As shown in Fig. 23, the lower surfaces 388 of each of the retention arms 376 and 378 form the fourth side of the archwire slot 16. In this orientation, the lower surfaces 388, the base surface 54, and the opposed slot surfaces 56 and 58 form a closed lumen for passive ligation of the archwire 18, as is described above.

During orthodontic treatment, the clinician may rotate the rotatable member 304 from the closed position shown in Figs. 21-23 (i.e., passive ligation) to the closed position shown in Figs. 24-26 (i.e., active ligation). To do so, the clinician may can insert a tool into the arcuate regions 400 and apply a counterclockwise torque to the rotatable member 304. Counterclockwise rotation of the rotatable member 304 causes relative movement between each non-planar surface 402 and the pins 308, 310. It will be appreciated that this movement is the reverse of the movement described above in which the ridges 412 passing over the corresponding pins 308, 310.

In this regard, the rotatable member 304 may be rotated from the closed position shown in Fig. 21 to the opened position shown in Fig. 15. As described above, the locking mechanism 306 may produce an audible and/or a tactile response as the ridges 412 are forced passed the pins 308, 310. That is, for example, the locking mechanism 306 may produce one click when the rotatable member 304 is rotated from the closed position shown in Fig. 21 to the opened position shown in Fig. 15.

The clinician may however continue to rotate the rotatable member 304 in the counterclockwise direction from the opened position shown in Fig. 15 to the closed position shown in Figs. 24, 25, and 26. To do so, the clinician may insert in the tool into the arcuate regions 400 and apply a force that exceeds the minimum rotational force for rotational movement in the counterclockwise direction.

With reference to Figs. 25B and 25C, the applied torque causes portions of the non-planar surface 402 to contact the pins 308, 310. In particular, and with reference to the pin 310 shown in Fig. 25C, before reaching the closed position, the applied torque on the rotatable member 304 forces the ridges 410 into contact with the pin 310. The orientation of the ramps 418 of the ridges 410 produces a force on the rotatable member 304 in the direction of the axis 81, as is indicated by the arrow 428. To move along the axis 81, the rotatable member 304 elastically bends the retention member 312. The elastic bending of the retention member 312, allows the ramp 418 to slide along pin 310 toward the peak of the ridge 410.

The ridges 410 must ride up and over the corresponding pins 308 and 310 to move the rotatable member 304 to the closed position shown in Figs. 24 and 25. To do so, the rotatable member 304 must also move axially along axis 81 a distance that is at a maximum equivalent to the height of ridge 410. The minimum threshold force required to rotate the rotatable member 304 is determined by force needed to elastically flex the retention member 312 sufficient to displace the rotatable member 304 the height of the ridge 410 as is shown in Fig. 25B.

Continued application of a rotational force greater than the frictional resistance between the pins 308, 310 and the non-planar surfaces 402 will rotate the rotatable member 304 to closed position, as is shown in Figs. 24 and 25. In particular, once the pins 308 and 310 are positioned at the peak of the ridges 410 (Fig. 25B), further application of torque in the counterclockwise direction on the rotatable member 304 rotates the planar portion 404 onto the corresponding pins 308 and 310 (shown in Fig. 25A). It will be appreciated that the torque required to rotate the rotatable member 304 from the peak of each of the ridges 410 to the planar portion 404 may be less than the torque required to move the ridges 410 onto the pins 308 and 310 because elastic energy in the retention member 312 may be released and therefore aid the rotation of rotatable member 304 during additional rotation of the ridges 410 off the pins 308, 310. It will be appreciated that the rotatable member 304 moves axially along axis 81 toward the bottom surface 342 as the retention member 312 reverts to a less bent configuration and releases at least some of its elastic energy. The locking mechanism 306 may provide an audible click and corresponding tactile response indicating that the rotatable member 304 has reached the closed position.

Further application of torque in the clockwise direction forces the pins 308, 310 against the ends 426 of the slots 396, 398 so that additional counterclockwise rotation of the rotatable member 304 is not possible.

Once the pins 308 and 310 are in the portions 404, the retention arms 374 and 380 are positioned over the archwire slot 16. As shown in Fig. 26, the lower surfaces 392 of each of the retention arms 374 and 380 form the fourth side of the archwire slot 16. In this orientation, the lower surfaces 392, the base surface 54, and the opposed slot surfaces 56 and 58 form a closed lumen for active ligation of the archwire 18. In other words, the closed lumen formed is the same or smaller in dimension than the archwire 18, as is described above.

With regard to a slightly smaller closed lumen dimension, it will be appreciated that the retention member 312 may be elastically flexed when brought to the active ligation position in which case the rotatable member 304 may not return completely to a position in which the retention member 312 returns to a fully relaxed state. The retention member 312 may therefore be biased in a direction toward the base surface 54 (e.g., perpendicular to the base surface 54) when the rotatable member 304 is in a closed position. Further in this regard, the pins 308, 310 may not therefore contact the surface of the portions 404 when the rotatable member 304 is in the closed position shown.

When the clinician rotates the rotatable member 304 from one closed position (e.g., shown in Fig. 21) to the other closed position (e.g., shown in Fig. 24), the locking mechanism 306 may produce a click-click type of response. The clinician may therefore be assured then that the rotatable member 304 has been successfully rotated from one closed position to the other closed position. The clinician may rotate the rotatable member 304 in the reverse direction and with a click-click type of response from the locking mechanism 306. Again, by this response, the clinician may be assured that the rotatable member 304 is in a closed position.

Advantageously, the orthodontic bracket 300 may obviate the need to change archwires during treatment because a single archwire may be utilized during the initial stage of treatment in which passive ligation is desired. This may be obtained by rotating the rotatable member 304 to one closed position in which a closed lumen is larger in labial-lingual dimension than the archwire. Once treatment progresses to a point that active ligation would be beneficial, the clinician may rotate the rotatable member 304 to a second closed position in which the labial-lingual dimension of the closed lumen approximates the height dimension of the archwire 18 so as to actively ligating the archwire. In each of the closed positions, the locking mechanism resists movement of the rotatable member 304 from that position. When the clinician intentionally rotates the rotatable member 304, the locking mechanism 306 provides a discernible indication that the rotatable member 304 is properly positioned without visually inspecting its actual orientation.

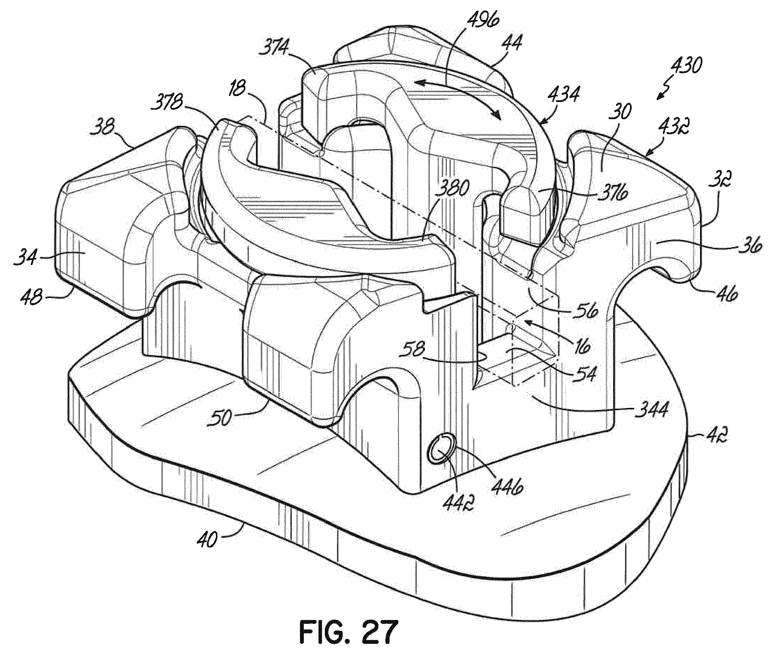

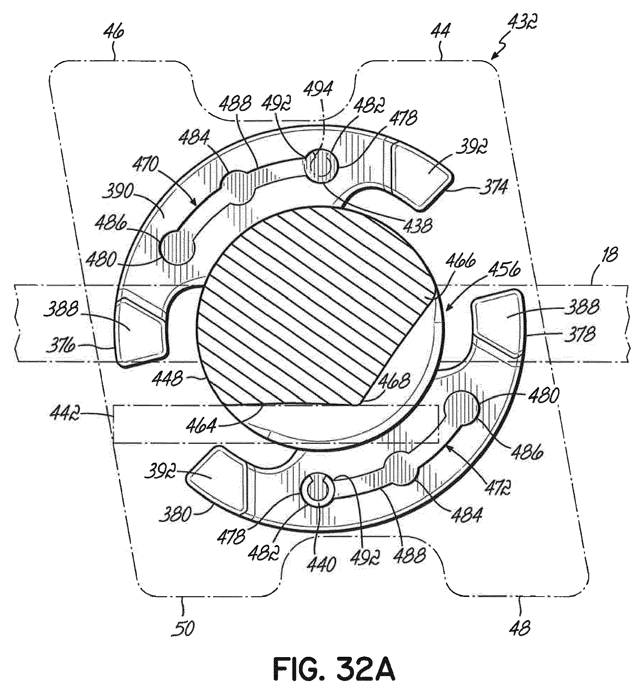

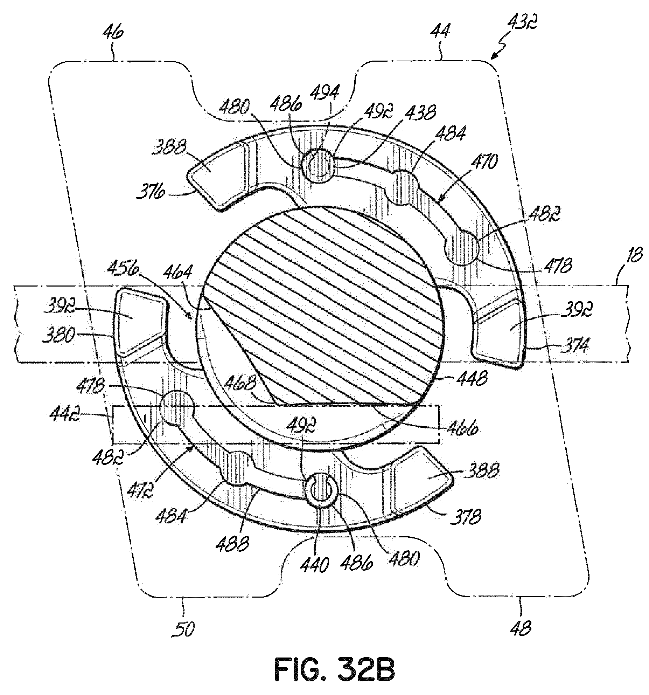

In one embodiment, and with reference to Figs. 27-32B, in which like reference numerals refer to like elements throughout the figures, an orthodontic bracket 430 includes a bracket body 432 and a rotatable member 434 that are similar to those described above. The rotatable member 434 is rotatable relative to the bracket body 432 between three positions. These positions are similar to the opened and closed positions described with respect to previous embodiments. Specifically, the rotatable member 434 is rotatable from an opened position (Fig. 27) in which the archwire 18 is insertable into the archwire slot 16, to a first closed position (Fig. 32A) in which the archwire 18 is retained within a closed lumen defined by the archwire slot 16 and the rotatable member 434, and to a second closed position (Fig. 32B) in which the archwire 18 is retained within another closed lumen defined by the archwire slot 16 and a different portion of the rotatable member 434. The dimensions of each of the closed lumens defined by the rotatable member 434 between each of the first closed position and the second closed position may be different. Active and passive ligation of the archwire as a result of the dimensional differences is detailed above. Advantageously, by virtue of the two closed positions, the orthodontic bracket 430 may provide both passive and active ligation on a given archwire. Furthermore, when the rotatable member 434 is in the opened position, an archwire may be ligated to the bracket 430 via the tie wings 44-50. This may occur at, for example, the beginning stages of treatment at which the clinician is unable to insert the archwire into the archwire slot 16.

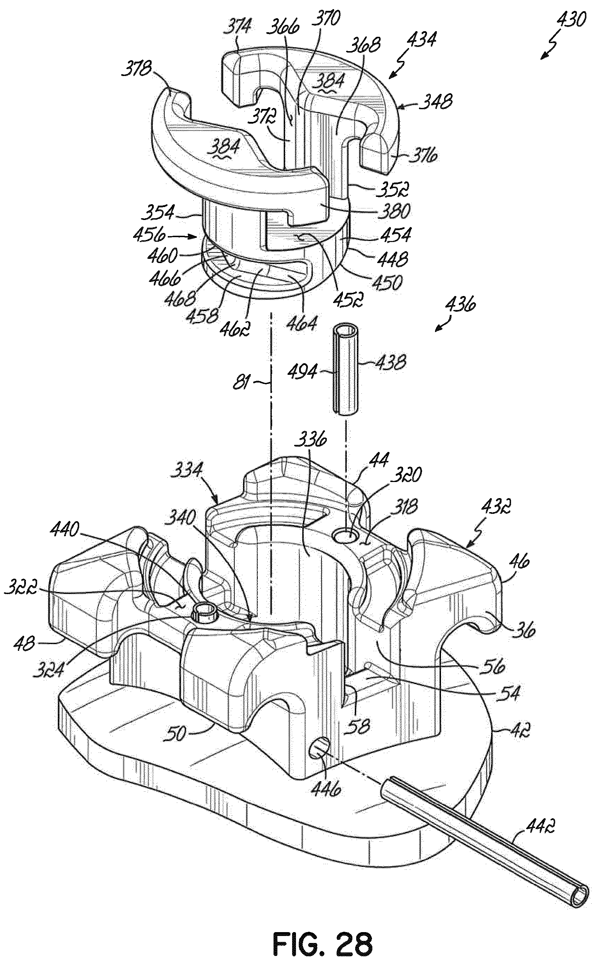

While producing a similar active and passive ligation of the archwire 18, the orthodontic bracket 430 includes a locking mechanism that differs from the locking mechanism described above with respect to the embodiment shown in Figs. 15-26. With reference to Fig. 28, the orthodontic bracket 430 includes a locking mechanism 436 that is structurally different from the locking mechanism 306, described above with reference to Figs. 15-26, though the locking mechanism 436 movably secures the rotatable member 434 in each of the closed positions and, optionally, in an opened position. The locking mechanism 436 also produces an audible and/or tactile sensation as an indication that the rotatable member 434 is in the opened position or one of the closed positions. These indications may signal to the clinician that the rotatable member 434 is correctly or incorrectly positioned without visual inspection.

To those and other ends, in the exemplary embodiment shown, the locking mechanism 436 may be in the form of one or more split pins 438, 440 (shown best in Fig. 28) that slidably engage the rotatable member 434 in one or more of the opened and closed positions. In one embodiment, the orthodontic bracket 430 further includes a retention member 442 similar to the retention member 312 for coupling the rotatable member 434 to the bracket body 432. In one exemplary embodiment, the retention member 442 may be a solid titanium pin, a NiTi pin, or a split tube (as shown) that is coupled to the bracket body 432 and that slidably engages the rotatable member 434. By way of example, the split in the tube may be between about 0.005 inch and about 0.008 inch wide. The tube itself may be 0.010 inch in diameter or larger.

As with the retention member 28, the retention member 442 is oriented perpendicular to force transferred from the archwire 18 to the rotatable member 434. In this regard, the longitudinal axis of the retention member 442 is oriented perpendicular to the locking mechanism 436, which in the exemplary embodiment includes one or more split pins 438, 440. For example, the retention member 442 may be oriented in a mesial-distal direction, as shown, or in an occlusal-gingival direction. The retention member 442 may be positioned in a plane generally parallel to a plane of the base surface 54 of the archwire slot 16 and/or in a plane generally parallel with a tangent of the adjacent tooth surface. By virtue of this orientation, the retention member 442 transfers loads from the rotatable member 434 to the bracket body 432 and consequently to the tooth during orthodontic treatment. As a result of the orientation of the retention member 442, the split pins 438, 440 may bear little, if any, of the load from the archwire 18.

With reference to Fig. 28, the split pins 438, 440 extend from their respective bores 320, 324 above the support surface 322. The ends of each of the split pins 438, 440 are exposed and so are capable of interacting with the rotatable member 434, as is described below. The rotatable member 434 therefore covers the pins 438, 440 during treatment. So, the pins 438, 440 are not exposed during orthodontic treatment. The split pins 438, 440 may be secured within the respective bore 320, 324 by staking, by welding, with an adhesive or by other means known in the art. While two split pins 438, 440 are shown, it will be appreciated that only a single pin may be sufficient to provide a positive stop and the associated audible and/or a tactile response. Advantageously, having two split pins 438, 440 may improve the redundancy in the locking mechanism 436, described below. In this regard, should one of the split pins 438, 440 fail during treatment, the locking mechanism 436 will still function.

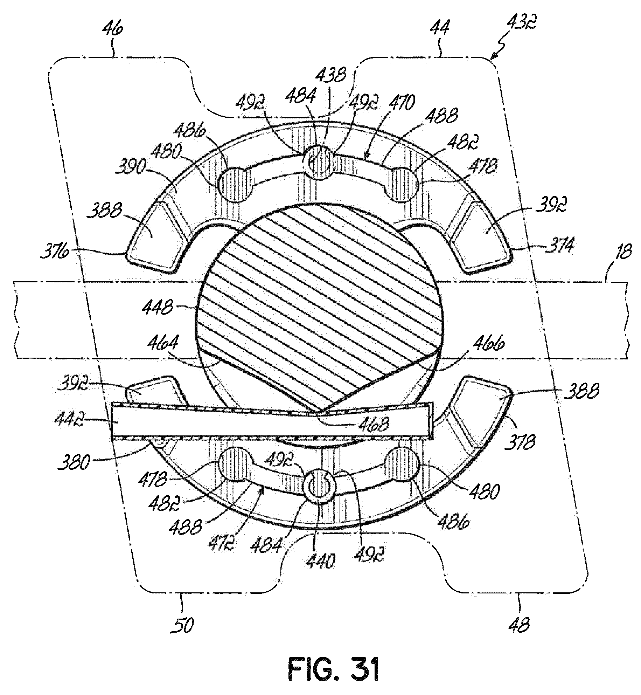

As shown in Fig. 28, the bracket body 432 includes a passageway 446 that receives the retention member 442. The passageway 446 is open to at least one of the mesial and distal sides 36, 38 and extends substantially parallel to the archwire slot 16 (e.g., in the mesial-distal direction). For example, in one embodiment, the passageway 446 may be open to only one of the mesial or distal sides 36, 38 of the bracket body 432 and be closed off opposite the open side. In this case, the bracket body 432 may include a vertical slot (not shown) that is configured to receive auxiliary orthodontic devices. Alternatively, the passageway 446 may be open to both the mesial and distal sides 36, 38 of the bracket body 432 so as to present a through-bore. In an exemplary embodiment, the passageway 446 penetrates the bracket body 432 so as to be generally positioned lingually and gingivally of the archwire slot 16. By virtue of the position of the passageway 446, it may not intersect the archwire slot 16. Because the passageway 446 is generally offset both lingually and gingivally from the archwire slot 16, the distance between the base surface 54 of the archwire slot 16 and the lingual side 40 of the bracket body 432 may be reduced compared to the bracket body 302 (Fig. 16) in which the passageway 344 is lingually offset from the archwire slot 16 and so is directly between the base surface 54 and the lingual side 40. The overall height of the orthodontic bracket 430 may therefore be reduced. Although not shown, the passageway 446 may extend in an occlusal-gingival direction and be open to at least one of the occlusal and gingival sides 32, 34. In one embodiment and with reference to Figs. 28 and 31, the passageway 446 is open to the cylindrical bore 334 and may intersect the third bore portion 340.

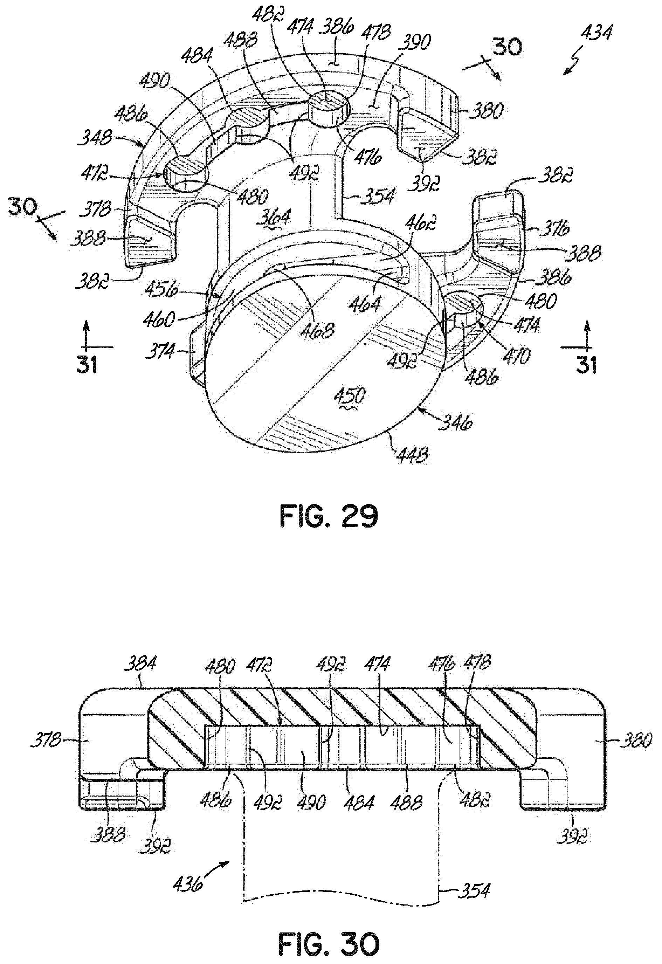

As illustrated in Figs. 28 and 29, the rotatable member 434 also differs somewhat from rotatable members described herein. In that regard, the cylindrical retaining portion 346 includes a pair of spaced-apart columns or studs 352, 354 and a generally cylindrical base 448. The cylindrical base 448 fits in the third bore portion 340 and is generally wedge-shaped having a lower surface 450, an upper surface 452, and a side wall 454 extending therebetween. Although the lower surface 450 is shown as being non-planar, it may be generally planar. The cylindrical base 448 further includes a slot 456 in the side wall 454. The slot 456 includes a lower surface 458, an upper surface 460, and a side wall 462 that is faceted. In the exemplary embodiment, the side wall 462 includes two faces or segments, for example, a first segment 464 and a second segment 466 that intersect at an apex 468. Together, the first and second segments 464, 466 form a generally V-shaped groove.

With reference to Figs. 28 and 31, in one embodiment, the slot 456 may align with the passageway 446. The surfaces of each may be generally planar and substantially flush with one another. Advantageously, during assembly of the orthodontic bracket 430, the retention member 442 is inserted through the passageway 446 and through the slot 456 of the rotatable member 434. The retention member 442 may also limit the rotation of the rotatable member 434. The retention member 442 may fit snugly within the slot 456 and thus allow only little labial-lingual play between the rotatable member 434 and the retention member 442. The fit may also be loose enough to allow relative sliding movement between the retention member 442 and the rotatable member 434. The retention member 442 therefore retains the rotatable member 434 within the bracket body 432 but permits the rotatable member 434 to be rotated between the opened and closed positions.

With reference to Figs. 29 and 30, in one embodiment, the lower surface 390 of the pair of retention arms 374, 376 includes a slot 470, and the lower surface 390 of the pair of retention arms 378, 380 includes a slot 472. Slots 470, 472 receive the corresponding split pin 438, 440 during rotation of the rotatable member 434. In the exemplary embodiment, the locking mechanism 436 may be formed by at least the interaction of the slots 470, 472 and the split pins 438, 440 to produce one or more positive stops to rotation of the rotatable member 434. These positive stops may coincide with one or more of the opened position and the closed positions as described below. To that end and with reference to Fig. 30, each slot 470, 472 may include an upper surface 474 defined by a side wall 476 that defines a first end 478 and a second end 480. The ends 478, 480 stop rotational movement of the rotatable member 434, as is described below.

In one exemplary embodiment shown in Figs. 29 and 30, the side wall 476 of the slots 470, 472 defines an arcuate path that is non-planar in some respects. In that regard, the side wall 476 defines a first enlarged portion 482, a second enlarged portion 484, and a third enlarged portion 486. Each of the enlarged portions 482, 484, 486 results in a deviation from the arcuate path and so is non-planar as a result of that deviation. The first and second enlarged portions 482, 484 are separated by a narrow region 488. The second and third enlarged portions 484, 486 are separated by a narrow region 490. The enlarged portion 482 is at the first end 478 of each slot 470, 472, and the third enlarged portion 486 is at the second end 480 of each slot 470, 472. Each enlarged portion 482, 484, 486 may appear as an intersection of a circular bore with a rectangular slot with arcuate regions of the bores recessed into one or both opposing surfaces of the otherwise rectangular slot. In the embodiment shown, the enlarged portions 482, 484, 486 receive one of the respective pins 438, 440 when the rotatable member 434 is in the opened and closed positions.

In that regard, the size of the enlarged portions 482, 484, 486 may approximate or be slightly larger than a cross-sectional dimension of the pins 438, 440 when the pins 438, 440 are relaxed, which may be in an unstressed condition. The relaxed state may occur in the absence of an archwire in the archwire slot 16 in which the pins 438, 440 may be unstressed in one or both of a radial direction and a longitudinal direction. In an alternative embodiment, the enlarged portions 482, 484, 486 may be sized to produce radial compression or other elastic deformation of one or both of the pins 438, 440 at all orientations of the rotatable member 434. In this regard, the pins 438, 440 may be elastically deformed (elastic deformation is described above) when the rotatable member 434 is in one or more of the opened and closed positions. Further in this regard, elastic deformation may be limited to deformation of a cross-sectional dimension of the pin 438, 440 (e.g., radial compression), though embodiments of the invention may include a combination of elastic deformation of the cross-sectional dimension of one or both of the split pins 438, 440 and bending of one or both of the pins 438, 440 along a longitudinal axis.

As shown in Fig. 29, the second enlarged portion 484 is intermediate the first and third enlarged portions 482, 486. The enlarged portions 482, 484, 486 cooperate with the respective split pins 438, 440 to secure the rotatable member 434 in the opened position and each of the closed positions. As shown in Figs. 31-32B, the split pins 438, 440 cooperate with the enlarged portions 482, 484, 486 to define positive stops for the closed and/or opened positions. In the embodiment shown, the first enlarged portion 482 corresponds to the first closed position, the second enlarged portion 484 corresponds to the opened position, and the enlarged portion 486 corresponds to the second closed position. The cross dimension of the enlarged portions 482, 484, 486 is larger than the cross dimension of the narrow regions 488, 490 to define openings 492 at the intersection of each of the enlarged portions 482, 484, 486 and corresponding narrow regions 488, 490. The difference in dimension between the enlarged portions 482, 484, 486 and the narrow regions 488, 490 at the openings 492 may determine the magnitude of force with which the rotatable member 434 may be rotated and may also determine the magnitude of the tactile and/or audible response from the locking mechanism 436 as the rotatable member 434 is rotated. Embodiments of the present invention are not limited to each of the enlarged portions 482, 484, 486 and the narrow regions 488, 490 of a given slot 470, 472 being the same dimension as the dimensions of each of the enlarged portions 482, 484, 486 and the narrow regions 488, 490 may be different. While the enlarged portions 482, 484, 486 may be generally larger than the split pins 438, 440, the openings 492 and narrow regions 488, 490 are narrower in width dimension than the split pins 438, 440.

The split pins 438, 440 may be forced through the openings 492 and into the narrow regions 488, 490. To that end, the slit 494 in each of the split pins 438, 440 allows the pins 438, 440 to radially flex or elastically deform so that the pins 438, 440 may radially contract to fit through openings 492 into the corresponding narrow regions 488, 490. This includes not only uniform radial flexing, but also includes non-uniform or partial radial flexing. In other words, at least a portion of each of the split pins 438, 440 has a first effective diameter or radius of curvature (such as in an unbiased state) but is capable of being flexed, such as by squeezing the split pins 438, 440, so as to have a second effective diameter or radius of curvature smaller than the first effective diameter or radius of curvature. Thus, the split pins 438, 440 are capable of radially expanding and contracting depending on the force being imposed thereon. While the slit 494 in each of the split pins 438, 440 allows for radial contraction and/or expansion, such movement may be achieved in other ways. For example, the split pins 438, 440 may be thin-walled tubular members without such a slit yet still be capable of radial contraction and/or expansion. Those of ordinary skill in the art may recognize additional configurations that provide such radial contraction and expansion of the split pins 438, 440.

In regard to securing the rotatable member 434, the locking mechanism 436 provides one or more positive stops in the rotation of the rotatable member 434 relative to the bracket body 432. Of course, when the rotatable member 434 is positioned within the cylindrical bore 334 of the bracket body 432, there may be a certain amount of friction between the two and/or between the retention member 442 and the rotatable member 434 such that rotating the rotatable member 434 will require a certain amount of force or torque even in the absence of a positive stop. The threshold level of force or torque for defining a positive stop is intended to be greater than that required to overcome this type of friction between the rotatable member 434 and the bracket body 432.

Further with regard to securing the rotatable member 434, forces from the archwire 18 on the rotatable member 434 may not be transferred to the locking mechanism 436. The rotatable member 434 is therefore more likely to remain in one of the closed positions during treatment. The majority of the load from the archwire 18 on the rotatable member 434 may be transferred to the bracket body 432 via the retention member 442. The retention member 442 may elastically compress or bow in a labial-lingual direction, but only a very small portion or none of the forces from the archwire 18 are transferred to the locking mechanism 436. The axis of each of the split pins 438, 440 is generally parallel to any labial movement of the rotatable member 434 along axis 81 and thus loads from the archwire 18 on the rotatable member 434 may not interact with the locking mechanism 436. In view of this configuration, the rotatable member 434 is unlikely to be inadvertently rotated when the orthodontic bracket 430 is in use.

Orthodontic treatment with the exemplary embodiment of the invention is now described. With reference to Fig. 27, during orthodontic treatment, the rotatable member 434 is rotatable in each of the clockwise and counterclockwise directions as is indicated by arrow 496. By rotation in either of these directions from the opened position, as shown, pairs of retention arms 374, 380 or 376, 378 are rotated across the archwire slot 16 so as to oppose the base surface 54 and form a closed lumen in which the archwire 18 is held within the archwire slot 16. The retention arms 374, 380 or 376, 378 actively or passively ligate the archwire 18 in a manner similar to that described above with respect to Figs. 15-26. During treatment, the locking mechanism 436 secures the rotatable member 434 in each of the opened and closed positions while providing a perceptible indication of the position of the rotatable member 434 to the clinician as the clinician rotates the rotatable member between each of the positions.

In the opened position, as is shown in Fig. 31, once an archwire 18 is inserted into the archwire slot 16, the clinician may rotate the rotatable member 434 in either the clockwise or the counterclockwise directions toward one of the closed positions. To do so, the clinician may insert a tool into the rotatable member 434 in a manner similar to the embodiment shown above and described with regard to Fig.16. The clinician may apply a torque load, for example, in the clockwise direction sufficient to exceed the minimum rotational force necessary to elastically compress the pins 438, 440 such that the pins 438, 440 are forced to enter the narrow regions 488. The clinician may continue to rotate the rotatable member 434 in a clockwise manner from the opened position (Fig. 31) toward the first closed position (Fig. 32A).

Once the pins 438, 440 are in the narrow region 488, the clinician may apply a force that exceeds a threshold sliding force but that is less than the minimum rotational force, each described above, to move the split pins 438, 440 relative to the narrow region 488. Once positioned in the narrow region 488, the split pins 438, 440 bear against the side wall 476 thereof such that the threshold sliding force, which may be less than, and perhaps significantly less than the opening force, must be imposed to rotate the rotatable member 434 relative to the bracket body 432 as the split pins 438, 440 traverse the narrow region 488. Thus, when the pins 438, 440 enter the narrow region 488, the rotatable member 434 does not freely slide or move to the opened position. Instead, the clinician must purposefully rotate the rotatable member 434 toward the opened position. In the absence of sufficient force, when the split pins 438, 440 are engaged in the narrow region 488, the rotatable member 434 may remain stationary relative to the bracket body 432 until the threshold sliding force is imposed to continue rotating the rotatable member 434 toward the opened position. Such a configuration reduces the likelihood of unintentionally opening or closing the rotatable member 434 during, for example, an orthodontic treatment.

Further rotation of the rotatable member 434 in the clockwise direction moves the split pins 438 and 440 toward the enlarged portion 482. Once the split pins 438, 440 at least partially enter the enlarged portion 482, the split pins 438, 440 may release their elastic energy as they expand into the enlarged portion 482. This expansion may be spontaneous and so spontaneously rotate the rotatable member 434 into the closed position shown in Fig. 32A. In other words, release of elastic energy in the pins 438, 440 may cause the rotatable member 434 to snap into the closed position. This release of elastic energy may also produce an audible click or snap, as well as a vibration. In the exemplary embodiment in which two pins are utilized, their entry into the corresponding enlarged portions 482 may be substantially simultaneous so as to produce a greater tactile and/or audible response.

With reference to Fig. 32A, when the rotatable member 434 is in the first closed position, the retention arms 376, 378 extend over the archwire 18. In this orientation, the lower surfaces 388, the base surface 54, and the opposed slot surfaces 56, 58 form a closed lumen for passive ligation of the archwire 18, as is described above with reference to, for example, the embodiment shown in Fig. 16. The split pins 438, 440 are disposed in the enlarged portion 482 of the corresponding slots 470, 472. The difference in dimension between the split pins 438, 440 and the narrow regions 488 produces an interference fit between the split pins 438, 440 and the openings 492. The interference fit provides a threshold level of resistance to any rotation of the rotatable member 434 away from the closed position. In this embodiment, interference between the pins 438, 440 and the openings 492 inhibits counterclockwise rotation of the rotatable member 434 and the closed end 478 prohibits clockwise rotation of the rotatable member 434. Further application of torque in the clockwise direction forces the split pins 438, 440 against the first end 478 and prevents additional clockwise rotation.

During treatment, the clinician may desire to change the archwire 18 or may determine a change from passive ligation to active ligation is necessary. To change the archwire 18 or to change from passive to active ligation, the clinician may rotate the rotatable member 434 from the closed position to the opened position.

With reference to Fig. 31, when the rotatable member 434 is rotated to the opened position, the split pins 438, 440 enter the enlarged portions 484 and recover or snap back to the radially expanded state to secure the rotatable member 434 in the opened position. This expansion of the split pins 438, 440 may be spontaneous so that the rotatable member 434 may spontaneously rotate to the opened position when the split pins 438, 440 only partially enter the enlarged portions 484. The clinician may feel this spontaneous movement and therefore note the position of the rotatable member 434 without visual inspection of the orthodontic bracket 430.

In the opened position shown in Figs. 27 and 31, the interference fit between the pins 438, 440 and openings 492 inhibits rotation of the rotatable member 434 in each of the clockwise and counterclockwise directions. In the absence of sufficient force applied to the rotatable member 434, the interference fit between the split pins 438, 440 secures the rotatable member 434 in the opened position. Accordingly, a sufficiently large opening force must be applied to the rotatable member 434 in either the clockwise or counterclockwise direction to force the split pins 438, 440 to move through one of the adjacent openings 492.

During orthodontic treatment, the clinician may rotate the rotatable member 434 from the first closed position shown in Fig. 32A to passively ligate the archwire to the second closed position shown in Fig. 32B to actively ligate the archwire. To do so, the clinician can insert a tool into the rotatable member 434 and apply a counterclockwise torque to the rotatable member 434 to rotate the rotatable member 434 to the opened position. Counterclockwise rotation of the rotatable member 434 causes relative movement between the split pins 438, 440 and the slots 470, 472 so that the split pins 438, 440 enter corresponding enlarged portions 486.

At the opened position, once a new archwire 18, if any is required, is inserted into the archwire slot 16, the clinician may rotate the rotatable member 434 in either the clockwise or the counterclockwise directions toward one of the closed positions. To do so, the clinician may insert a tool into the rotatable member 434. The clinician may apply a torque load, for example, in the clockwise direction sufficient to exceed the minimum rotational force necessary to elastically compress the pins 438, 440 such that the pins 438, 440 are forced to enter the narrow regions 490. The clinician may continue to rotate the rotatable member 434 in a counterclockwise manner from the opened position (Fig. 31) toward the second closed position (Fig. 32B) for active ligation. Once the pins 438, 440 are in the narrow regions 490, the clinician may apply a force that exceeds the threshold sliding force but that is less than the minimum rotational force, each described above, to move the split pins 438, 440 relative to the narrow region 490.

By way of example, for counterclockwise rotation to the second position shown in Fig. 32B, the pins 438, 440 must first pass through the corresponding narrow region 490 for the rotatable member 434 to rotate toward the closed position. When the clinician rotates the rotatable member 434 with a sufficient force, the split pins 438, 440 elastically deform so that the split pins 438, 440 pass through openings 492 and enter the narrow region 490. The pins 438, 440 then bear against the walls of the corresponding narrow region 490. This interaction between the narrow region 490 and the pins 438, 440 resists rotation of the rotatable member 434 as a threshold rotational force must therefore be applied to the rotatable member 434 to further rotate it toward the second closed position.

With reference now to Fig. 32B, as the rotatable member 434 is rotated toward the second closed position from the opened position shown in Fig. 31, the split pins 438, 440 enter the enlarged portion 486. As the split pins 438, 440 enter the enlarged portion 486, the split pins 438, 440 may snap back to their radially expanded state. This may occur spontaneously so that the clinician may feel the rotatable member 434 rotate as the split pins 438, 440 partially enter the enlarged portions 486. This may provide an indication to the clinician that the rotatable member 434 is at the second closed position in which the retention arms 374, 380 ligate the archwire 18.

Once the split pins 438, 440 are in the corresponding enlarged portions 486, the retention arms 374, 380 are positioned over the archwire slot 16. In this orientation, the lower surfaces 392, the base surface 54, and the opposed slot surfaces 56, 58 form a closed lumen for active ligation of the archwire 18.

As described above, the pins 438, 440 may be in a relaxed or non-stressed state when the pins 438, 440 are in their respective enlarged portions 486. When so disposed in the enlarged portion 486, the openings 492 provide a threshold level of resistance to any clockwise rotation of the rotatable member 434, that is, rotation away from the second closed position and toward the opened position. Only after a sufficiently large force is applied to the rotatable member 434 in, for example, the clockwise direction, will the split pins 438, 440 radially contract so that split pins 438, 440 move past the openings 492 and into the respective narrow region 490. Such a configuration may further prevent or reduce the likelihood of inadvertent opening of the rotatable member 434 during treatment.

In one embodiment, the torque on the rotatable member 434 required to elastically deform the split pins 438, 440 and the torque on the rotatable member 434 when the pins 438, 440 are in the respective narrow regions 488, 490 is the same for rotating from the first closed position to the opened position and for rotating from the second closed position to the opened position. However, embodiments of the invention are not limited to the torque required being approximately the same in each rotational direction. In that regard, it will be appreciated that changing the configuration of the respective slots 470, 472, such as by changing the width dimension of the corresponding openings 492 or the width dimension of the narrow regions 488, 490, may change the forces necessary to rotate the rotatable member 434.

In one embodiment, and with continued reference to Figs. 31-32B, as the clinician rotates the rotatable member 434, and in combination with the forces on the split pins 438, 440, the apex 468 of the slot 456 also rotates about axis 81. As can be appreciated, rotation of the rotatable member 434 brings the apex 468 into contact with the retention member 442. In this way, the apex 486 elastically compresses the retention member 442 as the clinician forcibly rotates the rotatable member 434. As a result, and with reference to Fig. 31, when the rotatable member 434 is in the opened position, the apex 468 compresses the retention member 442. In this configuration, the retention member 442 stores elastic energy. In general, as the clinician rotates the rotatable member 434 away from the closed position in a clockwise or a counterclockwise direction, the retention member 442 releases the stored elastic energy and so may aid the clinician in the rotation of the rotatable member 434.

More specifically, once the apex 468 is rotated to an offset position relative to that shown in Fig. 31, the retention member 442 may push on the apex 468 and so produce a force on the apex 468 that is offset from the axis 81. The force on the apex 468 may produce a torque around the axis 81. Because the release in the elastic energy from the retention member 442 may coincide with the split pins 438, 440 residing in the narrow regions 490 or 488, the force from the retention member 442 may offset the frictional forces associated with the split pins 438, 440 bearing against the side wall 476. When released, the force from the retention member 442 may not provide sufficient rotational force to overcome the minimum threshold force necessary to spontaneously rotate the rotatable member 434. But, when the elastic energy is released, it may aid the clinician in rotating the rotatable member 434 to one or the other of the closed positions shown in Figs. 32A and 32B. A reverse relationship may occur as the clinician rotates the rotatable member 434 from one of the closed positions toward the opened position.

In view of the preceding paragraphs, in one embodiment, the torque required to rotate the rotatable member 434 from the opened position to one of the closed positions may be less than the torque required to move the rotatable member 434 from one of the closed positions to the opened position. Rotation from the closed position shown in Fig. 32A to the opened position shown in Fig. 31 may require additional torque (i.e., in addition to the torque required to deform the split pins 438, 440) to elastically deform the retention member 442. In view of this additional force, once the rotatable member 434 is in the closed position, the locking mechanism 436 may further resist unintentional rotation of the rotatable member 434 due to the additional energy required to deform the retention member 442 during movement of the rotatable member 434 from one closed position to the opened position.

Specifically, in one embodiment, when the rotatable member 434 is in the first closed position (Fig. 32A), the segment 464 is generally aligned with the longitudinal axis of the retention member 442. As the rotatable member 434 rotates, the slot 456 also rotates so as to rotate the apex 468 into contact with the retention member 442. With continued rotation toward the opened position, the apex 468 elastically compresses the retention member 442. To do so, the clinician must apply a counterclockwise force sufficient to flex the retention member 442 as well as rotate the narrow regions 488 in contact with the split pins 438, 440.

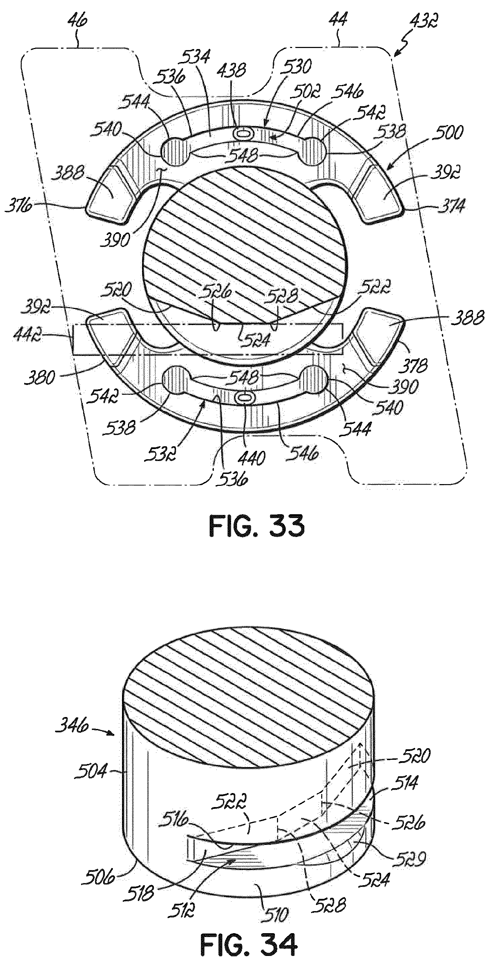

In an alternative embodiment, and with reference to Figs. 33 and 34, in which like reference numerals refer to like elements throughout the figures, a rotatable member 500 similar to the rotatable member 434, described above, includes a locking mechanism 502 that is similar to the locking mechanism 436 but differs in structural configuration. While differing in structural configuration, the locking mechanism 502 has similar functions as described above.

In one embodiment, the rotatable member 500 includes a generally cylindrical base 504 similar to the cylindrical base 448, described above and shown in Figs. 28 and 29. The cylindrical base 504 is generally disc-shaped and includes a lower surface 506, an upper surface (not shown), and a side wall 510 extending therebetween. Although the lower surface 506 is shown as being planar, it may be generally non-planar.

The cylindrical base 504 further includes a slot 512 in the side wall 510. The slot 512 includes opposing surfaces 514, 516 separated by a base wall 518 having a faceted configuration. For example, the base wall 518 may include three segments 520, 522, and 524 that intersect at corners 526, 528. In general, the slot 512 may be symmetrically disposed relative to the retention arms 374, 376, 378, 380. The slot 512 cooperates with the retention member 442 as is shown in Fig. 33. In particular, at least the corners 526 and 528, and possibly the segments 520, 522, and 524, may contact the retention member 442 as the rotatable member 500 is rotated. A relief region 529 opens to the slot 512 along a portion of the lower surface 514 and allows the rotatable member 500 to move in the labial direction or outward from the bracket body 432. This movement may be beneficial to seating an archwire in the slot 16 as the rotatable member 500 is rotated to the closed position. In doing so, the slot 512 narrows. It is believed that this configuration may provide a cam-like effect and may avoid pinching the archwire against the retention arms 374, 376, 378, 380 as the rotatable member 500 is rotated.

With further reference to Fig. 33, in one embodiment, the lower surface 514 of the slot 512 may align with the passageways 446 in the bracket body 432 when the rotatable member 500 is positioned in the bore 334. The retention member 442, when inserted into the passageways 446, is slidably received within the slot 512 and rotatably secures the rotatable member 500 within the bracket body 432 in each of the opened and closed positions, as is described below.

Referring to Fig. 33, in one embodiment, the rotatable member 500 includes slots 530, 532 formed in the lower surfaces 390 of the pair of retention arms 374, 376 and the pair of retention arms 378, 380, respectively. In the exemplary embodiment, the locking mechanism 502 may be formed by at least the interaction of the slots 530, 532 with the split pins 438, 440 and may also include interaction of the slot 512 with the retention member 442. The slots 530, 532 are similar to the slots 470, 472, described above as the slot 530, 532 define non-planar surfaces, but form only two positive stops between the rotatable member 500 and the bracket body 432. The positive stops may coincide with the first and second closed positions as described above with reference to rotatable member 434.

To that end, and with reference to Fig. 33, each slot 530, 532 may include a base surface 534 with a perimeter defined by a side wall 536 that defines a first end 538 and a second end 540. Similar to the slots described above, the slots 530, 532 slidably engage the split pins 438, 440 during rotation of the rotatable member 500 between the opened position and closed positions to form positive stops. Unlike the embodiment shown in Fig. 31, in one embodiment of the invention, one or both of the slots 530, 532 lacks an enlarged portion that coincides with the opened position so that no positive stop is formed by the slots 530, 532 at the opened position.

As shown in Fig. 33, in one embodiment, the ends 538, 540 include enlarged portions 542, 544 similar to those described above with reference to the embodiment shown in Fig. 31. With continued reference to Fig. 33, the enlarged portion 542 defines the end 538 and the enlarged portion 544 defines the end 540 of the respective slots 530 and 532. The first and second enlarged portions 542, 544 are separated by a narrow region 546 in which the side wall 536 defines a dimension that is smaller in width than the diameter of one or both of the split pins 438, 440 at openings 548. The enlarged portions 542, 544 and narrow regions 546 cooperate with pins 438, 440 to secure the rotatable member 500 in the first closed position and in the second closed position, respectively.

During treatment, when the rotatable member 500 is in the first closed position (not shown), the split pins 438, 440 are disposed in corresponding enlarged portions 542 of the respective slots 530, 532 and are permitted to radially expand relative to a compressed or biased state when the split pins 438, 440 are in the narrow regions 546. In the expanded state, an interference fit is created at the openings 548 of the narrow regions 546. This interference fit provides a threshold level of resistance to any rotation of the rotatable member 500. However, if a sufficiently large force is applied to the rotatable member 500 in, for example, the counterclockwise direction, the interaction between the openings 548 and the corresponding split pins 438, 440 causes the split pins 438, 440 to radially contract. Once sufficiently compressed, the split pins 438, 440 pass through the openings 548 and into the narrow regions 546. Similar to the embodiment shown in Fig. 28, the rotatable member 500 interacts with the retention member 442 to provide forces in addition to those from compression and expansion of the split pins 438, 440.

In that regard, when the rotatable member 500 is in one closed position (not shown), the segment 520 is generally aligned with the longitudinal axis of the retention member 442. As the rotatable member 500 is rotated and in conjunction with the relative movement between the slots 530, 532 and the split pins 438, 440, the slot 512 rotates so that the corner 526 rotates into contact with the retention member 442. Rotation therefore also causes the corner 526 to elastically compress (not shown) the retention member 442 due to the increase in radial distance from the axis 81 at the corner 526 relative to the radial distance of the segment 520. Thus, in addition to the force necessary to radially compress the split pins 438, 440, the clinician must apply a force sufficient to elastically compress the retention member 442 with the corner 526.

As the clinician continues to rotate the rotatable member 500, the rotatable member 500 will reach a threshold position (not shown) at which the retention member 442 begins to elastically expand as the segment 524 approaches general alignment with the longitudinal axis of the retention member 442. As is described above with reference to the embodiment described in Fig. 27, elastic expansion of the retention member 442 may aid the clinician in the rotation of the rotatable member 500.

Once the rotatable member 500 is in the opened position (as shown in Fig. 33), the split pins 438, 440 bear against the side wall 536 thereof such that a threshold sliding force, which may be less than, and perhaps significantly less than the opening force, must be imposed to overcome the drag and to rotate the rotatable member 500. Thus, once opened, the rotatable member 500 does not freely slide or move to the fully opened position, but must be purposefully moved toward the opened position.

Furthermore, in the opened position, the segment 524 is generally aligned with the longitudinal axis of the retention member 442. When so disposed, the corners 526, 528 provide an additional level of resistance to any movement of the rotatable member 500 away from the opened position. In other words, the corners 526, 528 are positioned to interfere with the retention member 442. Accordingly, the retention member 442 in conjunction with the corners 526, 528, resists rotation of the rotatable member 500 in the clockwise and/or counterclockwise directions. In this way, the retention member 442 and the slot 512 may provide a positive stop in at least the opened position.

The clinician may continue to rotate the rotatable member 500 in a counterclockwise manner from the opened position toward a second closed position. As the rotatable member 500 is moved further toward the second closed position, the corner 528 rotates into contact with and compresses the retention member 442. Once the corner 528 rotates slightly past its maximum compression of the retention member 442, the retention member 442 begins releasing the built-up elastic energy, which may noticeably aid the clinician in the rotation of the rotatable member 500 toward the second closed position.

With further rotation of the rotatable member 500 toward the second closed position, the split pins 438, 440 partially enter the enlarged portion 544 at the second end 540 of the respective slot 530, 532. At some threshold amount, the split pins 438, 440 may spontaneously release their stored elastic energy and expand into the respective enlarged portion 544. This rapid expansion may cause a noticeable spontaneous rotation of the rotatable member 500 into the second closed position.

As with the first closed position, when the split pins 438, 440 are disposed in the enlarged portion 544, an interference fit is formed by the openings 548 and so provides a threshold level of resistance to any movement of the rotatable member 500 away from the second closed position and toward the opened position. Only after a sufficiently large force is applied to the rotatable member 500 in, for example, the clockwise direction, will the split pins 438, 440 elastically compress to squeeze into the narrow regions 546. Such a configuration may further prevent or reduce the likelihood of inadvertently opening or closing the rotatable member 500 during treatment, such as when changing the archwires.

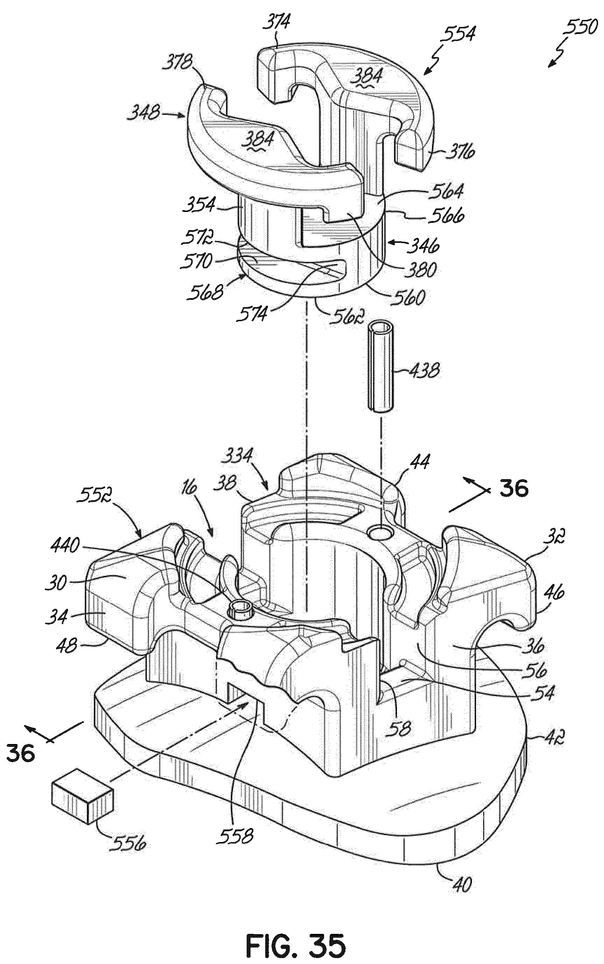

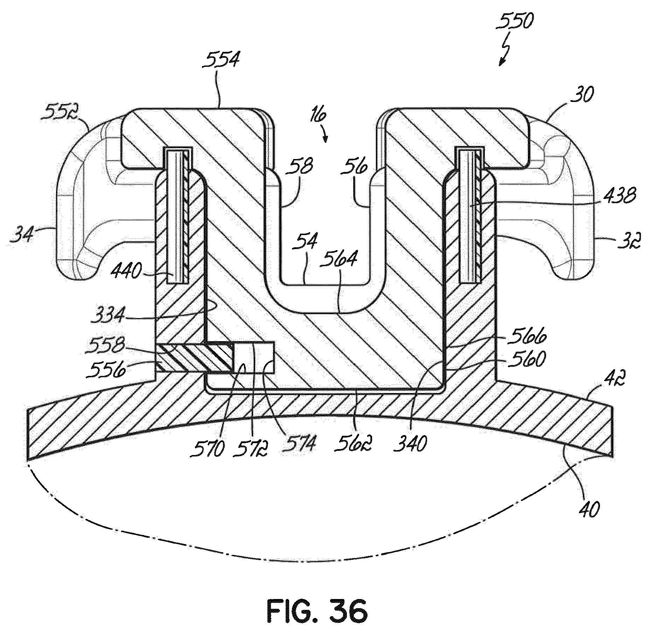

In one embodiment, and with reference to Figs. 35 and 36, in which like reference numerals refer to like elements throughout the figures, an orthodontic bracket 550 includes a bracket body 552 that is similar to the bracket body 432, described above, and a rotatable member 554 that is similar to rotatable member 434, described above. The orthodontic bracket 550 further includes a retention member 556 in the form of a block for coupling the rotatable member 554 to the bracket body 552.

While differing in structural configuration, the retention member 556 has similar functions. That is, for example, to not only movably secure the rotatable member 554 relative to the bracket body 552, but to counteract forces acting in the labial direction that tend to pull an archwire labially out of the archwire slot 16. While the embodiments of the present invention are not limited thereto, by way of example only, the retention member 556 is in the form of a block or cube that couples the rotatable member 554 to the bracket body 552.

As shown in Figs. 35 and 36, in one embodiment, the bracket body 552 includes a cutout 558 that receives a portion of a retention member 556 for securing the rotatable member 554 to the bracket body 552. The cutout 558 is open to at least one of the occlusal and gingival sides 32, 34 and extends substantially perpendicular to the archwire slot 16 (e.g., in the occlusal-gingival direction). For example, in one embodiment, the cutout 558 may be open to only one of the occlusal or gingival sides 32, 34 of the bracket body 552 and be closed off opposite the open side. In an exemplary embodiment, the cutout 558 penetrates the bracket body 552 so as to be generally positioned lingually of the archwire slot 16. Although not shown, the cutout 558 may extend in a mesial-distal direction and be open to at least one of the mesial and distal sides 36, 38.

In one embodiment and as shown in Fig. 36, the cutout 558 opens to the cylindrical bore 334. More particularly, in an exemplary embodiment, since the cutout 558 is generally positioned lingually of the archwire slot 16 and labially of the pad 42, the cutout 558 may intersect with the third bore portion 340 of the cylindrical bore 334.

As is shown in Figs. 35 and 36, the generally cylindrical retaining portion 346 of the rotatable member 554 includes a cylindrical base 560 similar to the cylindrical base 504, described above. The cylindrical base 560 is disc-shaped and includes a lower surface 562, an upper surface 564, and a side wall 566 extending therebetween. Although the lower surface 562 is shown as being planar, it may be non-planar. The cylindrical base 560 further includes a slot 568 in the side wall 566. The slot 568 includes a lower surface 570, an upper surface 572, and a side wall 574.

With further reference to Fig. 36, in one embodiment, when the rotatable member 554 is inserted into the cylindrical bore 334, the slot 568 may align with the cutout 558. In particular, the surfaces 570, 572, 574 of the slot 568 may be substantially flush with the corresponding surfaces defining the cutout 558. When the retention member 556 is inserted through the cutout 558, it is received in the slot 568 and may slidably engage each of the surfaces 570, 572 of the slot 568. In this manner, the retention member 556 retains the rotatable member 554 within the bracket body 552.

During treatment, when the rotatable member 554 is rotated between the opened and closed positions, the slot 568 in the cylindrical base 560 rotates relative to the retention member 556. The shape of the slot 568 is such that the rotatable member 554 may rotate within the cylindrical bore 334 between the opened and closed positions without interference between the slot 568 and the retention member 556.

Generally, the retention member 556 is oriented to restrain the rotatable member 554 when the archwire 18 pulls on it. For example, the retention member 556 is oriented perpendicular to a force transferred from the archwire 18 to the rotatable member 554. For labial applications of the orthodontic bracket 550, the retention member 556 may be oriented to counteract forces acting in the labial direction that tend to pull the archwire 18 labially out of the archwire slot 16. For example, where the archwire 18 pulls labially on the rotatable member 554 during orthodontic treatment, the retention member 556 may be oriented in an occlusal-gingival direction, as shown, or in a mesial-distal direction. More specifically, the retention member 556 is in a plane generally parallel to a plane of a base surface 54 of the archwire slot 16 and/or may be in a plane generally parallel with a tangent of the adjacent tooth surface. The retention member 556 transfers loads from the rotatable member 554 to the bracket body 552 and consequently to the tooth. Further in this regard, the retention member 556 is oriented perpendicular to the one or more pins 438, 440. As a result of the orientation of the retention member 556, the pins 438, 440 may bear little, if any, of the load from the archwire 18 by virtue of their perpendicular orientation which is generally aligned with a direction of load on the bracket body 552.

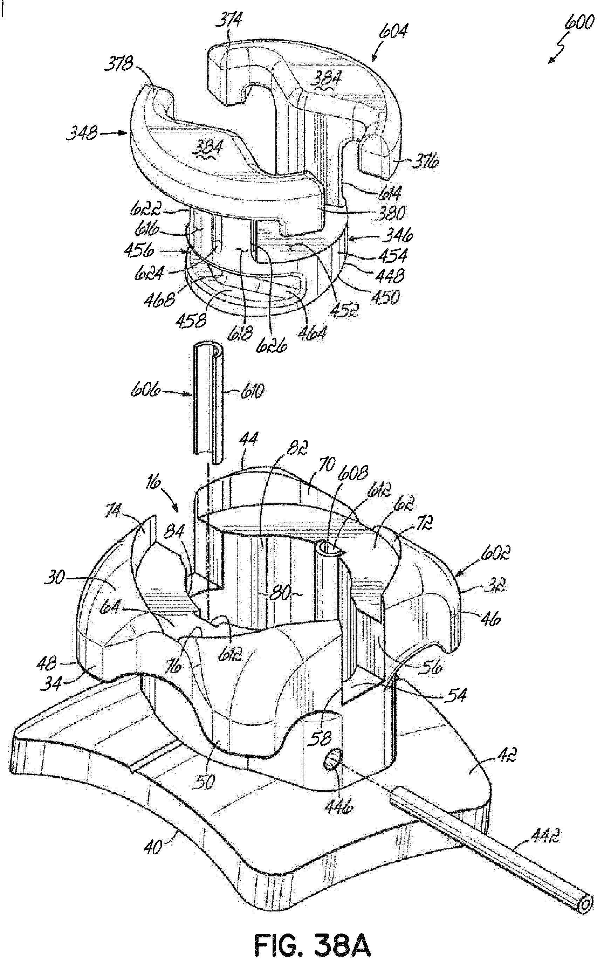

In an alternative embodiment, and with reference to Figs. 38A-40B, in which like reference numerals refer to like elements throughout the figures, an orthodontic bracket 600 includes a bracket body 602 that is similar to, for example, the bracket bodies 12, 432 described above, and a rotatable member 604 that is similar to, for example, the rotatable members 14, 434 described above. The rotatable member 604 is rotatable relative to the bracket body 602 from an opened position to one of two alternative closed positions. Advantageously, by virtue of the two closed positions, the orthodontic bracket 600 may provide both passive and active ligation on a given archwire as is described above with reference to, for example, the orthodontic bracket 10 shown in Figs. 1-14.

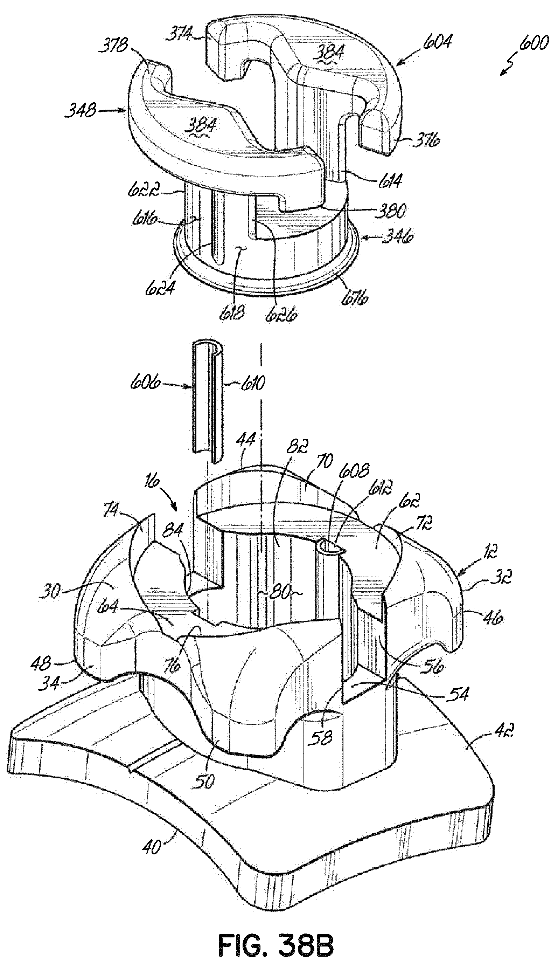

With reference to Figs. 38A and 38B, in addition, the orthodontic bracket 600 includes a locking mechanism 606 that is similar to the locking mechanism 436, described above, but differs in structural configuration. In accordance with one aspect of the invention, the locking mechanism 606 has multi-functional capabilities in regard to the rotatable member 604. The locking mechanism 606 not only movably secures the rotatable member 604 in each of the closed positions and, optionally, in an opened position, but provides an audible and/or tactile sensation as an indication that the rotatable member 604 is in one of the opened or closed positions. The clinician may then associate the indication with one of the closed positions and optionally the opened position of the rotatable member 604.

To those and other ends, in the exemplary embodiment shown, the locking mechanism 606 may be in the form of one or more half pins 608, 610 that slidably engage the rotatable member 604 in one or more of the opened and/or closed positions. To this end, each of the half pins 608, 610 may be generally radially flexed or elastically deformed relative to its central axis. At least a portion of each of the pins 608, 610 has a first effective diameter or radius of curvature (such as in an unbiased state) but is capable of being flexed, such as by deforming the pins 608, 610, so as to have a second effective diameter or radius of curvature that is smaller than the first effective diameter or radius of curvature. Thus, pins 608, 610 are capable of elastically deforming depending on the forces being imposed thereon. By way of example, the pins 608, 610 may each be a NiTi tube that is laser cut in half.

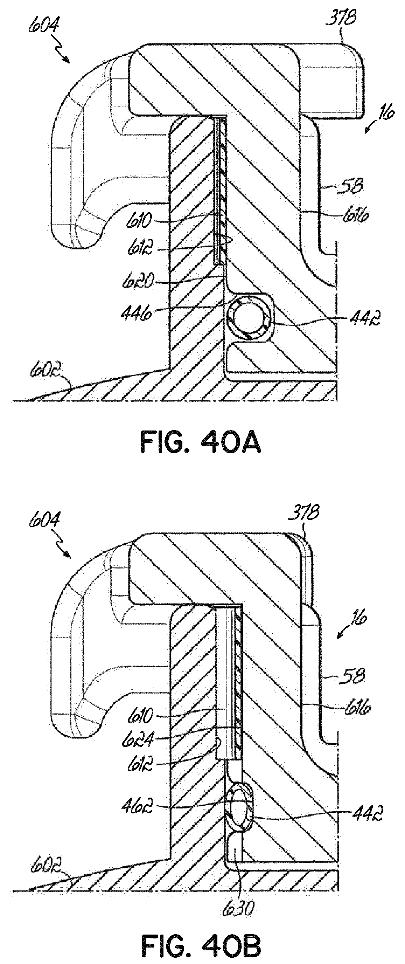

With reference to Figs. 38A and 40B, in an exemplary embodiment, the bracket body 602 includes one or more apertures 612. Each aperture 612 may have a channel-like configuration and may extend into the bracket body 602 from a corresponding planar support surface 62, 64 into the respective bore portion 82, 84 (e.g., lingually into the bracket body 602). By way of example, the aperture 612 may extend about 75% or about 85% of the depth of the bore 80 though the aperture 612 may extend the full depth of the bore 80. The pins 608, 610 may reside within a corresponding one of the apertures 612. The apertures 612 are sized to secure the respective pin 608, 610 to the bracket body 602 via laser welding or staking, or by other means known in the art. At least a portion of the pins 608, 610 extend beyond the corresponding bore portion 82, 84 and contact the rotatable member 604 during orthodontic treatment. Although not shown, one or both of the pins 608, 610 may be full round tubes or split tubes. In that case, the apertures 612 would be more deeply recessed than those shown in Figs. 38A and 38B so that a circumferential portion of the full tube or the split tube projects into the bore 80.

The extent to which the pins 608, 610 extend beyond the corresponding bore portion 82, 84 may depend upon the dimension of the pins 608, 610, the relative depth of the aperture 612, and the dimension of the rotatable member 604, as is described below, as each of these may change the force required to rotate the rotatable member 604, as well as the magnitude of the tactile and/or audible click associated with rotation of the rotatable member 604. As is described below, the pins 608, 610 may radially deflect or bend along their respective axis into the respective aperture 612 during rotation of the rotatable member 604.

In one embodiment, in which the pad 42 is a separate element that is secured to the bracket body 602, the pins 608, 610 may be inserted into the apertures 612 from the lingual side 40 of the bracket body 602 prior to attaching the pad 42 to the bracket body 602. Advantageously, the pins 608, 610 may therefore be captured in place once the pad 42 is attached. The rotatable member 604 may be inserted into the bracket body 602 from the labial side 30. This initially collapses the pins 608, 610. When fully inserted, the pins 608, 610 regain their initial shape. As shown in Fig. 38B, a slight lip or ledge 676 may slidably contact the pins 608, 610 to retain the rotatable member 604 in the bracket body 602.

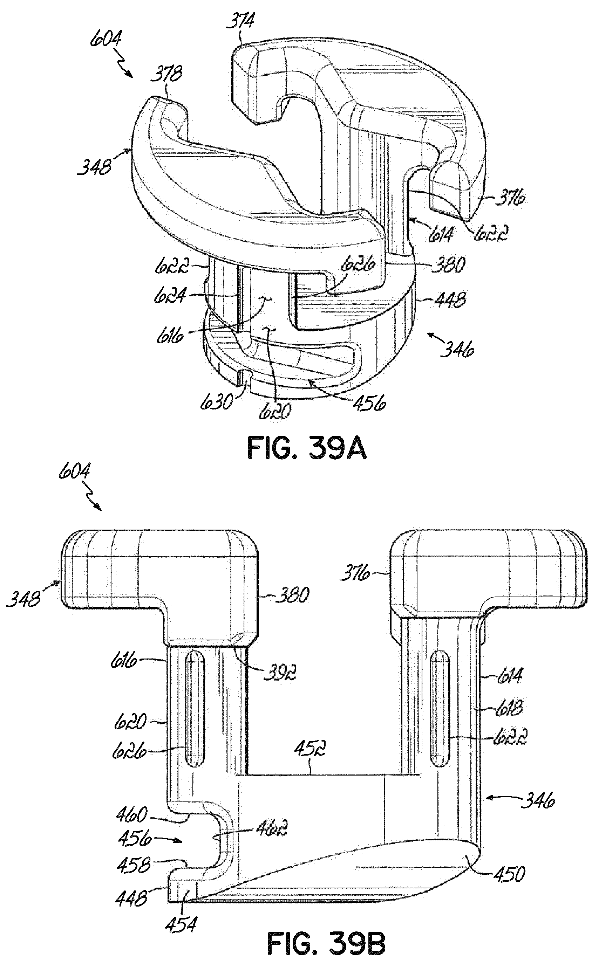

With reference to Figs. 38A, 39A, and 39B, the rotatable member 604 includes a pair of spaced-apart columns or studs 614, 616 extending from the generally cylindrical base 448. The studs 614, 616 include outwardly-facing side walls 618, 620, (shown best in Fig. 39B) respectively, in which a plurality of spaced-apart grooves 622, 624, 626 are formed. The grooves 622, 624, 626 interrupt the otherwise smooth surface of the walls 618, 620 and result in a non-planar configuration. The grooves 622, 624, 626 cooperate with the pins 608, 610 to form positive stops in the rotation of the rotatable member 604. To that end, the grooves 622, 624, 626 may have a pocket-like configuration or other depression-like configuration that receives a portion of at least one of the pins 608, 610 during rotation of the rotatable member 604.

In one embodiment, the grooves 622, 624, 626 are semi-circular discontinuities that may be about the same size or slightly larger in curvature than the curvature of the pins 608, 610. The grooves 622, 624, 626 receive a portion of one of the pins 608, 610 during rotation of the rotatable member 604 thereby forming a positive stop in the rotation of the rotatable member 604. The positive stops may coincide with each of the closed positions, and optionally the opened position as is described below. By way of example only, the pin 608 may cooperate with the groove 624 when the rotatable member 604 is in the opened position, may cooperate with the groove 622 when the rotatable member 604 is in one closed position, and may cooperate with the groove 626 when the rotatable member is in another closed position. Although not shown, a similar relationship may exist between the grooves 622, 624, 626 and the pin 608.

In one embodiment and with reference to Fig. 39A, at least one of the grooves 622, 624, 626 may extend to the lower surface 450 of the rotatable member 604. For example, the groove 624 may extend to the lower surface 450 at groove 630. During assembly, the rotatable member 604 may be inserted into the bracket body 602 with the extended grooves 624 and 630 aligned with the pin 610. The retention member 442 may then be inserted into the passageway 446. Thus, the extended groove 624 may facilitate assembly of the orthodontic bracket 600.

During treatment, and with reference to Figs. 40A and 40B, the pins 608, 610 elastically flex during the rotation of the rotatable member 604. For example, when the rotatable member 604 is in the opened position as is shown in Fig. 40B, the pin 610 cooperates with the groove 624. This configuration produces an interference fit between the pin 610 and the rotatable member 604 and inhibits inadvertent rotation of the rotatable member 604 from the opened position. Application of sufficient torque on the rotatable member 604 may elastically deform the pin 610 as the side wall 618 is forced to rotate past the pin 610.

In addition, with reference to Fig. 40B, in conditions in which the rotatable member 604 is out of position, as the pin 610 initially enters the groove 624, the pin 610 may expand to release its elastic energy. The pin 610 may therefore rapidly expand into the groove 624 and may consequently produce an audible click or snap that may be heard, as well as a vibration that may be felt by the clinician. Although not shown, the same relative movement may occur between the pin 608, the side wall 618, and the corresponding grooves 622, 624, 626 of the stud 614.

With reference to Fig. 40A, the pin 610 is compressed against the outwardly-facing side wall 620 of the rotatable member 604. Because the pin 610 bears against the side wall 620, the rotatable member 604 may not freely rotate. A minimum threshold force may be required to overcome any frictional forces associated with the contact between the pin 610 and the side wall 620. Accordingly, at orientations of the rotatable member 604 between the opened and closed positions, the rotatable member 604 may not freely rotate.

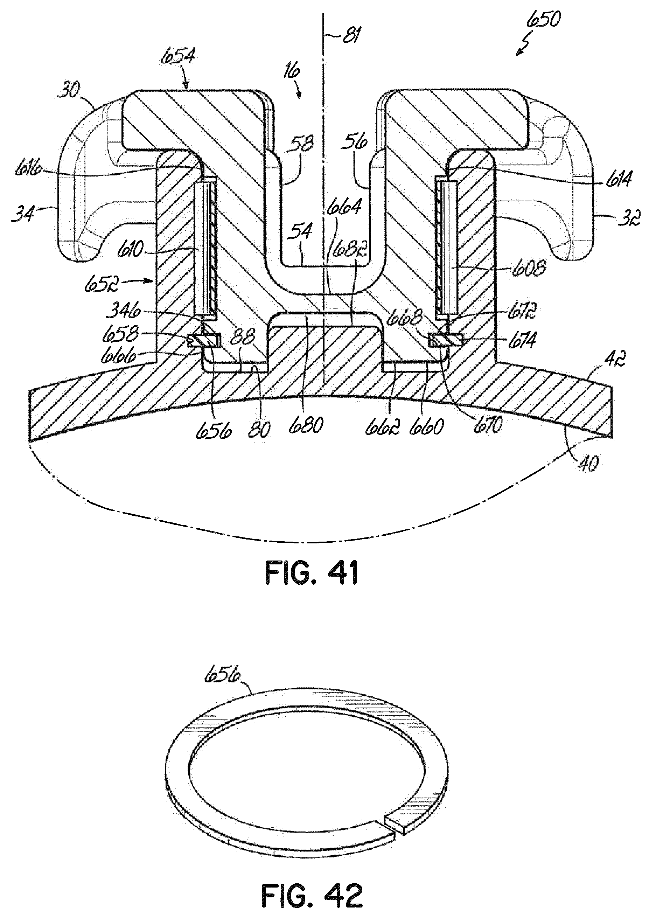

In one embodiment, and with reference to Figs. 41 and 42, in which like reference numerals refer to like elements throughout the figures, an orthodontic bracket 650 includes a bracket body 652 similar to the bracket body 602, described above, and a rotatable member 654 similar to the rotatable member 604, described above. Further, the orthodontic bracket 650 includes a retention member 656 for coupling the rotatable member 654 to the bracket body 652 that is similar to the retention member 442, described above, but differs in structural configuration. The retention member 656 rotatably secures the rotatable member 654 relative to the bracket body 652 and counteracts forces acting in the labial direction that tend to pull the archwire 18 labially out of the archwire slot 16. While the embodiments of the present invention are not limited thereto, by way of example only and with reference to Fig. 42, the retention member 656 is in the form of a split ring that couples the rotatable member 654 to the bracket body 652. In one exemplary embodiment, the ring 656 may slidably engage the rotatable member 654 during rotation thereof.

As is shown in Fig. 41, the bracket body 652 includes a channel 658 that receives the retention member 656. The channel 658 extends into the bracket body 652 from the bore 80 in a direction away from the axis 81. In an exemplary embodiment, the channel 658 is positioned between the archwire slot 16 and the pad 42.

In addition, the cylindrical retaining portion 346 of the rotatable member 654 includes a generally cylindrical base 660 having a lower surface 662, an upper surface 664, and a side wall 666 extending therebetween. Although the lower surface 662 is shown as being planar, it may be generally non-planar. The cylindrical base 660 further includes a generally circular slot 668 in the side wall 666. The slot 668 includes a lower surface 670, an upper surface 672, and a side wall 674.

With further reference to Fig. 41, in one embodiment, the slot 668 may align with the channel 658 when the rotatable member 654 is inserted into the bracket body 652. The retention member 656 cooperates with each of the slot 668 and the channel 658. In this manner, the retention member 656 retains the rotatable member 654 within the bracket body 652. The split ring may ease assembly of the orthodontic bracket 650 as the split ring may be compressed onto the rotatable member 654 and then that assembly may be inserted into the bracket body 652. The split ring may then expand upon alignment with the channel 658 and thus secure the rotatable member 654 in the bracket body 652. In addition or alternatively to the split ring, the rotatable member 654 may include a recess 680 that receives a rail 682 that projects from the bottom surface 88 of the bore 80. The rail 682 provides an internal guide about which the rotatable member 654 may rotate. Advantageously, the rail 682 may improve stability of the rotatable member 654 during orthodontic treatment.

In operation, when the rotatable member 654 is rotated between the opened and closed positions, the slot 668 in the cylindrical base 660 rotates relative to the retention member 656. The rotatable member 654 may rotate within the cylindrical bore 80 between the opened and closed positions without interference between the slot 668 and a portion of the retention member 656.

With continued reference to Fig. 41, the retention member 656 is oriented to restrain the rotatable member 654 against labial-lingual movement and may transfer loads from the rotatable member 654 to the bracket body 652 and consequently to the tooth. For example, the retention member 656 is oriented perpendicular to a force transferred from the archwire 18 to the rotatable member 654. For labial applications of the orthodontic bracket 650, the retention member 656 may be oriented to counteract forces acting in the labial direction that tend to pull the archwire 18 labially out of the archwire slot 16. In this case, the retention member 656 may be oriented in a plane generally parallel to a plane of a base surface 54 of the archwire slot 16 and/or may be in a plane generally parallel with a tangent of the adjacent tooth surface. Further in this regard, the retention member 656 is oriented perpendicular to the one or more pins 608, 610. As a result of the orientation of the retention member 656, the one or more pins 608, 610 may bear little, if any, of the load from the archwire 18.

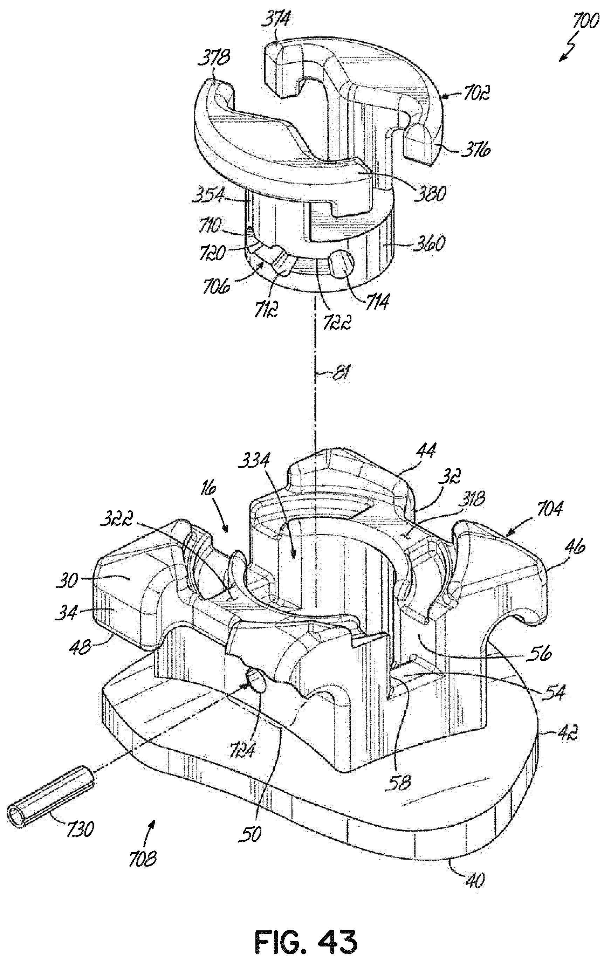

In one embodiment, and with reference now to Fig. 43 in which like reference numbers refer to like features throughout the figures, an orthodontic bracket 700 includes a rotatable member 702 and a bracket body 704. Only some of the differences between the rotatable member 702 and the bracket body 704 from other rotatable members and bracket bodies described above are described herein.

In particular, the orthodontic bracket 700 includes a locking mechanism 708 that differs from previous locking mechanisms. The locking mechanism 708 includes a slot 706 in the side wall 360 of the rotatable member 702. The slot 706 may have a configuration and function similar to the slots 470, 472 shown in Fig. 29 and described above. In that regard, the slot 706 is non-planar in the sense that the slot 706 includes three enlarged portions 710, 712, 714 that are separated by one of a corresponding narrow region 720 and 722.

In the bracket body 704, and in accordance with one embodiment of the locking mechanism 708, there is a passage 724 in one of the occlusal side 32 or the gingival side 34 (as shown). Although not shown, the passage 724 opens to the cylindrical bore 334 and receives a split pin 730 similar to split pins described above. The split pin 730 cooperates with the slot 706 in a similar manner as the split pins 438 and 440 interact with the slots 470, 472 as described above with reference to Figs. 27-32B and serves a dual function of providing multiple positive stops as well as a perceptible indication of the position of the locking mechanism 708.

In particular, each of the enlarged portions 710, 712, 714 corresponds to one of a first closed position, an opened position, and a second closed position of the rotatable member 702. These positions are described above. One closed position may actively ligate an archwire in the archwire slot 16 and another closed position may passively ligate an archwire in the archwire slot 16.

During orthodontic treatment, a clinician may rotate the rotatable member 702 relative to the pin 730 to each of the closed positions and the opened position. The pin 730 and the slot 706 provide positive stops for the rotatable member 702 at each of the opened and closed positions. Each stop is defined by the pin 730 residing in a selected one of the enlarged portions 710, 712, 714.

When the pin 730 resides in one of the enlarged portions 710, 712, 714, rotation of the rotatable member 702 requires an initial threshold force or torque sufficient to elastically deform the pin 730 such that the pin 730 may enter an adjacent narrow region 720 or 722. Absent application of the initial threshold force, which may be significantly higher than any force observed during normal mastication, the rotatable member 702 does not rotate. Once the clinician overcomes the initial threshold force, the pin 730 enters the narrow region 720 or 722. In the narrow regions 720, 722, the clinician may need to continue to apply a rotational force to rotate the rotatable member 702, though these rotational forces may be less than the initial threshold force. Each of the initial threshold and subsequent rotational forces are described in detail in the preceding paragraphs.

By continued rotation of the rotatable member 702, the pin 730 may enter an adjacent enlarged portion 710, 712, 714. As the pin 730 enters the enlarged portion 710, 712, 714, the split pin 730 may expand from an elastically compressed state. As the split pin 730 expands, the pin 730 in combination with the enlarged portion 710, 712, 714 may emit an audible click or other sound as well as a slight vibration that may be perceptible to the clinician. In this way, the clinician may be aware, even in the absence of visual inspection, of the location of the rotatable member 702 relative to the bracket body 704. The clinician may rotate the rotatable member 702 to one of an opened position or two closed positions as desired to either remove and/or insert an archwire into the archwire slot 16 or to change between active and passive ligation. At each positive stop, the locking mechanism 708 may emit in audible click so that the clinician may track the location of the rotatable member 702.

In addition, in the embodiment shown in Fig. 43, the pin 730 also retains the rotatable member 702 in the cylindrical bore 334 of the bracket body 704 against forces on the rotatable member 702 tending to pull the rotatable member 702 out of the cylindrical bore 334. Advantageously, no other pins or retention members, such as the retention member 312 shown in Fig. 16, are required to provide both the positive stops as well as retain the rotatable member 702 in the bracket body 704. Thus, in one embodiment, the locking mechanism 708 includes a single pin oriented in a plane substantially parallel to the archwire slot 16 and/or the tooth surface. Although not shown, a second pin may be inserted into a second passage on the opposing, gingival side 34 to interact with another slot on the side wall 360 of the rotatable member 702. In that case, the locking mechanism 708 may include two pins (one pin per side) to provide positive stops as well as retain the rotatable member 702 in the bracket body 704. Although not shown, other similar configurations may include placement of the slot 706 on the stud 354 (not on the side wall 360) in which case the passageway 724 may be disposed closer to the labial side 30 of the bracket body 704.

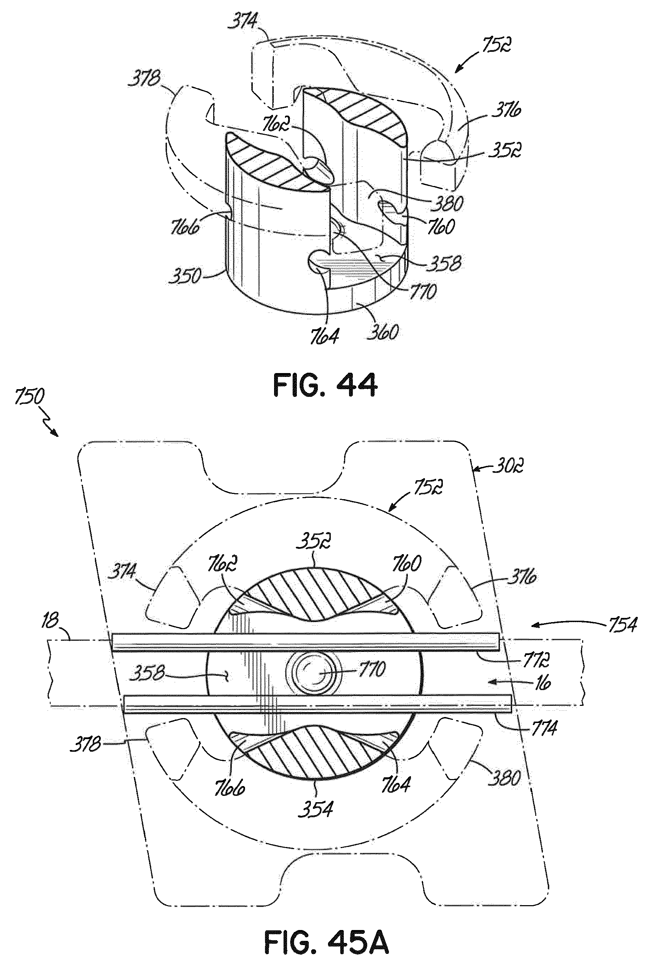

In one embodiment, and with reference now to Figs. 44-45B in which like reference numbers refer to like features throughout the figures, an orthodontic bracket 750, which differs from orthodontic brackets described above. Only some of the differences between the orthodontic bracket 750 and the orthodontic brackets above are described below.

The orthodontic bracket 750 may include a locking mechanism 754 that differs from locking mechanisms described above while providing a similar function. That is, the locking mechanism 754 may provide positive stops when the rotatable member 752 is in the closed positions while also providing the clinician with an audible or tactile signal indicating the position of the rotatable member 752 in the absence of a visual inspection.

To these and other ends, the locking mechanism includes a rotatable member 752 having C-shaped insets 760, 762, 764, 766 that may be molded into the respective studs 352, 354. The insets 760, 762, 764, 766 generally face inwardly toward one another and are configured to cooperate with retention members described below. The locking mechanism 754 further includes a button-like protrusion 770 that generally projects from the upper surface 358 of the base 350. The button-like protrusion 770 also cooperates with the retention members described below.

In that regard, and with reference to Fig. 45A, the locking mechanism 754 includes a pair of retention members 772, 774 that generally extend in a mesial-distal direction across the bracket body 302 and are in a position to cooperate with the C-shaped insets 760, 762, 764, 766 during rotation of the rotatable member 752. In one embodiment, the pair of retention members 772, 774 may be split NiTi tubes as is generally described above. The retention members 772, 774 are parallel with the archwire slot 16 and, although not shown, the retention members 772, 774 may be positioned lingually of the archwire slot 16 (i.e., between the archwire slot 16 and the tooth surface) though the retention members 772, 774 may be offset occlusally and gingivally from the archwire slot 16. Advantageously, as described above, offsetting the retention members 772, 774 may reduce the profile of the orthodontic bracket 750 relative to orthodontic brackets having retention members directly between the archwire slot and the tooth. Each of the retention members 772, 774 lies in the same plane as the C-shaped insets 760, 762, 764, 766. The locking mechanism 754 provides positive stops by interaction of the retention members 772, 774 with the C-shaped insets 760, 762, 764, 766 and/or the button-like protrusion 770 during rotation of the rotatable member 752. The orthodontic bracket 750 may only require four parts and so may be advantageous as it utilizes fewer parts for assembly.

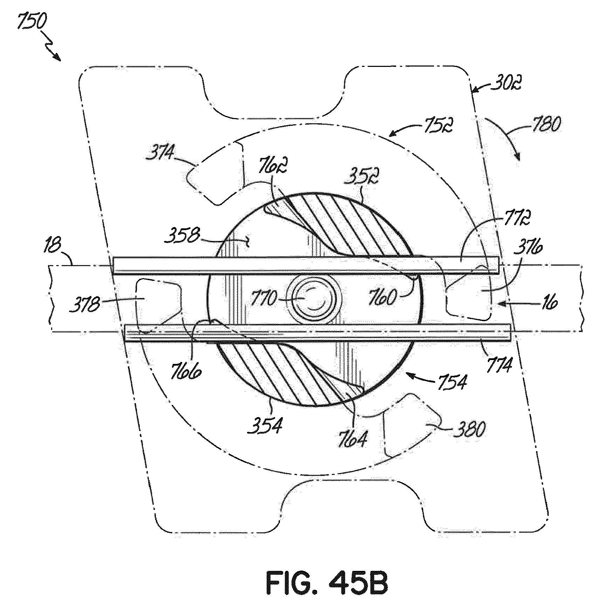

In one embodiment, and with reference now to Figs. 45A and 45B, during orthodontic treatment, the clinician may insert an archwire 18 into the archwire slot 16 in between the retention arms 374, 376, 378, 380 as can be appreciated by the orientation of the rotatable member 752 shown in Fig. 45A. In the orientation shown, the rotatable member 752 is in the opened position in which the retention members 772, 774 may cooperate with the button-like protrusion 770 to maintain the rotatable member 752 in the opened position.

Once the archwire 18 is inserted into the archwire slot 16, the clinician may rotate the rotatable member 752 in a clockwise direction (as is indicated by the arrow 780 in Fig. 45B). During rotation, the opposing C-shaped insets 760, 766 engage respective retention members 772, 774. The clinician may provide a threshold rotation force by which C-shaped insets 760, 766 forcibly engage the retention members 772, 774. At some threshold of force, the C-shaped insets 760, 766 and/or the retention members 772, 774 elastically deform in a manner in which the retention members 772, 774 enter the C-shaped insets 760, 766. When the retention members 772, 774 engage the C-shaped insets 760, 766, the locking mechanism 754 may produce an audible or tactile response indicating that the rotatable member 752 is in one closed position with retention arms 376, 378 closing off the archwire slot 16.

Although not shown, reversing the rotation of the rotatable member 752 will cause engagement of the C-shaped insets 762, 764 with the corresponding retention members 772, 774 in much the same manner as that shown in Fig. 45B. Thus, with sufficient force in a counterclockwise rotation of the rotatable member 752, the locking mechanism 754 may produce a positive stop and a corresponding discernible indication that the rotatable member 752 is in the closed position with the opposing retention arms 374, 380 over the archwire slot 16. In this manner, the clinician may rotate the rotatable member 752 in the clockwise and the counterclockwise directions between the closed positions and the opened position. The locking mechanism 754 may provide a positive stop in each of the closed positions as well as an audible or tactile indication that the rotatable member 752 is in one of those positions.

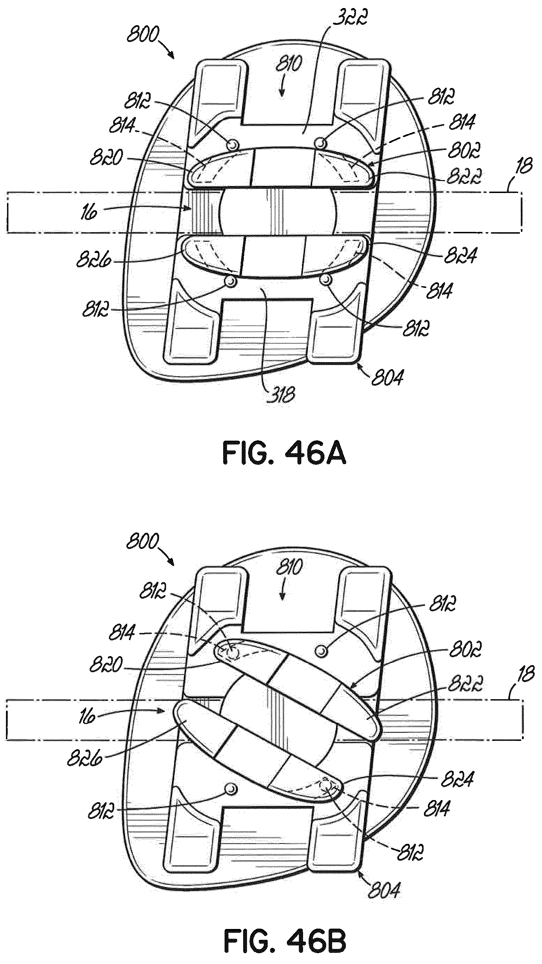

In one embodiment, and with reference now to Figs. 46A-47 in which like reference numbers refer to like features throughout the figures, an orthodontic bracket 800 includes a rotatable member 802 and a bracket body 804. Only some of the differences between the rotatable member 802 and the bracket body 804 from other rotatable members and bracket bodies described above are described herein.

The orthodontic bracket 800 may include a locking mechanism 810 that differs from locking mechanisms described above while providing a similar function. That is, the locking mechanism 810 may provide positive stops when the rotatable member 802 is in the closed positions while also providing the clinician with an audible or tactile signal indicating the position of the rotatable member 802 in the absence of a visual inspection.

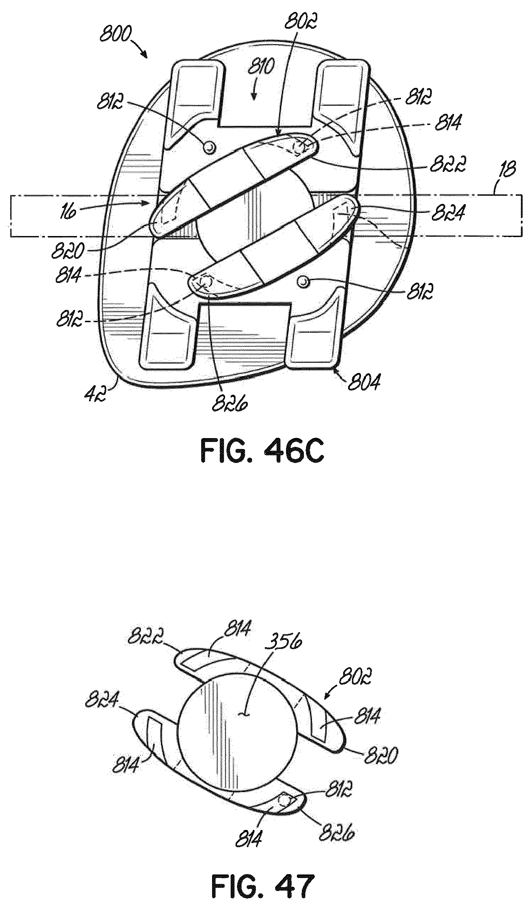

In particular, in one embodiment, the locking mechanism 810 includes raised bumps 812 on the planar support surfaces 318, 322 of the bracket body 804 that interact with the rotatable member 802 to provide positive stops in one or more of the opened and closed positions of the rotatable member 802. As shown in Figs. 46A-46C, the rotatable member 802 has an opened position (Fig. 46A) and two closed positions (Figs. 46B and 46C) similar to those described above. The raised bumps 812 may provide a positive stop for each of the closed positions and may also define an opened position of the rotatable member 802 by interacting with a plurality of slots 814. While similar to the orthodontic brackets described above, the rotatable member 802 may include four retention arms 820, 822, 824, and 826.

Although not shown, in one embodiment, the raised bumps 812 may interact with pairs of retention arms 820, 824 or 822, 826 to hold the rotatable member 802 in each of the opened and closed positions. In this regard, the raised bumps 812 may produce an interference fit with the rotatable member 802. During rotation of the rotatable member 802, the clinician may force one pair of the retention arms 820, 824 or 822, 826 over the raised bumps 812 into one closed position. Once forced past the raised bumps 812, the raised bumps 812 interfere with the rotatable member 802 in the reverse direction and thus provide a positive stop of the rotatable member 802 in the closed positions.

Alternatively, as shown in Figs. 46A-47, in one embodiment the locking mechanism 810 includes a slot 814 in each of the retention arms 820, 822, 824, and 826 (best shown in Fig. 47). The slots 814 on opposing pairs of retention arms 820, 824 and 822, 826 are positioned to receive the bumps 812 in each of the closed positions as is shown in Figs. 46B and 46C. The slots 814 may be notches under each of the retention arms 820, 822, 824, and 826. Alternatively the raised bumps may be a split tube similar to those described above or may include a split tube with a center relief. The bumps or split tubes may cooperate with a relief area on each of the retention arms 820, 822, 824, and 826.

While the present invention has been illustrated by a description of various embodiments and while these embodiments have been described in some detail, additional advantages and modifications will readily appear to those of ordinary skill in the art. The various features of the invention may be used alone or in any combination depending on the needs and preferences of the user.

## Claims

1. An orthodontic bracket for coupling an archwire with a tooth, comprising:
a bracket body that includes an archwire slot;
a rotatable member that is rotatable relative the archwire slot between an opened position and at least one closed position; and
a locking mechanism that provides at least one positive stop in the rotation of the rotatable member and that is configured to produce an indication that the rotatable member is in the at least one closed position as the rotatable member is rotated to the opened position and/or the at least one closed position.

2. The orthodontic bracket of claim 1, wherein the locking mechanism includes at least one pin that slidably contacts the rotatable member during rotation of the rotatable member.

3. The orthodontic bracket of claim 2, wherein the at least one pin is a slotted pin.

4. The orthodontic bracket of claim 2 or 3, wherein the locking mechanism further includes at least one non-planar surface on the rotatable member and the pin slidably cooperates with the non-planar surface during rotation of the rotatable member.

5. The orthodontic bracket of claim 4, wherein the non-planar surface includes at least one pocket and the pin rests in the at least one pocket at the at least one positive stop.

6. The orthodontic bracket of claim 4 or 5, wherein the non-planar surface includes a slot with at least two enlarged portions separated by a narrow region and the pin is a slotted pin and rests in one of the enlarged portions at the at least one positive stop.

7. The orthodontic bracket of any of claims 2-6, wherein the pin is elastically deformed when the rotatable member is between the opened position and the at least one closed position.

8. The orthodontic bracket of any of claims 2-7, wherein the rotatable member is rotatable about an axis and the pin has a longitudinal axis that is substantially parallel to the axis of the rotatable member.

9. The orthodontic bracket of any of claims 2-8, wherein the pin extends labially of the archwire slot when the bracket body is secured to the labial surface of a tooth.

10. The orthodontic bracket of any of claims 2-9, further including:
a retention member that secures the rotatable member to the bracket body.

11. The orthodontic bracket of claim 10, wherein the locking mechanism is separate from the retention member.

12. The orthodontic bracket of either claim 10 or claim 11, wherein the pin has a longitudinal axis and the retention member has a longitudinal axis, and the longitudinal axis of the pin is oriented generally perpendicular to the longitudinal axis of the retention member.

13. The orthodontic bracket of any preceding claim, wherein the locking mechanism produces an audible click as the rotatable member is rotated to the at least one closed position.

14. The orthodontic bracket of any preceding claim, wherein the positive stop is associated with the at least one closed position.

15. The orthodontic bracket of any preceding claim, wherein the locking mechanism includes at least two pins and at least two pockets in the rotatable member, wherein when one pin cooperates with one pocket at one positive stop, a second pin is elastically deformed and is not associated with a second pocket.
